(19) Europäisches Patentamt
European Patent Office
Office européen des brevets

(11) **EP 4 079 452 B1**

(12) **EUROPÄISCHE PATENTSCHRIFT**

(45) Veröffentlichungstag und Bekanntmachung des Hinweises auf die Patenterteilung:
**30.07.2025  Patentblatt 2025/31**

(21) Anmeldenummer: **22160811.0**

(22) Anmeldetag: **10.08.2017**

(51) Internationale Patentklassifikation (IPC):
**B24B 45/00** *(2006.01)*  **B27B 5/32** *(2006.01)*

(52) Gemeinsame Patentklassifikation (CPC):
**B24B 45/006; B23D 45/16; B23Q 3/12; B24B 23/028; B27B 5/32;** B24B 23/022

(54) **WERKZEUGMASCHINE**

MACHINE TOOL

MACHINE-OUTIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **22.08.2016  DE 102016215691**
**31.01.2017  DE 102017201509**
**07.08.2017  DE 102017213668**

(43) Veröffentlichungstag der Anmeldung:
**26.10.2022  Patentblatt 2022/43**

(62) Dokumentnummer(n) der früheren Anmeldung(en) nach Art. 76 EPÜ:
**17751098.9 / 3 500 401**

(72) Erfinder:
• **Fellmann, Willi**
**4500 Solothurn / Schweiz (CH)**
• **Luescher, Bruno**
**4800 Zofingen (CH)**
• **Di Nicolantonio, Aldo**
**4513 Langendorf (CH)**
• **Zurbruegg, Andreas**
**4542 Luterbach (CH)**
• **Quebatte, Laurent**
**3930 Visp (CH)**
• **Schuller, Marcus**
**72135 Dettenhausen (DE)**
• **Sinzig, Bruno**
**4538 Oberbipp (CH)**

(73) Patentinhaber: **Robert Bosch GmbH**
**70442 Stuttgart (DE)**

(56) Entgegenhaltungen:
WO-A1-2015/014468    WO-A1-2015/014469
WO-A2-2013/131676

**EP 4 079 452 B1**

**Beschreibung**

Die Erfindung bezieht sich auf eine Werkzeugmaschine, insbesondere handgeführte Werkzeugmaschine, vorzugsweise Winkelschleifer, die eine um eine Abtriebsachse rotierend bewegbare Werkzeugaufnahmeeinrichtung aufweist, wobei diese Werkzeugaufnahmeeinrichtung dazu eingerichtet ist, eine Werkzeugeinrichtung, insbesondere ein Einsatzwerkzeug, derart an der Werkzeugmaschine zu halten, dass die Abtriebsachse und eine Werkzeugdrehachse im Wesentlichen zusammenfallen, wobei die Werkzeugaufnahmeeinrichtung wenigstens eine Mitnahmeeinrichtung und eine relativ zu der Mitnahmeeinrichtung bewegbare Klemmeinrichtung aufweist, wobei diese Mitnahmeeinrichtung zur Übertragung einer Antriebskraft auf die Werkzeugeinrichtung wenigstens einen im Abstand zu dieser Abtriebsachse angeordneten Drehmomentübertragungsbereich aufweist.

Stand der Technik

In der DE 10 2012 007 926 A1, die die Basis für den Oberbegriff von Anspruch 1 bildet, wird ein kraftgetriebenes Handwerkzeug mit einem Gehäuse mit einem Spindelkopf, mit einer um ihre Längsachse antreibbaren Werkzeugspindel und einer Spanneinrichtung, mit einem Befestigungselement offenbart. Die Werkzeugspindel weist ein werkzeugseitiges Ende mit einem Halteabschnitt für ein anzutreibendes Werkzeug auf. Die Spanneinrichtung weist eine Spannkonfiguration, in der das Werkzeug mittels des Befestigungselements an der Werkzeugspindel fixierbar ist, und eine Freigabekonfiguration, in der das Werkzeug lösbar ist, aufweist. Die die Spanneinrichtung ist mittels einer gleichgerichteten Stellbewegung zwischen der Spannkonfiguration und der Freigabekonfiguration umschaltbar ausgeführt.

Offenbarung der Erfindung

Der Erfindung liegt die Aufgabe zugrunde, mit einfachen konstruktiven Maßnahmen eine Handwerkzeugmaschine zu verbessern.

Die Aufgabe wird mit einer Werkzeugmaschine gemäss Anspruch 1 gelöst.

Die Erfindung wird nachfolgend vorwiegend am Beispiel einer insbesondere handgeführten Werkzeugmaschine beschrieben, die eine sich um eine Abtriebsachse rotatorisch bewegende Werkzeugaufnahmeeinrichtung aufweist. Diese Einschränkung der Darstellung ist aber nicht als Einschränkung der Anwendungsmöglichkeiten einer solchen Werkzeugmaschine zu verstehen. Statt des Begriffs "Werkzeugaufnahmeeinrichtung" wird im Folgenden - vereinfachend - auch der Begriff "Werkzeugaufnahme" verwendet. Auch dies soll aber nicht als Einschränkung zu verstehen sein.

Eine Werkzeugmaschine ist eine Einrichtung, die einen oder mehrere Antriebsmotoren und ggf. eine oder mehrere Getriebeeinrichtungen sowie wenigstens eine Abtriebswelle mit einer - im geometrischen Sinn zu verstehenden Abtriebsachse - aufweist. An der Abtriebswelle ist mittelbar oder unmittelbar die Werkzeugaufnahmeeinrichtung angeordnet. Die Werkzeugaufnahmeeinrichtung ist das Bauteil bzw. sind die Bauteile, mit dem bzw. denen das Drehmoment auf die Werkzeugeinrichtung aufgebracht wird, wobei die Werkzeugaufnahmeeinrichtung die Werkzeugeinrichtung vorzugsweise, insbesondere bei einer handgeführten Werkzeugmaschine auch festhält, so dass die Werkzeugeinrichtung allein durch die Werkzeugaufnahmeeinrichtung sowohl festgehalten als auch mit deren Abtriebsdrehmoment beaufschlagt wird. Der Begriff Abtriebsdrehmoment und die mit Abtrieb gebildeten Begriffe meinen das von der Werkzeugmaschine auf die Werkzeugeinrichtung übertragene Moment bzw. die entsprechenden Bauteile der Werkzeugmaschine, der Begriff Antriebsmoment bezeichnet das von der Werkzeugeinrichtung aufgenommene Moment. Die Werkzeugeinrichtung kann als Einsatzwerkzeug zur schleifenden, trennenden oder anderweitigen Bearbeitung eines zu bearbeitenden Werkstücks ausgebildet sein.

Eine handgeführte Werkzeugmaschine weist eine Trageeinrichtung, insbesondere Griffe und dergleichen auf, mit denen die Werkzeugmaschine mit dem daran befestigten Werkzeug von einer Bedienungskraft geführt und/oder gehalten werden kann. Typischerweise sind handgeführte Werkzeugmaschinen mit einem elektrischen Antriebsmotor versehen, es sind aber auch andere Bauarten, wie z. B. mittels eines Verbrennungsmotors, hydraulisch oder pneumatisch betriebene Werkzeugmaschinen bekannt und im Rahmen der Erfindung verwendbar.

Als Werkzeugmaschine eignet sich sowohl eine stationäre Werkzeugmaschine wie beispielsweise eine Tischkreissäge entsprechend den Anmeldungen DE 102010042016 oder US 2062969 A, als auch eine nicht-stationäre Werkzeugmaschine wie beispielsweise eine Handkreissäge entsprechend der Anmeldung DE 3740200 A1 oder wie beispielsweise ein Winkelschleifer entsprechend der Anmeldung DE102014210915 A1 oder wie beispielsweise ein rückentragbares Freischneidegerät entsprechend der Anmeldung DE 19616764 A1. Alternativ eignet sich auch eine handgeführte Motorsäge. Die nicht-stationäre Werkzeugmaschine kann handgeführt oder handgehalten ausgeführt sein. Die erfindungsgemäße Werkzeugmaschine ist vorzugsweise als Winkelschleifer ausgebildet.

Die erfindungsgemäße Werkzeugmaschine ermöglicht es Werkzeugeinrichtungen, insbesondere für hochdrehende Anwendungen, werkzeuglos aufzunehmen bzw. zu spannen, sodass vorzugsweise kein zusätzliches, insbesondere abnehmbares, Sicherungselement, wie beispielsweise eine Befestigungsschraube, zur Befestigung der Werkzeugeinrichtung an der Werkzeugaufnahmeeinrichtung der Werkzeugmaschine erforderlich ist. Somit ist die Werkzeugmaschine dazu vorgesehen, eine Werkzeugeinrichtung auf besonders schnelle und komfortable Weise mit der Werkzeugaufnahmeeinrichtung zu verbinden bzw. zu spannen, sodass ein Bediener bei einer derartigen Werkzeugmaschine einen besonders schnellen Werkzeugwechsel vornehmen kann. Auch ist dadurch die Verwendung eines Zusatzwerkzeugs, wie beispielsweise eines Schraubenschlüssels oder eines Schraubenziehers, nicht mehr erforderlich um die Werkzeugeinrichtung mit der Werkzeugmaschine zu verbinden oder von der Werkzeugmaschine zu lösen.

Insbesondere kann die Klemmeinrichtung mit zunehmender Umdrehungsgeschwindigkeit der Werkzeugaufnahmeeinrichtung eine durch eine auf die Klemmeinrichtung wirkende Zentrifugalkraft erhöhte Klemmkraft auf die Werkzeugeinrichtung bewirken, wodurch die auf die Werkzeugeinrichtung wirkende Klemmkraft mit zunehmender Umdrehungsgeschwindigkeit steigt. Dies ist insbesondere bei hochdrehend, rotierend antreibenden Werkzeugmaschinen zu erkennen.

Unter dem Begriff "beweglich" soll insbesondere beweglich gelagert und/oder vorzugsweise um eine Drehachse schwenkbar beweglich gelagert verstanden werden.

Die Werkzeugaufnahmeeinrichtung kann fest mit der Werkzeugmaschine verbunden sein. Die Werkzeugaufnahmeeinrichtung kann aber auch lösbar an einer Abtriebswelle, Abtriebsspindel oder dergleichen befestigt sein.

Insbesondere kann die Klemmeinrichtung zumindest eine, insbesondere zumindest zwei, Hakeneinrichtung(en) aufweisen. Vorzugsweise ist unter einer Hakeneinrichtung ein dreh-, schwenk- oder verschiebbare Einrichtung zu verstehen, welche zumindest eine Wirkfläche zum Übertragen einer Klemmkraftwirkung auf die Werkzeugeinrichtung aufweist.

Bei einer Ausführung der Klemmeinrichtung mit zumindest zwei Hakeneinrichtungen, können diese relativ bewegbar, insbesondere um eine Schwenkachse, schwenkbar ausgeführt sein, sodass sich diese in radialer Richtung der Abtriebsachse beweglich ausgeführt sind. Bevorzugt weisen die Hakeneinrichtungen eine gemeinsame Bewegungsachse, insbesondere eine gemeinsame Schwenkachse, auf. Es ist jedoch auch denkbar, dass die Hakeneinrichtungen unterschiedliche Bewegungsachsen, insbesondere zumindest im Wesentlichen parallel zueinander verlaufende Schwenkachsen, aufweisen. Die Bewegungsachse, insbesondere die Schwenkachse, der Klemmeinrichtung, insbesondere der Hakeneinrichtungen, verläuft vorzugsweise in einer quer, insbesondere zumindest im Wesentlichen senkrecht, zur Abtriebsachse verlaufenden Ebene. Vorzugsweise bildet die Bewegungsachse, insbesondere die Schwenkachse, der Klemmeinrichtung eine Klemmrichtungsdrehachse.

Die zumindest zwei Hakeneinrichtungen können relativ zueinander bewegbar, insbesondere um die Schwenkachse, in einem Winkelbereich von bis zu 50°, vorzugsweise von bis zu 40°, bevorzugt von bis zu 30°, besonders bevorzugt von bis zu 20°, schwenkbar ausgeführt sein.

Die Klemmeinrichtung bzw. die zumindest zwei Hakeneinrichtungen kann/können insbesondere in zumindest zwei Zuständen vorliegen, nämlich in einem Befestigungszustand oder in einem Lösezustand.

In einem Befestigungszustand sind die Hakeneinrichtungen in radialer Richtung von der Abtriebsachse weg orientiert ausgefahren, insbesondere sodass die Hakeneinrichtungen zueinander in einem ausgefahrenen Zustand eine maximale radiale Erstreckung einnehmen. In einem Befestigungszustand kann die Klemmrichtung dazu vorgesehen sein, die Werkzeugeinrichtung in axialer Richtung der Abtriebsachse form- und/oder kraftschlüssig zu halten. In einem Befestigungszustand sind die Hakeneinrichtungen vorzugsweise mit der Werkzeugeinrichtung verbunden, insbesondere im Eingriff, insbesondere infolge einer Bewegung der Hakeneinrichtungen in radialer Richtung der Abtriebsachse bzw. um die Bewegungsachse der Klemmeinrichtung herum. Dabei kann die Werkzeugeinrichtung mittels der Hakeneinrichtungen form- und/oder kraftschlüssig an der Werkzeugmaschine aufnahmebar haltbar sein. In einem Befestigungszustand ist die Werkzeugeinrichtung in axialer Richtung der Abtriebsachse formschlüssig mit der Werkzeugaufnahmeeinrichtung verbunden. Die Mitnahmeeinrichtung kann in einem Befestigungszustand in axialer Richtung der Abtriebsachse gegenüber der Klemmeinrichtung, insbesondere der Halteeinrichtungen, abstehen. Die Mitnahmeeinrichtung kann in einem Befestigungszustand eine axiale Erstreckung der Werkzeugaufnahmeeinrichtung begrenzen.

In einem Lösezustand ist die Klemmeinrichtung, insbesondere die zumindest zwei Hakeneinrichtungen, in radialer Richtung zur Abtriebsachse eingefahren, insbesondere sodass die Klemmeinrichtung, insbesondere die zumindest zwei Hakeneinrichtungen, zumindest abschnittsweise eine maximale radiale Erstreckung entlang einer zumindest im Wesentlichen senkrecht zu der Abtriebsachse verlaufenden Richtung aufweist, die kleiner ist als eine minimale radiale Erstreckung der Ausnehmung der Werkzeugeinrichtung. Die Klemmeinrichtung, insbesondere die Hakeneinrichtungen, kann/können in einem Lösezustand in axialer Richtung der Abtriebsachse gegenüber der Mitnahmeeinrichtung abstehen. Die Klemmeinrichtung, insbesondere die Hakeneinrichtungen, kann/können in einem Lösezustand eine axiale Erstreckung der Werkzeugaufnahmeeinrichtung begrenzen.

Vorzugsweise ist die maximale radiale Erstreckung der Klemmeinrichtung, insbesondere der zumindest zwei Hakeneinrichtungen, die in einem Lösezustand der Klemmeinrichtung kleiner ist als eine minimale radiale Erstreckung der Ausnehmung der Werkzeugeinrichtung in einem axialen Abschnitt der Klemmeinrichtung in einem Bereich der Werkzeugaufnahmeeinrichtung angeordnet, welcher in axialer Richtung der Abtriebsachse absteht bzw. frei vorsteht und dazu eingerichtet ist, von der Ausnehmung der Werkzeugeinrichtung umgebbar ausgeführt zu sein. Bevorzugt wird der axiale Abschnitt, in dem die maximale radiale Erstreckung der Klemmeinrichtung angeordnet ist, nicht von einem axialen Abschnitt der Klemmeinrichtung gebildet, welcher in axialer Richtung der Abtriebsachse nicht absteht bzw. nicht von der Werkzeugeinrichtung oder der Werkzeugmaschine in einer Ebene um 360° umgeben bzw. umgebbar ist. Als "abstehend" kann die Klemmeinrichtung, insbesondere die zumindest zwei Hakeneinrichtungen, verstanden werden, wenn die Klemmeinrichtung gegenüber einer eine Bewegung der Werkzeugeinrichtung in einem Befestigungszustand und/oder einem Lösezustand in axialer Richtung der Abtriebsachse begrenzenden Aufsetzbereich zum axialen Aufsetzen der Werkzeugeinrichtung absteht bzw. übersteht. Der axiale Abschnitt kann als ein axialer Absatz der Klemmeinrichtung angesehen werden, welcher im Lösezustand gegenüber der Mitnahmeeinrichtung absteht.

In einem Lösezustand der Klemmeinrichtung kann die Werkzeugeinrichtung in zumindest einem oder zumindest zwei Schritten auf die Werkzeugaufnahmeeinrichtung aufgesetzt werden.

Die Werkzeugaufnahmeeinrichtung kann einen ersten Aufsatzbereich und einen zweiten Aufsatzbereich aufweisen. Der erste Aufsatzbereich kann eine axiale Erstreckung der Mitnahmeeinrichtung begrenzen. Der erste Aufsatzbereich kann eine axiale Erstreckung der Werkzeugaufnahmeeinrichtung in einem Befestigungszustand begrenzen. Der zweite Aufsatzbereich kann den ersten Aufsatzbereich, insbesondere in einer Ebene von 360°, umgeben. Die Aufsatzbereiche erstrecken sich zumindest im Wesentlichen in radialer Richtung der Abtriebsachse und in Umfangsrichtung um die Abtriebsachse. Der erste Aufsatzbereich bzw. der zweite Aufsatzbereich kann eine erste bzw. zweite, insbesondere ebene, Aufsatzfläche aufweisen. Die erste Aufsatzfläche ist gegenüber der zweiten Aufsatzfläche in axialer Richtung der Abtriebsachse beabstandet und insbesondere parallel angeordnet. Die Aufsatzflächen begrenzen den wenigstens einen Drehmomentübertragungsbereich. Die Aufsatzflächen sind von der Werkzeugaufnahmeeinrichtung weg orientiert.

Bei einem Aufsetzvorgang der Werkzeugeinrichtung in einem einzigen Schritt kann eine Ausnehmung einer Anschlusseinrichtung der Werkzeugeinrichtung eine die Ausnehmung begrenzende Begrenzungskontur aufweisen, welche mit einer Außenkontur der Klemmeinrichtung und der Mitnahmeeinrichtung fluchtet, sodass ein Aufsetzen der Werkzeugeinrichtung in axialer Richtung der Abtriebsachse in einem, insbesondere einzigen, Schritt erfolgen kann. Die Werkzeugeinrichtung kann dabei auf der Klemmeinrichtung, insbesondere der Hakeneinrichtung, aufliegen. Durch ein Aufbringen einer Betätigungskraft in axialer Richtung der Abtriebsachse auf die Werkzeugeinrichtung kann die Werkzeugeinrichtung die Klemmeinrichtung, insbesondere die Hakeneinrichtungen, von einem Lösezustand in einen Betätigungszustand zu verfahren. Hierdurch kann die Werkzeugeinrichtung mit der Werkzeugaufnahmeeinrichtung aufgenommen werden. In einem Befestigungszustand kann die Werkzeugeinrichtung auf dem zweiten Aufsatzbereich aufliegen. In einem Befestigungszustand liegt die Werkzeugeinrichtung in axialer Richtung der Abtriebsachse auf der Werkzeugaufnahmeeinrichtung, insbesondere der Mitnahmeeinrichtung, insbesondere auf der zweiten Auflagefläche der Werkzeugaufnahmeeinrichtung, auf.

Bei einem Aufsetzvorgang der Werkzeugeinrichtung in zumindest zwei Schritten kann in einem ersten Aufsetzschritt eine Ausnehmung einer Anschlusseinrichtung der Werkzeugeinrichtung eine die Ausnehmung begrenzende Begrenzungskontur aufweisen, welche bei einem ersten Aufsetzten der Werkzeugeinrichtung auf der Werkzeugaufnahmeeinrichtung derart um die Abtriebsachse, insbesondere verdreht, ausgerichtet ist, dass die Begrenzungskontur nicht mit einer Außenkontur der Klemmeinrichtung und der Mitnahmeeinrichtung fluchtet. Die Werkzeugeinrichtung liegt dabei in axialer Richtung der Abtriebsachse auf der Mitnahmeeinrichtung auf und wird durch die Klemmeinrichtung in radialer Richtung vorzentriert bzw. grobzentriert. Die Werkzeugeinrichtung kann dabei auf dem ersten Aufsatzbereich aufliegen. Die Anschlusseinrichtung ist insbesondere bis zu einem formschlüssigen Eingriff des Drehmomentübertragungsbereichs bevorzugt um die Abtriebsachse drehbar ausgeführt.

Die Werkzeugeinrichtung kann insbesondere derart um die Abtriebsachse gedreht werden, bis die Begrenzungskontur der Ausnehmung mit der Außenkontur der Klemmeinrichtung und der Mitnahmeeinrichtung fluchtet.

Bevorzugt kann in einem an den ersten Aufsetzschritt anschließenden zweiten Aufsetzschritt die Werkzeugeinrichtung derart in axialer Richtung der Abtriebsachse entlang der Mitnahmeeinrichtung geführt werden, dass die Ausnehmung der Werkzeugeinrichtung die Klemmeinrichtung und die Mitnahmeeinrichtung zumindest teilweise, insbesondere vollständig, umgreift. Dadurch kann die Werkzeugeinrichtung feinzentriert werden, wodurch die Werkzeugeinrichtung gegenüber der Werkzeugaufnahmeeinrichtung, insbesondere der Mitnahmeeinrichtung und/oder der Klemmeinrichtung, drehfest um die Abtriebsachse an der Werkzeugaufnahmeeinrichtung anordenbar ist. Die Werkzeugeinrichtung kann auf der Klemmeinrichtung aufliegen. Entsprechend dem ersten Aufsetzschritt kann die Werkzeugeinrichtung anschließend mit einer axialen Betätigungskraft beaufschlagt werden um die Klemmeinrichtung, insbesondere die Hakeneinrichtung, von einem Lösezustand in einen Betätigungszustand zu verfahren. Die Werkzeugeinrichtung kann dabei auf dem zweiten Aufsatzbereich aufliegen und insbesondere einen Befestigungszustand bilden.

Die Werkzeugeinrichtung wird vorzugsweise in einer zur Klemmung mittels der Klemmeinrichtung vorgesehenen Position auf dem, insbesondere ersten und/oder zweiten, Aufsetzbereich aufgesetzt.

Der Begriff "Abtriebsachse" und "Werkzeugdrehachse" bezeichnet bevorzugt eine fiktive geometrische Drehachse der Werkzeugaufnahmeeinrichtung und/oder einer Abtriebswelle der Werkzeugmaschine bzw. eine fiktive Drehachse der Werkzeugeinrichtung in einem an der Werkzeugaufnahmeeinrichtung angeordneten, insbesondere fixierten, Zustand.

Der Drehmomentübertragungsbereich der Mitnahmeeinrichtung weist wenigstens eine im Abstand zu der Abtriebsachse angeordnete Abtriebsfläche auf, die jeweils eine Vielzahl von Flächenpunkten aufweist. Der Begriff "Abtriebsfläche" bezeichnet eine Fläche, die zumindest in einem Befestigungszustand der Werkzeugeinrichtung zumindest teilweise mittelbar oder unmittelbar in Kontakt mit der Werkzeugeinrichtung steht, um das Abtriebsdrehmoment auf die Werkzeugeinrichtung zu übertragen. Der Begriff "Flächenpunkt" definiert insbesondere Punkte auf der Oberseite dieser Abtriebsfläche und ist geometrisch zu verstehen.

Der Drehmomentübertragungsbereich ist dafür vorgesehen, das Antriebsdrehmoment der Werkzeugmaschine in einem an der Klemmeinrichtung angeordneten, insbesondere fixierten, Zustand der Werkzeugeinrichtung auf die Werkzeugeinrichtung zu übertragen. Umgekehrt kann der Drehmomentübertragungsbereich auch dafür vorgesehen sein, ein Drehmoment, insbesondere ein beim Abbremsen der Werkzeugbewegung entstehendes Bremsmoment von der Werkzeugeinrichtung auf die Werkzeugmaschine zu übertragen.

Die Unteransprüche geben weitere zweckmäßige Weiterbildungen der erfindungsgemäßen Werkzeugmaschine an.

Es kann zweckmäßig sein, dass die Werkzeugaufnahmeeinrichtung eine axiale Öffnung aufweist, welche dazu vorgesehen ist, die Klemmeinrichtung aufzunehmen. Die Öffnung kann in einer Ebene, insbesondere einer Radialebene, um 360° die Abtriebsachse und/oder die Klemmeinrichtung umgeben. Unter einer Radialebene soll eine Ebene verstanden werden, welche sich radial zur Abtriebsachse erstreckt. Bevorzugt ist die Werkzeugaufnahmeeinrichtung zumindest teilweise an einer Abtriebswelle der Werkzeugmaschine angeordnet, insbesondere zumindest teilweise in einem Innenbereich einer als Hohlwelle ausgebildeten Abtriebswelle der Werkzeugmaschine angeordnet. Die Öffnung kann als eine Ausnehmung im Gehäuse der Werkzeugmaschine ausgebildet sein. Die Klemmeinrichtung kann in axialer Richtung gegenüber der Öffnung abstehen. Die Öffnung kann zumindest abschnittsweise von dem zweiten Aufsatzbereich begrenzt sein. Die Öffnung kann die Klemmvorrichtung drehfest um die Abtriebsachse aufnehmen bzw. lagern. Die Öffnung kann in einer Radialebene länglich ausgeführt sein. Hierdurch kann die Werkzeugaufnahmeeinrichtung besonders kompakt ausgeführt sein.

Ferner kann es zweckmäßig sein, dass die Mitnahmeeinrichtung durch zumindest eine, insbesondere als Führungsbacke dienende, Mitnahmebacke ausgebildet ist. Insbesondere kann die Mitnahmeeinrichtung die Öffnung zumindest abschnittweise in radialer Richtung der Abtriebsachse begrenzen und/oder zumindest teilweise in der Öffnung angeordnet sein. Erfindungsgemäss ist

die Mitnahmeeinrichtung dazu vorgesehen, die Klemmeinrichtung der Werkzeugaufnahmeeinrichtung zu führen, insbesondere bei einer Bewegung ausgehend von einem Lösezustand in einen Befestigungszustand oder umgekehrt, insbesondere bei einer zumindest teilweisen Bewegung in radialer Richtung. Unter einer Bewegung soll insbesondere eine Relativbewegung verstanden werden. Die Öffnung kann im Wesentlichen rechteckig sein. Bevorzugt kann die zumindest eine als Führungsbacke dienende Mitnahmebacke die Öffnung entlang einer Haupterstreckung der rechteckigen Öffnung in radialer Richtung begrenzen. Die Öffnung kann die Abtriebsachse in einer Ebene um 360° umgeben. Vorzugsweise ist die Öffnung entlang einer quer, insbesondere zumindest im Wesentlichen senkrecht, zur Abtriebsachse verlaufenden Richtung zwischen zumindest zwei Mitnahmebacken der Mitnahmeeinrichtung angeordnet. Vorzugsweise begrenzen die Mitnahmebacken die Öffnung zumindest entlang der quer, insbesondere zumindest im Wesentlichen senkrecht, zur Abtriebsachse verlaufenden Richtung. Bevorzugt ist die Klemmeinrichtung zumindest teilweise entlang der quer, insbesondere zumindest im Wesentlichen senkrecht, zur Abtriebsachse verlaufenden Richtung zwischen den zumindest zwei Mitnahmebacken der Mitnahmeeinrichtung angeordnet.

Hierdurch kann die Mitnahmeeinrichtung eine zusätzliche Funktion des Führens der Klemmeinrichtung einnehmen, sodass eine kompakte Ausführung der Werkzeugaufnahmeeinrichtung gewährleistet wird.

Unter "orientiert hin/weg" soll in diesem Zusammenhang eine Orientierung bzw. eine Ausrichtung in einem Raum, wie beispielsweise in einem dreidimensionalen Koordinatensystem, einer Normalen verstanden werden, welche einen Vektor beschreibt, der senkrecht auf einer Tangentialebene zu einem Bezugspunkt oder einer Bezugsfläche oder einer Bezugseinrichtung steht.

Weiter kann es zweckmäßig sein, dass die Mitnahmeeinrichtung zumindest zwei Mitnahmebacken aufweist, welche zueinander parallel und beabstandet angeordnet sind. Vorzugsweise sind die Mitnahmebacken drehfest mit der Abtriebswelle verbunden. Bevorzugt sind die Mitnahmebacken rotierend um die Abtriebsachse antreibbar, insbesondere zusammen mit der Abtriebswelle.

Vorzugsweise können die beiden Mitnahmebacken gleichmäßig verteilt, insbesondere symmetrisch, wie beispielsweise drehsymmetrisch, um die Abtriebsachse angeordnet sein. Vorzugsweise sind die Mitnahmebacken relativ zueinander punktsymmetrisch zu einem auf der Abtriebsachse angeordneten Punkt ausgebildet. Hierdurch können wirkende Kräfte besser verteilt werden. Es ist jedoch auch denkbar, dass die Mitnahmebacken unsymmetrisch in Bezug auf zumindest einen auf der Abtriebsachse angeordneten Punkt ausgebildet sind, dass die Mitnahmebacken spiegelsymmetrisch zu zumindest einer die Abtriebsachse umfassenden Ebene ausgebildet sind o. dgl.

Es kann zweckmäßig sein, dass die Klemmeinrichtung wenigstens eine Klemmfläche zum Übertragen einer axialen Kraftwirkung auf die Werkzeugeinrichtung aufweist. Vorzugsweise ist die Klemmfläche dazu vorgesehen, die Werkzeugeinrichtung in einem Befestigungszustand der Klemmeinrichtung zumindest axial an der Werkzeugaufnahmeeirichtung zu fixieren, insbesondere infolge einer form- und/oder kraftschlüssigen Verbindung. Bevorzugt ist die Klemmfläche dazu vorgesehen, in einem Befestigungszustand der Klemmeinrichtung eine entlang einer zumindest im Wesentlichen parallel zur Abtriebsachse verlaufenden Richtung wirkende Fixierungskraft auf die Werkzeugeinrichtung auszuüben. Die Klemmfläche kann eben ausgebildet sein. Die Klemmfläche kann zumindest bereichsweise gekrümmt ausgebildet sein.

Es wird weiter vorgeschlagen, dass die Werkzeugaufnahmeeinrichtung eine ebene, insbesondere sich orthogonal zur Abtriebsachse erstreckende, Auflagefläche aufweist, welche dazu vorgesehen ist, die Werkzeugeinrichtung in axialer Richtung zu stützen. Vorzugsweise liegt die Werkzeugeinrichtung, insbesondere mit zumindest einer Anlagefläche der Werkzeugeinrichtung, zumindest in einem an der Werkzeugaufnahmeeinrichtung angeordneten Zustand der Werkzeugeinrichtung an der Auflagefläche an. Die Werkzeugeinrichtung kann in einem Befestigungszustand an der Auflagefläche anliegen. Bevorzugt ist die Werkzeugeinrichtung mittels der Klemmeinrichtung, insbesondere in einem Befestigungszustand der Klemmeinrichtung, an die Auflagefläche andrückbar. Ferner kann es zweckmäßig sein, dass die Werkzeugaufnahmeeinrichtung die ebene Auflagefläche aufweist, welche in radialer Richtung der Abtriebsachse beabstandet zu der Klemmeinrichtung, insbesondere der Klemmfläche der Klemmeinrichtung, angeordnet ist. Insbesondere kann sich die Auflagefläche im Wesentlichen orthogonal zur Abtriebsachse erstrecken. Die Auflagefläche kann die die zweite Aufsatzfläche des zweiten Aufsatzbereichs bilden. Dadurch kann eine ebene Auflage der Werkzeugeinrichtung auf und/oder an der Werkzeugaufnahmeeinrichtung erreicht werden, wodurch die Werkzeugaufnahme entsprechend unter Einhaltung einer geforderten Plantoleranz der Werkzeugeinrichtung mit der Werkzeugmaschine zuverlässig betrieben werden kann. Dadurch können besonders hohe Winkelgenauigkeiten der Werkzeugeinrichtung gegenüber Werkzeugaufnahmeeinrichtung erreicht und somit Vibrationen und ein unzulässiges Taumeln der Werkzeugeinrichtung im Betrieb der Werkzeugeinrichtung mit der Werkzeugmaschine vermindert werden.

Die Auflagefläche kann zumindest abschnittsweise die Öffnung der Werkzeugaufnahmeeinrichtung in radialer Richtung der Abtriebsachse begrenzen. Bevorzugt ist an der Öffnung zumindest ein Dichtungselement der Werkzeugaufnahmeeinrichtung angeordnet. Das Dichtungselement ist vorzugsweise dazu vorgesehen, dichtend an einer die Öffnung begrenzenden Innenwand der als Hohlwelle ausgebildeten Abtriebswelle sowie dichtend an der Mitnahmeeinrichtung und/oder der Klemmeinrichtung anzuliegen. Vorzugsweise ist das Dichtungselement dazu vorgesehen, ein Eindringen von Schmutz in die Werkzeugaufnahmeeinrichtung, insbesondere in die als Hohlwelle ausgebildete Abtriebswelle, durch die Öffnung zumindest weitestgehend zu vermeiden. Vorzugsweise umgibt das Dichtungselement die Werkzeugaufnahmeeinrichtung, insbesondere die Mitnahmeeinrichtung und/oder der Klemmeinrichtung, entlang einer Umfangsrichtung zumindest teilweise, insbesondere vollständig. Die Umfangsrichtung verläuft vorzugsweise in einer sich zumindest im Wesentlichen senkrecht zur Abtriebsachse erstreckenden Ebene.

Weiterhin kann es zweckmäßig sein, dass die Mitnahmeeinrichtung eine maximale radiale Erstreckung entlang einer quer, insbesondere zumindest im Wesentlichen senkrecht, zu der Abtriebsachse verlaufenden Richtung aufweist, die größer ist als eine maximale radiale Erstreckung der Klemmeinrichtung entlang einer quer, insbesondere zumindest im Wesentlichen senkrecht, zu der Abtriebsachse verlaufenden Richtung in einem Befestigungszustand der Klemmeinrichtung. Die maximale radiale Erstreckung der Mitnahmeeinrichtung ist vorzugsweise als Durchmesser ausgebildet. Die maximale radiale Erstreckung der Mitnahmeeinrichtung weist bevorzugt einen Wert von insbesondere weniger als 35 mm, bevorzugt von weniger als 30 mm und besonders bevorzugt von etwa, insbesondere bis auf eine Fertigungstoleranz genau, 29 mm auf. Die maximale radiale Erstreckung der Klemmeinrichtung in einem Befestigungszustand erstreckt sich vorzugsweise entlang einer quer, insbesondere zumindest im Wesentlichen senkrecht, zur Abtriebsachse verlaufenden Richtung und weist einen Wert von insbesondere weniger als 34 mm, bevorzugt von weniger als 29 mm und besonders bevorzugt von, insbesondere bis auf eine Fertigungstoleranz genau, 28,5 mm auf. Vorzugsweise ist die maximale radiale Erstreckung der Klemmeinrichtung in einem Befestigungszustand der Klemmeinrichtung innerhalb eines maximalen Durchmessers eines Kreises um die Abtriebsachse von 28,5 mm angeordnet oder weist vorzugsweise einen Wert von 28,5 mm auf. Insbesondere kann die Klemmeinrichtung eine Umfangsfläche aufweisen, welche die Klemmeinrichtung, insbesondere die zumindest eine Hakeneinrichtung, in radialer Richtung der Abtriebsachse zumindest abschnittsweise begrenzt. Die Umfangsfläche der Klemmeinrichtung kann in einem Lösezustand in axialer Richtung zur Abtriebsachse gegenüber der Mitnahmeeinrichtung abstehen. Die Umfangsfläche der Klemmeinrichtung kann in einem Lösezustand gegenüber der Abtriebsachse derart angewinkelt sein, dass ein Abstand der Umfangsfläche gegenüber der Abtriebsachse in einer von der Werkzeugaufnahmeeinrichtung bzw. der Werkzeugmaschine weisenden axialen Richtung der Abtriebsachse abnimmt bzw. kegelförmig verläuft. Dadurch kann die Werkzeugeinrichtung bei einem Aufsetzvorgang auf die Werkzeugaufnahmeeinrichtung vorzentriert werden um die Werkzeugeinrichtung besonders vorteilhaft auf die Werkzeugmaschine aufzusetzen. Die Umfangsfläche der Klemmeinrichtung kann gegenüber der Abtriebsachse in einem Lösezustand einen Winkel bilden, welcher größer als 5°, insbesondere größer als 10°, vorzugsweise größer als 15°, bevorzugt größer als 20°, besonders bevorzugt größer als 25°, ist und/oder kleiner als 60°, insbesondere kleiner als 50°, vorzugsweise kleiner als 40°, bevorzugt kleiner als 35°, besonders bevorzugt kleiner als 30°, ist. Die Umfangsfläche der Klemmeinrichtung kann gegenüber der Abtriebsachse in einem Befestigungszustand parallel angeordnet sein. Insbesondere kann die maximale radiale Erstreckung der Mitnahmeeinrichtung größer als eine maximale radiale Erstreckung der Klemmeinrichtung zu der Abtriebsachse sein. Vorzugsweise ist die maximale radiale Erstreckung der Mitnahmeeinrichtung in radialer Richtung der Abtriebsachse durch einen Mitnahmebegrenzungskreis begrenzt. Vorzugsweise ist die maximale radiale Erstreckung der Klemmeinrichtung in radialer Richtung der Abtriebsachse durch einen Klemmbegrenzungskreis begrenzt. Der Mitnahmebegrenzungskreis weist vorzugsweise einen maximalen Durchmesser auf, welcher größer, insbesondere um bis zu 5 %, vorzugsweise um bis zu 3 %, bevorzugt um bis zu 1 % größer, ist als ein maximaler Durchmesser des Klemmbegrenzungskreises. Diese Kreise sind dabei in zumindest einem Zustand konzentrisch, insbesondere um die Abtriebsachse, ausgeführt. Hierdurch kann die Klemmeinrichtung im Betrieb der Werkzeugmaschine mit der Werkzeugeinrichtung auf besonders vorteilhafte Weise vor Beschädigungen beispielsweise bei einer Kollision der Werkzeugaufnahmeeinrichtung mit einem zu bearbeitenden Werkstück geschützt werden.

Die Werkzeugeinrichtung wird vorzugsweise über den maximalen Durchmesser der Mitnahmeeinrichtung von 29 mm zentriert, indem die Ausnehmung der Werkzeugeinrichtung bevorzugt zumindest abschnittsweise etwa, insbesondere bis auf eine Fertigungstoleranz genau, einem maximalen Durchmesser von 29 mm entspricht, sodass eine genaue Toleranz erreicht wird und ein guter Rundlauf gewährleistet wird.

Des Weiteren kann es zweckmäßig sein, dass die Klemmeinrichtung gegenüber der Mitnahmeeinrichtung in einem Lösezustand der Werkzeugaufnahmeeinrichtung in axialer Richtung der Abtriebsachse in einer von der Werkzeugmaschine weg orientierten Richtung absteht. Insbesondere kann die Klemmeinrichtung gegenüber der Mitnahmeeinrichtung in einem Lösezustand der Werkzeugaufnahmeeinrichtung, insbesondere der Klemmeinrichtung, in axialer Richtung der Abtriebsachse in einer von der Werkzeugmaschine weg orientierten Richtung weiter abstehen als in einem Befestigungszustand der Werkzeugaufnahmeeinrichtung, insbesondere der Klemmeinrichtung. Vorzugsweise kann die Werkzeugaufnahmeeinrichtung, insbesondere die Klemmeinrichtung, in einem Lösezustand der Werkzeugaufnahmeeinrichtung, insbesondere der Klemmeinrichtung, zumindest im Wesentlichen kegelformartig ausgeführt sein oder innerhalb einer kegelformartigen Hüllkurve, die die Klemmeinrichtung zumindest teilweise umgibt oder begrenzt angeordnet sein, insbesondere sodass die Werkzeugeinrichtung bei einem Aufsetzvorgang in axialer Richtung der Abtriebsachse zuerst mittels der Klemmeinrichtung grobzentriert und anschließend mittels der Mitnahmeeinrichtung feinzentriert wird. Eine maximale radiale Erstreckung der Klemmeinrichtung in einem Lösezustand kann, insbesondere entlang der axialen Richtung betrachtet, zumindest abschnittsweise einem Wert von 22 mm entsprechen, insbesondere einem Durchmesser eines um die Abtriebsachse verlaufenden Kreises von 22 mm entsprechen, sodass das Einsatzwerkzeug vorzentriert werden kann. Hierdurch kann die Werkzeugeinrichtung bei einem Aufsetzvorgang in axialer Richtung der Abtriebsachse auf der Mitnahmeeinrichtung der Werkzeugaufnahmeeinrichtung aufgelegt werden und durch die in axialer Richtung der Abtriebsachse abstehende Klemmeinrichtung in radialer Richtung vorzentriert bzw. grobzentriert werden. Unter einer Zentrierung soll insbesondere eine Zentrierung in Umfangsrichtung um die Abtriebsachse verstanden werden.

Ferner kann es zweckmäßig sein, dass der Drehmomentübertragungsbereich der Mitnahmeeinrichtung eine, insbesondere geradlinige oder gekrümmte, Abtriebskante und/oder eine, insbesondere ebene oder gekrümmte, Abtriebsfläche aufweist. Dadurch können/-kann die Abtriebsfläche und/oder die Abtriebskante einen Drehmomentaufnahmebereich der Werkzeugeinrichtung in besonders vorteilhafter Weise, insbesondere in Form einer Punktberührung, vorzugsweise in Form einer Linienberührung, bevorzugt in Form einer Flächenberührung, kontaktieren. Die Abtriebsfläche kann in Umfangsrichtung um die Abtriebsachse orientiert, insbesondere ausgerichtet, sein.

Weiter kann es zweckmäßig sein, dass der zumindest eine Drehmomentübertragungsbereich, insbesondere die Abtriebsfläche und/oder die Abtriebskante entgegen einer Drehrichtung der Werkzeugaufnahmeeinrichtung im Betrieb der Werkzeugmaschine angewinkelt ist. Bevorzugt schließen die Abtriebsfläche und/oder die Abtriebskante, insbesondere in einer zumindest im Wesentlichen senkrecht zur Abtriebsachse verlaufenden Ebene, mit einer die Abtriebsachse sowie die Abtriebsfläche und/oder die Abtriebskante zumindest in einem Punkt schneidenden Geraden, insbesondere mit der radialen Richtung, einen Winkel von insbesondere weniger als 80°, bevorzugt von weniger als 60° und besonders bevorzugt von weniger als 45° ein. Dadurch können aufgrund von Kollisionen mit Werkstücken entstehende Schäden vermindert werden.

Ferner kann es zweckmäßig sein, dass die Mitnahmeeinrichtung zumindest zwei Drehmomentübertragungsbereiche mit jeweils einer Abtriebskante und/oder einer Abtriebsfläche aufweist, welche voneinander weg orientiert sind, insbesondere bezogen auf eine die Abtriebsachse umfassende Ebene, und welche im Wesentlichen parallel zueinander sind. Bevorzugt sind die Drehmomentübertragungsbereiche mit jeweils einer Abtriebskante und/oder einer Abtriebsfläche entlang einer um die Abtriebsachse verlaufenden Umfangsrichtung relativ zueinander beabstandet angeordnet, wobei insbesondere ein minimaler Abstand zwischen den Drehmomentübertragungsbereichen, insbesondere zwischen den Abtriebskanten und/oder den Abtriebsflächen der Drehmomentübertragungsbereiche, entlang der Umfangsrichtung insbesondere größer ist als 10 %, bevorzugt größer ist als 20 % und besonders bevorzugt kleiner ist als 60 % eines Gesamtumfangs des Klemmbegrenzungskreises.

Es wird ferner vorgeschlagen, dass die Abtriebskante und/oder die Abtriebsfläche gegenüber einer durch eine axiale Richtung und eine radiale Richtung der Abtriebsachse aufgespannten Ebene in Umfangsrichtung um die Abtriebsachse und/oder um eine eine Radialachse bildende radiale Richtung der Abtriebsachse angewinkelt, insbesondere um bis zu 50°, vorzugsweise um bis zu 40°, bevorzugt um bis zu 30°, besonders bevorzugt um bis zu 25°, angewinkelt ist. Vorzugsweise schließen die Abtriebskante und/oder die Abtriebsfläche mit einer durch die Abtriebsachse und einer quer, insbesondere zumindest im Wesentlichen senkrecht zur Abtriebsachse, verlaufenden Richtung aufgespannten Ebene einen Winkel ein, der insbesondere kleiner ist als 50°, vorzugsweise kleiner ist als 40°, bevorzugt kleiner ist als 30°und besonders bevorzugt größer ist als 15°. Bei einer abgewinkelten Anordnung der Abtriebsfläche und/oder der Abtriebskante relativ zu der durch die Abtriebsachse und der quer, insbesondere zumindest im Wesentlichen senkrecht zur Abtriebsachse, verlaufenden Richtung aufgespannten Ebene kann eine maximale Erstreckung der Abtriebsfläche und/oder der Abtriebskante entlang einer zumindest im Wesentlichen senkrecht zur Abtriebsachse verlaufenden Richtung minimiert werden, ohne eine maximale Quererstreckung der Abtriebsfläche selbst zu verringern, sodass eine Erstreckung der Mitnahmeeinrichtung besonders kompakt ausgeführt sein kann. Bei einer Anwinklung der Abtriebsfläche um die Umfangsrichtung der Abtriebsachse kann eine radiale Erstreckung der Abtriebsfläche und/oder der Abtriebskante minimiert werden ohne eine Erstreckung der Abtriebsfläche zu verringern, sodass eine Erstreckung der Mitnahmeeinrichtung besonders kompakt ausgeführt sein kann. Bei einer Anwinklung der Abtriebsfläche um eine eine Radialachse bildende radiale Richtung der Abtriebsachse kann die Werkzeugeinrichtung auf besonders einfache Weise in axialer Richtung auf die Werkzeugaufnahmeeinrichtung aufgesetzt werden, sodass eine maximale Erstreckung der Abtriebsfläche in axialer Richtung der Abtriebsachse zur Werkzeugmaschine hin zunehmend ausgeführt ist.

Die Abtriebsflächen können entgegen einer Drehrichtung der Werkzeugaufnahmeeinrichtung im Betrieb der Werkzeugmaschine angewinkelt sein. Vorzugsweise sind die Abtriebsflächen relativ zu einer um die Abtriebsachse verlaufenden Umfangsrichtung geneigt. Insbesondere schließen die Abtriebsflächen jeweils mit der Umfangsrichtung einen von 90° verschiedenen Winkel ein.

Es kann zweckmäßig sein, dass die Werkzeugaufnahmeeinrichtung, insbesondere die Klemmeinrichtung, eine Betätigungseinrichtung aufweist, welche bei einer axialen Betätigung der Betätigungseinrichtung mittels einer Betätigungskraft dazu vorgesehen ist, die Klemmeinrichtung von einem Lösezustand, in dem die Werkzeugeinrichtung von dem Werkzeugaufnahmeeinrichtung entnehmbar ist, in einen Befestigungszustand, in dem die Werkzeugeinrichtung mit der Werkzeugaufnahmeeinrichtung befestigt ist, zu überführen.

Die Betätigungseinrichtung kann mittels der Werkzeugeinrichtung betätigt werden, indem die Werkzeugeinrichtung mittels einer Betätigungskraft derart beaufschlagt wird, dass die Werkzeugeinrichtung in axialer Richtung der Werkzeugachse bzw. der Abtriebsachse eine Betätigungskraft auf die Klemmeinrichtung ausübt, um die Klemmeinrichtung von einem Lösezustand in einen Befestigungszustand zu versetzen.

Vorzugsweise kann die Klemmeinrichtung eine Klemmausnehmung aufweisen.

Ferner kann es zweckmäßig sein, dass die Klemmeinrichtung zumindest eine Hakeneinrichtung mit zumindest einer radialen Klemmausnehmung aufweist, welche dazu vorgesehen ist, die Werkzeugeinrichtung in einem Befestigungszustand zumindest in axialer Richtung der Antriebsachse zu klemmen und in einem Lösezustand freizugeben. Die Klemmausnehmung kann dazu vorgesehen sein, die Werkzeugeinrichtung zumindest teilweise aufzunehmen. Die Klemmausnehmung kann dazu vorgesehen sein, die Werkzeugeinrichtung in einem Lösezustand zumindest teilweise aufzunehmen. Die Klemmausnehmung kann dazu vorgesehen sein, die Werkzeugeinrichtung in einem Befestigungszustand aufzunehmen und an der Werkzeugaufnahmeeinrichtung zu halten. Die Klemmausnehmung kann in einem Lösezustand in axialer Richtung entlang der Abtriebsachse zumindest teilweise gegenüber der Mitnahmeeinrichtung abstehen bzw. hervorragen. Die Klemmausnehmung kann in einem Lösezustand gegenüber der Mitnahmeeinrichtung derart abstehen, dass die Anschlusseinrichtung der Werkzeugeinrichtung von der Klemmausnehmung aufgenommen wird. Die Klemmausnehmung kann in einem Lösezustand gegenüber der Abtriebsachse derart angewinkelt sein, dass die Anschlusseinrichtung der Werkzeugeinrichtung zumindest teilweise in der Klemmausnehmung, insbesondere in radiale Richtung zu der Abtriebsachse formschlüssig, aufnehmbar ist. Die Klemmausnehmung kann als eine Umfangsausnehmung ausgebildet sein. Die Klemmausnehmung kann derart ausgebildet sein, dass sich die Klemmausnehmung in einem Lösezustand zumindest teilweise in axialer Richtung der Abtriebsachse öffnet um die Werkzeugeinrichtung, insbesondere die Anschlusseinrichtung der Werkzeugeinrichtung, aufzunehmen.

Insbesondere kann die Klemmeinrichtung zumindest zwei Hakeneinrichtungen mit jeweils zumindest einer radialen Klemmausnehmung aufweisen. Die Klemmausnehmung kann sich im Befestigungszustand im Wesentlichen in radialer Richtung der Abtriebsachse erstrecken. Vorzugsweise greift die Werkzeugeinrichtung zumindest in einem mittels der Klemmeinrichtung an der Werkzeugaufnahmeeinrichtung befestigten Zustand der Werkzeugeinrichtung zumindest teilweise in die Klemmausnehmung ein. Dadurch kann auf besonders einfache Weise eine formschlüssige Verbindung der Werkzeugeinrichtung mit der Werkzeugmaschine in einem Befestigungszustand bereitgestellt werden. Insbesondere kann die Klemmeinrichtung wenigstens eine Klemmfläche zum Übertragen einer axialen Kraftwirkung auf die Werkzeugeinrichtung, insbesondere die Anschlusseinrichtung der Werkzeugeinrichtung, im Befestigungszustand aufweisen. Vorzugsweise kontaktiert die Klemmfläche die Werkzeugeinrichtung wenigstens abschnittsweise in Form einer Punkt-, bevorzugt in Form einer Linien- und besonders bevorzugt in Form einer Flächenberührung. Die Klemmfläche kann dabei eben oder, insbesondere zumindest abschnittsweise, gebogen sein.

Der die Punkt-, Linien- oder Flächenberührung bildende Berührbereich hängt von der Form und Art der Drehmomentübertragungsbereiche/ Drehmomentaufnahmebereiche und deren Zusammenwirken ab. Bei einem punktförmigen Berührbereich weist dieser Berührbereich eine kreisrunde oder ellipsenförmige Ausdehnung auf. Ein punktförmiger Berührbereich ist besonders unempfindlich gegenüber einer ungenauen Positionierung der Werkzeugeinrichtung gegenüber der Werkzeugmaschine, wie diese durch Toleranzen bei der Fertigung der Werkzeugeinrichtung verursacht werden kann.

Bei einem linienförmigen Berührbereich weist dieser Berührbereich entlang der Berührlinie eine große Erstreckung und quer zu dieser eine kleine Erstreckung auf. Ein linienförmiger Berührbereich bietet gegenüber einem punktförmigen Berührbereich einen größeren Kontaktbereich und es lassen sich größere Antriebskräfte von der Werkzeugmaschine auf die Werkzeugeinrichtung übertragen. Ein flächiger Berührbereich bietet gegenüber einem linienförmigen Berührbereich einen größeren Kontaktbereich, insbesondere eine größere Kontaktfläche, und es lassen sich daher größere Antriebskräfte von der Werkzeugmaschine auf die Werkzeugeinrichtung übertragen. Gegenüber einer punktförmigen Berührung erfordern eine linienförmige und eine flächige Berührung eine höhere Genauigkeit, sowohl bei der Fertigung der Drehmomentübertragungsbereiche/ Drehmomentaufnahmebereiche als auch bei der Positionierung der Werkzeugeinrichtung an der Werkzeugmaschine. Die Drehmomentübertragungsbereiche/ Drehmomentaufnahmebereiche können so aufeinander abgestimmt sein, dass sich eine flächige oder linienförmige Berührung erst bei der Übertagung von nennenswerten Antriebskräften einstellt, beispielsweise bei Betrieb der Werkzeugmaschine mit Nennleistung.

Die Klemmfläche kann eben oder gekrümmt sein. Die Klemmfläche kann in einer im Wesentlichen radialen Klemmausnehmung ausgebildet sein. Die Klemmausnehmung kann insbesondere als eine Klemmmulde oder als eine Klemmvertiefung ausgebildet sein. Die Klemmfläche erstreckt sich im Wesentlichen in radialer Richtung der Abtriebsachse. Die Klemmfläche kann zur Werkzeugmaschine hin orientiert sein. Die Klemmfläche kann in einem Befestigungszustand der Werkzeugaufnahmeeinrichtung quer, insbesondere zumindest im Wesentlichen senkrecht, zur Abtriebsachse orientiert sein.

Weiterhin kann es zweckmäßig sein, dass die Klemmeinrichtung, insbesondere zumindest eine Hakeneinrichtung der Klemmeinrichtung, um eine, insbesondere gegenüber der Abtriebsachse im Wesentlichen orthogonal angeordneten, Klemmeinrichtungsdrehachse derart schwenkbar gelagert ist, dass mittels der Klemmeinrichtung in Abhängigkeit eines gegenüber der Abtriebsachse angewinkelten Schwenkwinkels der Klemmeinrichtung, insbesondere einer Klemmfläche der Klemmeinrichtung, Werkzeugeinrichtungen unterschiedlicher Dicken der Anschlusseinrichtungen einspannbar sind. Hierdurch können auch Werkzeugeinrichtungen mit Anschlusseinrichtungen aufgenommen werden, deren Stärke bzw. Materialstärke in axialer Richtung je nach Einsatzgebiet und Anforderung an die Werkzeugeinrichtung unterschiedlich ausgestaltet sein kann.

Des Weiteren wird vorgeschlagen, dass die Mitnahmeeinrichtung zumindest ein Montagekodierelement umfasst, das dazu vorgesehen ist, mit einem Werkzeugmontagekodierelement der Werkzeugeinrichtung in einem an der Werkzeugaufnahmeeinrichtung angeordneten Zustand der Werkzeugeinrichtung zusammenzuwirken. Vorzugsweise ist das zumindest eine Montagekodierelement der Mitnahmeeinrichtung dazu vorgesehen, eine Anordnung oder ein Aufsetzen der Werkzeugeinrichtung an oder auf der Werkzeugaufnahmeeinrichtung, insbesondere der Auflagefläche, zu kodieren. Bevorzugt ist das zumindest eine Montagekodierelement der Mitnahmeeinrichtung dazu vorgesehen, eine Anordnung oder ein Aufsetzen der Werkzeugeinrichtung an oder auf der Werkzeugaufnahmeeinrichtung, insbesondere der Auflagefläche, gemäß einem Schlüssel-Schlüsselloch-Prinzip zu kodieren. Vorzugsweise ist das zumindest eine Montagekodierelement der Mitnahmeeinrichtung einteilig mit der Mitnahmeeinrichtung, insbesondere einer Mitnahmebacke der Mitnahmeeinrichtung, ausgebildet. Es ist jedoch auch denkbar, dass das zumindest eine Montagekodierelement der Mitnahmeeinrichtung separat zur Mitnahmeeinrichtung, insbesondere zur Mitnahmebacke, ausgebildet ist und mittels einer, einem Fachmann als sinnvoll erscheinenden Verbindung an der Mitnahmeeinrichtung, insbesondere der Mitnahmebacke, fixiert ist. Vorzugsweise ist das Montagekodierelement als mechanisches Montagekodierelement ausgebildet, wie beispielsweise als Ausnehmung, als Fortsatz, als Nut, als Steg o. dgl. Es ist jedoch auch denkbar, dass das Montagekodierelement als elektronisches Montagekodierelement ausgebildet, wie beispielsweise als RFID-Chip, als NFC-Chip, als Funkwellenauswertegerät, als elektronisches Lesegerät (Strichcodelesegerät, Datamatrixcodelesegerät etc.) o. dgl. oder dass das Montagekodierelement als eine Kombination aus einem mechanischen und einem elektronischen Montagekodierelement ausgebildet ist. Das Werkzeugmontagekodierelement der Werkzeugeinrichtung ist vorzugsweise korrespondierend zum Montagekodierelement der Mitnahmeeinrichtung ausgebildet. Bei einer Ausgestaltung des Montagekodierelements als mechanisches Montagekodierelement ist das Werkzeugmontagekodierelement ebenfalls als mechanisches Werkzeugmontagekodierelement ausgebildet, wie beispielsweise als Ausnehmung, als Fortsatz, als Nut, als Steg o. dgl. Bei einer Ausgestaltung des Montagekodierelements als elektronisches Montagekodierelement ist das Werkzeugmontagekodierelement ebenfalls als elektronisches Werkzeugmontagekodierelement ausgebildet, wie beispielsweise als RFID-Chip, als NFC-Chip, als Funkwellenauswertegerät, als elektronisches Lesegerät (Strichcodelesegerät, Datamatrixcodelesegerät etc.) o. dgl. Weitere, einem Fachmann als sinnvoll erscheinende korrespondierende Ausgestaltungen des Montagekodierelements und des Werkzeugmontagekodierelements sind ebenfalls denkbar. Vorzugsweise umfasst die Werkzeugaufnahmeeinrichtung eine Vielzahl an Montagekodierelementen, insbesondere zumindest zwei, bevorzugt zumindest drei und ganz bevorzugt zumindest vier. Die Werkzeugeinrichtung umfasst vorzugsweise in Abhängigkeit von einer Anzahl an Montagekodierelementen der Werkzeugaufnahmeeinrichtung eine gleiche Anzahl. Es ist jedoch auch denkbar, dass die Werkzeugeinrichtung eine Anzahl an Werkzeugmontagekodierelementen aufweist, die von einer Anzahl an Montagekodierelementen der Werkzeugaufnahmeeinrichtung abweicht, insbesondere größer ist. Vorzugsweise ist das zumindest eine Montagekodierelemente der Mitnahmeeinrichtung als Axialkodierelement ausgebildet, insbesondere als ein entlang einer zumindest im Wesentlichen parallel zur Abtriebsachse verlaufenden Richtung wirkendes Axialkodierelement. Vorzugsweise ist das zumindest eine Montagekodierelemente der Mitnahmeeinrichtung dazu vorgesehen, eine axiale Aufsetzmöglichkeit der Werkzeugeinrichtung auf die Mitnahmeeinrichtung zu kodieren. Mittels der erfindungsgemäßen Ausgestaltung kann vorteilhaft eine fehlerhafte Montage der Werkzeugeinrichtung an der Werkzeugaufnahmeeinrichtung weitestgehend vermieden werden. Es kann vorteilhaft einer Anordnung von für einen sicheren Betrieb der Werkzeugmaschine ungeeigneten Werkzeugeinrichtungen an der Werkzeugaufnahmeeinrichtung entgegengewirkt werden. Es kann vorteilhaft beispielsweise eine Anordnung einer Werkzeugeinrichtung, die für Werkzeugmaschinen mit geringer maximaler Drehzahl vorgesehen ist, an einer Werkzeugmaschine mit hoher maximaler Drehzahl entgegengewirkt werden. Ferner wird vorgeschlagen, dass das Montagekodierelement der Mitnahmeeinrichtung an zumindest einer Mitnahmebacke der Mitnahmeeinrichtung angeordnet ist. Vorzugsweise ist das an der zumindest einen Mitnahmebacke der Mitnahmeeinrichtung angeordnete Montagekodierelement als Fortsatz ausgebildet. Bevorzugt weist das als Fortsatz ausgebildet Montagekodierelement der Mitnahmeeinrichtung eine Hauptausrichtung auf, die in eine von der Abtriebsachse weg gerichtete Ausrichtung aufweist, insbesondere entlang einer quer, insbesondere zumindest im Wesentlichen senkrecht, zur Abtriebsachse verlaufenden Richtung. Es ist jedoch auch denkbar, dass das an der zumindest einen Mitnahmebacke der Mitnahmeeinrichtung angeordnete Montagekodierelement eine andere, einem Fachmann als sinnvoll erscheinende Ausgestaltung aufweist. Bevorzugt ist das an der zumindest einen Mitnahmebacke der Mitnahmeeinrichtung angeordnete Montagekodierelement an einer, insbesondere der Abtriebsachse abgewandten, Außenfläche der zumindest einen Mitnahmebacke angeordnet. Vorzugsweise ist das an der zumindest einen Mitnahmebacke der Mitnahmeeinrichtung angeordnete Montagekodierelement an einer zumindest im Wesentlichen parallel zur Abtriebsachse verlaufenden Außenfläche der zumindest einen Mitnahmebacke angeordnet. Alternativ oder zusätzlich ist es denkbar, dass die Werkzeugaufnahmeeinrichtung zumindest ein Montagekodierelement umfasst, das an der Auflagefläche der Werkzeugaufnahmeeinrichtung angeordnet ist. Das an der Auflagefläche der Werkzeugaufnahmeeinrichtung angeordnete Montagekodierelement kann als mechanisches oder als elektronisches Montagekodierelement ausgebildet sein. Mittels der erfindungsgemäßen Ausgestaltung kann zuverlässig eine Anordnung, insbesondere ein Aufsetzen, einer ungeeigneten Werkzeugeinrichtung an, insbesondere auf, die Werkzeugaufnahmeeinrichtung vorteilhaft weitestgehend vermieden werden. Es kann eine konstruktiv einfache Ausgestaltung einer Montagekodierung ermöglicht werden.

Zudem wird vorgeschlagen, dass das Montagekodierelement der Mitnahmeeinrichtung angrenzend an eine Innenumfangsfläche der zumindest einen Mitnahmebacke angeordnet ist. Vorzugsweise ist das an der zumindest einen Mitnahmebacke der Mitnahmeeinrichtung angeordnete Montagekodierelement direkt angrenzend an der Innenumfangsfläche angeordnet. Alternativ oder zusätzlich ist es denkbar, dass das an der zumindest einen Mitnahmebacke der Mitnahmeeinrichtung angeordnete Montagekodierelement an einer Außenumfangsfläche der zumindest einen Mitnahmebacke angeordnet ist. Bevorzugt bildet eine Oberfläche des an der zumindest einen Mitnahmebacke der Mitnahmeeinrichtung angeordnete Montagekodierelements ein Teil der Innenumfangsfläche oder der Außenumfangsfläche der zumindest einen Mitnahmebacke. Mittels der erfindungsgemäßen Ausgestaltung kann eine konstruktiv einfache Ausgestaltung einer Montagekodierung ermöglicht werden. Es kann zuverlässig eine Anordnung, insbesondere ein Aufsetzen, einer ungeeigneten Werkzeugeinrichtung an, insbesondere auf, die Werkzeugaufnahmeeinrichtung vorteilhaft weitestgehend vermieden werden.

Des Weiteren wird vorgeschlagen, dass die Klemmeinrichtung, insbesondere die zumindest eine Hakeneinrichtung der Klemmeinrichtung, zumindest ein Montagekodierelement umfasst. Bevorzugt umfasst die Klemmeinrichtung eine Vielzahl an Montagekodierelementen, insbesondere zumindest zwei. Es ist jedoch auch denkbar, dass die Klemmeinrichtung eine von eins und zwei abweichende Anzahl an Montagekodierelementen aufweist, die an der Hakeneinrichtung angeordnet sind. Vorzugsweise bildet das zumindest eine Montagekodierelement der Klemmeinrichtung ein Fixierungskodierelement, das dazu vorgesehen ist, eine Befestigung der Werkzeugeinrichtung an der Werkzeugaufnahmeeinrichtung zu kodieren. Bevorzugt ist das zumindest eine Montagekodierelement der Klemmeinrichtung dazu vorgesehen, eine Befestigung der Werkzeugeinrichtung an der Werkzeugaufnahmeeinrichtung gemäß einem Schlüssel-Schlüsselloch-Prinzip zu kodieren. Das Montagekodierelement der Klemmeinrichtung ist vorzugsweise dazu vorgesehen, bei einem Nichtvorhandensein eines korrespondierenden Montagekodierelements an einer Werkzeugeinrichtung eine Befestigung der Werkzeugeinrichtung an der Werkzeugaufnahmeeinrichtung, insbesondere an der Auflagefläche, mittels der Klemmeinrichtung zumindest weitestgehend zu vermeiden oder zu unterbinden. Bei einem Vorhandensein eines korrespondierenden Montagekodierelements an einer Werkzeugeinrichtung ist eine Befestigung infolge einer Kodierfreigabe durch ein Zusammenwirken des Montagekodierelements der Klemmeinrichtung mit dem korrespondierenden Montagekodierelement der Werkzeugeinrichtung vorzugsweise möglich. Es ist denkbar, dass die Werkzeugaufnahmeeinrichtung lediglich zumindest das oder die Montagekodierelement/e der Mitnahmeeinrichtung oder lediglich zumindest das oder die Montagekodierelement/e der Klemmeinrichtung aufweist. Denkbar ist auch, dass die Werkzeugaufnahmeeinrichtung alternativ oder zusätzlich zu dem oder den Montagekodierelement/en der Mitnahmeeinrichtung oder dem oder den Montagekodierelement/en der Klemmeinrichtung weitere Kodierelemente aufweist, die eine Kodierung einer Anordnung der Werkzeugeinrichtung an der Werkzeugaufnahmeeinrichtung ermöglichen, wie beispielsweise zumindest ein Kodierelement, das infolge einer Anordnung der Werkzeugeinrichtung an der Werkzeugaufnahmeeinrichtung bewegbar ist, um eine Anordnung der Werkezugeinrichtung freizugeben, zumindest ein zusätzliches statisches Kodierelement an der Werkzeugaufnahmeeinrichtung, das beispielsweise in eine Ausnehmung an der Werkzeugeinrichtung eingreift, zumindest ein zusätzliches bewegbar gelagertes Kodierelement, das vorzugsweise nach einer korrekten Anordnung einer geeigneten Werkzeugeinrichtung in eine Kodierausnehmung der Werkzeugeinrichtung bewegbar ist, um beispielsweise eine Inbetriebnahme der Werkzeugmaschine freizuschalten oder weitere, einem Fachmann als sinnvoll erscheinende Kodierelemente. Vorzugsweise ist das zumindest eine Montagekodierelemente der Klemmeinrichtung als Radialkodierelement ausgebildet, insbesondere als ein entlang einer zumindest im Wesentlichen senkrecht zur Abtriebsachse verlaufenden Richtung wirkendes Radialkodierelement. Vorzugsweise ist das zumindest eine Montagekodierelemente der Klemmeinrichtung dazu vorgesehen, eine radial wirkende Befestigung der Klemmeinrichtung zu einer Befestigung der Werkzeugeinrichtung an der Werkzeugaufnahmeeinrichtung zu kodieren. Mittels der erfindungsgemäßen Ausgestaltung kann vorteilhaft eine Befestigung einer Werkzeugeinrichtung mittels der Klemmeinrichtung kodiert werden. Es kann beispielsweise bei einer ungeeigneten Ausgestaltung einer Werkzeugeinrichtung, die entkoppelt von mit dem zumindest einen Montagekodierelement der Klemmeinrichtung korrespondierenden Element ausgebildet ist, eine Fixierungsmöglichkeit gesperrt werden. Es kann zuverlässig einer Befestigung einer ungeeigneten Werkzeugeinrichtung an der Werkzeugaufnahmeeinrichtung entgegengewirkt werden.

Ferner wird vorgeschlagen, dass das Montagekodierelement der Klemmeinrichtung an einer Hakenbacke, insbesondere in einer Klemmausnehmung der Hakenbacke, angeordnet ist. Vorzugsweise ist das zumindest eine Montagekodierelement der Klemmeinrichtung einteilig mit der Hakenbacke ausgebildet. Es ist jedoch auch denkbar, dass das zumindest eine Montagekodierelement der Klemmeinrichtung separat zur Hakenbacke ausgebildet ist und mittels eines, einem Fachmann als sinnvoll erscheinenden Verbindung an der Hakenbacke fixiert ist. Bevorzugt ist das Montagekodierelement der Klemmeinrichtung an einer Klemmfläche der Klemmeinrichtung angeordnet, insbesondere direkt angrenzend an die Klemmfläche, die die Klemmausnehmung zumindest teilweise begrenzt. Bevorzugt ist das zumindest eine Montagekodierelement der Klemmeinrichtung als Fortsatz ausgebildet. Es ist jedoch auch denkbar, dass das zumindest eine Montagekodierelement der Klemmeinrichtung eine andere, einem Fachmann als sinnvoll erscheinende Ausgestaltung aufweist. Das zumindest eine Montagekodierelement der Klemmeinrichtung kann symmetrisch oder asymmetrisch zu einer Mittelebene, insbesondere einer Symmetrieebene, der Hakenbacke an der Hakenbacke angeordnet sein.

Vorzugsweise verläuft die Mittelebene, insbesondere die Symmetrieebene, der Hakenbacke zumindest im Wesentlichen parallel zur Abtriebsachse und/oder umfasst diese. Denkbar ist auch eine relativ zur Mittelebene, insbesondere zur Symmetrieebene, der Hakenbacke beabstandete Anordnung des zumindest einen Montagekodierelements der Klemmeinrichtung an der Hakenbacke. Mittels der erfindungsgemäßen Ausgestaltung kann vorteilhaft eine kompakte Ausgestaltung realisiert werden. Es kann vorteilhaft ein zuverlässiger Schutz des Montagekodierelements der Klemmeinrichtung vor Beschädigungen ermöglicht werden, insbesondere durch eine Anordnung des zumindest einen Montagekodierelements in der Klemmausnehmung der Hakenbacke.

Zudem wird ein Werkzeugmaschinensystem umfassend zumindest eine erfindungsgemäße Werkzeugmaschine mit einer Werkzeugaufnahmeeinrichtung und eine in der Werkzeugaufnahmeeinrichtung aufnehmbare Werkzeugeinrichtung vorgeschlagen, wobei die Werkzeugaufnahmeeinrichtung die Werkzeugeinrichtung derart an der Werkzeugmaschine hält, dass die Abtriebsachse der Werkzeugmaschine und eine Werkzeugdrehachse im Wesentlichen zusammenfallen, insbesondere koaxial sind.

Insbesondere kann die zumindest eine Mitnahmeeinrichtung zumindest einen Drehmomentübertragungsbereich zum Übertagen eines Drehmoments in Umfangsrichtung um die Abtriebsachse auf die Werkzeugeinrichtung aufweisen.

Vorzugsweise kann die Werkzeugeinrichtung eine Werkzeugdrehachse und eine Anschlusseinrichtung mit einer Ausnehmung aufweisen, welche dazu vorgesehen ist, die Werkzeugaufnahmeeinrichtung der Handwerkzeugmaschine in Umfangsrichtung der Abtriebsachse zumindest teilweise, insbesondere vollständig, zu umgreifen. Bevorzugt greifen/greift zumindest die Mitnahmeeinrichtung und/oder die Klemmeinrichtung der Werkzeugaufnahmeeinrichtung in einem an der Werkzeugaufnahmeeinrichtung angeordneten Zustand zumindest teilweise in die Ausnehmung der Anschlusseinrichtung der Werkzeugeinrichtung ein. Die Mitnahmeeinrichtung ist vorzugsweise dazu vorgesehen, zumindest teilweise an einem die Ausnehmung der Anschlusseinrichtung der Werkzeugeinrichtung begrenzenden Randbereich der Werkzeugeinrichtung anzuliegen, insbesondere in einem an der Werkzeugaufnahmeeinrichtung angeordneten Zustand der Werkzeugeinrichtung.

Bevorzugt kann die Werkzeugeinrichtung zumindest einen Drehmomentaufnahmebereich aufweisen, welcher von der Werkzeugdrehachse radial beabstandet ist.

Weiter bevorzugt kann der Drehmomentaufnahmebereich die Ausnehmung in radialer Richtung der Werkzeugdrehachse zumindest abschnittsweise begrenzen. Vorzugsweise begrenzt der Drehmomentaufnahmebereich der Werkzeugeinrichtung zumindest teilweise, insbesondere vollständig, die Ausnehmung der Anschlusseinrichtung der Werkzeugeinrichtung.

Ferner bevorzugt können die Mitnahmeeinrichtung und die Klemmeinrichtung dazu vorgesehen sein, durch die Ausnehmung der Werkzeugeinrichtung hindurchzugreifen und die Werkzeugeinrichtung mittels der im Wesentlichen in radialer Richtung der Abtriebsachse beweglichen Klemmeinrichtung mit der Werkzeugaufnahmeeinrichtung zu klemmen.

Besonders bevorzugt kann die Klemmeinrichtung auf die Werkzeugeinrichtung im Bereich der Klemmfläche eine Kraftwirkung ausüben, wobei diese Kraftwirkung wenigstens eine Komponente in axialer Richtung der Werkzeugdrehachse aufweist.

Vorzugsweise kann die Klemmeinrichtung so gestaltet sein, dass sie ein ungewolltes Lösen der Werkzeugeinrichtung von der Werkzeugaufnahmeeinrichtung verhindert und einen einfachen Wechsel der Werkzeugeinrichtung ermöglicht.

Ferner kann es zweckmäßig sein, dass sich die Anschlusseinrichtung in axialer Richtung zwischen einer ersten Anschlussfläche und einer gegenüber der ersten Anschlussfläche abgewandten zweiten Anschlussfläche der Werkzeugeinrichtung erstreckt.

Insbesondere sind die Anschlussflächen der Werkzeugeinrichtung orthogonal zur Werkzeugdrehachse angeordnet.

Vorzugsweise bildet ein zumindest im Wesentlichen parallel zur Werkzeugdrehachse verlaufender Abstand zwischen den Anschlussflächen eine Materialstärke t der Anschlusseinrichtung.

Bevorzugt ist der zumindest eine Drehmomentaufnahmebereich zwischen den Anschlussflächen der Werkzeugeinrichtung angeordnet. Vorzugsweise ist eine die Ausnehmung begrenzende Antriebsfläche des Drehmomentaufnahmebereichs zwischen den Anschlussflächen der Werkzeugeinrichtung angeordnet. Vorzugsweise ist die Antriebsfläche des Drehmomentaufnahmebereichs zumindest im Wesentlichen parallel zur Werkzeugdrehachse ausgerichtet. Es ist jedoch auch denkbar, dass die Antriebsfläche des Drehmomentübertragungsbereichs relativ zur Werkzeugdrehachse geneigt angeordnet ist.

Die erste Anschlussfläche kann die Anschlusseinrichtung auf einer der Werkzeugmaschine zugewandten Seite in Richtung der Abtriebsachse begrenzen. Die Anschlussflächen können eben ausgeführt sein.

Es kann eine besonders kompakte Ausführung der Werkzeugeinrichtung in axialer Richtung ermöglicht werden.

Weiterhin kann es zweckmäßig sein, dass die Anschlusseinrichtung der Werkzeugeinrichtung zumindest zwei, insbesondere zumindest vier, Drehmomentaufnahmebereiche aufweist, welche zueinander rotationssymmetrisch um die Werkzeugdrehachse angeordnet sind. Insbesondere weist die Werkzeugaufnahmeeinrichtung zumindest zwei, insbesondere zumindest vier, Drehmomentübertragungsbereiche auf, welche zueinander rotationssymmetrisch um die Antriebsachse angeordnet sind. Insbesondere sind die Drehmomentaufnahmebereiche gegenüber den Drehmomentübertragungsbereichen korrespondierend, insbesondere konträr, ausgebildet, sodass insbesondere eine Negativform gebildet wird.

Die Drehmomentübertragungsbereiche sind in Umfangsrichtung um die Abtriebsachse A unter einem Winkel von 90° zueinander symmetrisch angeordnet, sodass die Werkzeugeinrichtung vier Drehlagen aufweist, mit denen es mit der Mitnahmeeinrichtung verbunden werden kann. Es ergibt sich vorteilhaft eine gute Bedienbarkeit. Vorzugsweise sind die Drehmomentübertragungsbereiche in einer n-zähligen, insbesondere zumindest einer vierzähligen, Drehsymmetrie um die Abtriebsachse angeordnet. Es ist jedoch auch denkbar, dass die Drehmomentübertragungsbereiche in einer anderen, einem Fachmann als sinnvoll erscheinenden n-zähligen Drehsymmetrie, wie beispielsweise einer zweizähligen, einer dreizähligen, einer fünfzähligen o. dgl. Drehsymmetrie um die Abtriebsachse angeordnet sind.

Des Weiteren kann es zweckmäßig sein, dass sich der Drehmomentaufnahmebereich in radialer Richtung der Antriebsachse wenigstens abschnittsweise zwischen einem ersten und einem zweiten radialen Abstand zu der Werkzeugdrehachse erstreckt und, dass wenigstens einer dieser Abschnitte zur Drehmomentübertragung von der Werkzeugmaschine auf die Werkzeugeinrichtung eingerichtet ist.

Es können auf besonders vorteilhafte Weise Drehmomente, die von der Werkzeugmaschine aufgebracht werden, über die Werkzeugaufnahmeeinrichtung auf die Werkzeugeinrichtung übertragen werden.

Es wird vorgeschlagen, dass die Werkzeugaufnahmeeinrichtung eine ebene, insbesondere kreisringförmige, Auflagefläche aufweist, die dazu vorgesehen ist, zumindest eine Anlagefläche und/oder eine die erste Anschlussfläche der Werkzeugeinrichtung in axialer Richtung zu stützen, sodass dass sich die Auflagefläche in radialer Richtung der Werkzeugdrehachse zwischen einem radialen Innenabstand und einem radialen Außenabstand von der Abtriebsachse erstreckt.

Der radiale Innenabstand kann einen die Auflagefläche begrenzenden Innenradius der Auflagefläche bilden. Der radiale Außenabstand kann einen die Auflagefläche begrenzenden Außenradius der Auflagefläche bilden.

Vorzugsweise weist die Anschlusseinrichtung der Werkzeugeinrichtung zumindest einen die Ausnehmung in radialer Richtung zumindest teilweise begrenzenden Klemmflügel auf, welcher im Wesentlichen in radialer Richtung zu der Werkzeugdrehachse durch eine erste Begrenzungskante, welche auf einem ersten, insbesondere minimalen, Begrenzungskreis um die Werkzeugdrehachse liegt, begrenzt ist.

Bevorzugt steht der Klemmflügel, insbesondere die erste Begrenzungskante des Klemmflügels, der Werkzeugeinrichtung in einem Befestigungszustand der Werkzeugeinrichtung mit der Werkzeugmaschine gegenüber dem radialen Innenabstand der Auflagefläche in radialer Richtung zur Abtriebsachse, insbesondere um bis zu 2 mm, vorzugsweise um bis zu 1 mm, bevorzugt um bis zu 0,6 mm, besonders bevorzugt um bis zu 0,1 mm, und/oder insbesondere mindestens 0,5 mm, vorzugsweise mindestens 0,9 mm, bevorzugt mindestens 1 mm, ab, sodass in diesem Bereich kein Stützmaterial zur Stützung des Klemmflügels vorhanden ist.

Der Klemmflügel soll dabei in radialer Richtung nicht, insbesondere nicht vollflächig, auf der Auflagefläche aufliegen, sodass der Klemmflügel zumindest abschnittsweise in axialer Richtung elastisch gebogen werden kann. Bevorzugt weist der Klemmflügel eine maximale einer Federrate entsprechende Richtgröße D von weniger als 400.000 N/mm auf. Bevorzugt weist der Klemmflügel eine maximale einer Federrate entsprechende Richtgröße D mit einem Wert aus einem Wertebereich von 10.000 N/mm bis 350.000 N/mm auf. Die maximale einer Federrate entsprechende Richtgröße D des Klemmflügels ergibt sich vorzugsweise aus folgendem Zusammenhang: $F = Dz$, wobei

$$D = \frac{3EI}{L^3}, z = \frac{FL^3}{3EI}, I = \frac{bh^3}{12}$$

mit L als, insbesondere gemittelte, maximale Erstreckung des Klemmflügels zwischen dem ersten Begrenzungskreis und dem zweiten Begrenzungskreis, mit b als maximaler tangentialer Erstreckung des Klemmflügels entlang des zweiten Begrenzungskreises und mit h als maximaler Materialstärke des Klemmflügels entlang der axialen Richtung der Werkzeugdrehachse a. Die maximale Materialstärke h kann vorzugsweise einem Wert aus einem Wertebereich von 0,5 mm bis 1,6 mm entsprechen. Vorzugsweise ist der Klemmflügel, insbesondere in einem an der Werkzeugaufnahmeeinrichtung angeordneten und durch die Klemmeinrichtung noch unbefestigten Zustand der Werkzeugeinrichtung, entlang einer zumindest im Wesentlichen parallel zur Abtriebsachse verlaufenden Richtung zumindest abschnittsweise relativ zur Auflagefläche beabstandet angeordnet. Insbesondere ist in axialer Richtung, insbesondere entlang der Abtriebsachse in Richtung der Werkzeugmaschine betrachtet, unterhalb der ersten Begrenzungskante des Klemmflügels keine Auflagefläche vorgesehen.

Es wird ferner vorgeschlagen, dass der zumindest eine Drehmomentübertragungsbereich der Werkzeugaufnahmeeinrichtung zwischen einer, insbesondere eine Auflagefläche bildenden, ersten Orthogonalebene und einer, insbesondere eine die Mitnahmeeinrichtung in axialer Richtung begrenzenden, zweiten Orthogonalebene der Werkzeugaufnahmeeinrichtung liegt, insbesondere angeordnet ist, wenn die Werkzeugeinrichtung an der Werkzeugmaschine befestigt ist.

Die Öffnung der Werkzeugaufnahmeeinrichtung kann dazu vorgesehen sein, einen die Öffnung, insbesondere zumindest teilweise, bedeckenden Klemmflügel der Werkzeugeinrichtung, insbesondere zumindest teilweise, aufzunehmen und eine Bewegung des Klemmflügels in axialer Richtung der Abtriebsachse, insbesondere entlang der Abtriebsachse in Richtung der Werkzeugmaschine betrachtet, zu ermöglichen. Es kann vorteilhaft eine elastische Verformung des zumindest einen Klemmflügels in axialer Richtung der Abtriebsachse zu der Werkzeugmaschine hin orientiert ermöglicht werden.

Die erste und die zweite Orthogonalebene sind um den Abstand T voneinander beabstandet. Vorzugsweise ist der Abstand T gegenüber der Materialstärke t der Anschlusseinrichtung der Werkzeugeinrichtung, welche durch eine maximale axiale Erstreckung der Drehmomentaufnahmebereiche begrenzt ist, in einem Verhältnis von bis zu 500%, insbesondere bis zu 350%, vorzugsweise bis zu 200%, bevorzugt bis zu 150% besonders bevorzugt bis zu 100%. Es kann besonders vorteilhaft die Werkzeugeinrichtung mit der Mitnahmeeinrichtung verbunden, insbesondere an der Mitnahmeeinrichtung zentriert, werden.

Es wird weiter vorgeschlagen, dass die Werkzeugeinrichtung einen Arbeitsbereich aufweist, welcher dazu eingerichtet ist auf ein Werkstück oder eine Werkstückanordnung einzuwirken.

Insbesondere kann der Arbeitsbereich derart an der Anschlusseinrichtung angeordnet sein, dass der Arbeitsbereich in einem Befestigungszustand gegenüber der Anschlusseinrichtung entlang der Werkzeugdrehachse in einer zu der Werkzeugaufnahmeeinrichtung der Werkzeugmaschine hin orientierten Richtung absteht.

Vorzugsweise kann der Arbeitsbereich eine Anlagefläche aufweisen, welche in einem Befestigungszustand der Werkzeugeinrichtung mit der Auflagefläche der Werkzeugmaschine eine in Umfangsrichtung kraftschlüssige Auflage zur Werkzeugmaschine bildet. Es ist denkbar, dass der Arbeitsbereich flexibel ausgebildet ist. Bevorzugt kann der Arbeitsbereich gegenüber der Anschlusseinrichtung aus einem verschiedenen Material ausgebildet sein, wobei vorzugsweise das Material des Arbeitsbereichs elastischer ist als das Material der Anschlusseinrichtung. Insbesondere kann die Werkzeugeinrichtung in axialer Richtung am Arbeitsbereich eingespannt werden. Hierdurch kann der Arbeitsbereich Schwingungen der Werkzeugeinrichtung dämpfen.

Ferner kann es zweckmäßig sein, dass die Anschlusseinrichtung zumindest zwei Klemmflügel aufweist, welche im Wesentlichen in radialer Richtung zu der Werkzeugdrehachse jeweils durch eine eine Erstreckung des Klemmflügels in Umfangsrichtung der Werkzeugdrehachse bildende erste Begrenzungskante, welche auf einem, insbesondere minimalen, ersten Begrenzungskreis um die Werkzeugdrehachse liegt, begrenzt sind.

Die erste Begrenzungskante kann aus mehreren Begrenzungskantenabschnitten gebildet sein. Die Begrenzungskantenabschnitte können im Wesentlichen auf dem ersten Begrenzungskreis liegen und eine minimale radiale Erstreckung des Klemmflügels begrenzen.

Die Begrenzungskante kann einen Begrenzungskantenabschnitt aufweisen, in welchem das Werkzeugmontagekodierelement angeordnet ist. Jeder Klemmflügel kann eine erste Begrenzungskante aufweisen.

Insbesondere kann die Klemmeinrichtung, insbesondere zumindest eine Hakeneinrichtung der Klemmeinrichtung, eine Umfangsfläche aufweisen, welche eine radiale Erstreckung der Klemmeinrichtung begrenzt.

Vorzugsweise kann ein Abstand von zumindest zwei zueinander benachbarter erster Begrenzungskanten in Umfangsrichtung der Werkzeugdrehachse kleiner sein als ein Abstand einer, insbesondere minimalen, Erstreckung der Umfangsfläche der Klemmeinrichtung in Umfangsrichtung.

Hierdurch kann die Werkzeugeinrichtung bei einem Aufsetzvorgang besonders vorteilhaft grobzentriert bzw. vorzentriert werden.

Weiterhin kann es zweckmäßig sein, dass ein Drehmomentübertragungsbereich, bevorzugt mehrere, besonders bevorzugt alle Drehmomentübertragungsbereiche der Werkzeugmaschine die Drehmomentaufnahmebereiche der Werkzeugeinrichtung wenigstens abschnittsweise in Form einer Punktberührung, bevorzugt in Form einer Linienberührung und besonders bevorzugt in Form einer Flächenberührung kontaktiert. Hierdurch kann der zumindest eine Drehmomentübertragungsbereich die Werkzeugeinrichtung besonders vorteilhaft kontaktieren.

Zudem wird eine Werkzeugeinrichtung mit einem Arbeitsbereich vorgeschlagen, welcher dazu eingerichtet ist, auf ein Werkstück oder eine Werkstückanordnung einzuwirken, und mit einer Anschlusseinrichtung, welcher zur Aufnahme von Antriebskräften eingerichtet ist, und mit einen den Arbeitsbereich und die Anschlusseinrichtung verbindenden Verbindungsbereich, welcher dazu eingerichtet ist, Antriebskräfte der Werkzeugmaschine mittels des Verbindungsbereichs von der Anschlusseinrichtung auf den Arbeitsbereich zu übertragen, zur Verwendung mit einer Werkzeugmaschine.

Des Weiteren wird vorgeschlagen, dass die Werkzeugeinrichtung zumindest ein Werkzeugmontagekodierelement aufweist, das dazu vorgesehen ist, in einem an der Werkzeugaufnahmeeinrichtung angeordneten Zustand der Werkzeugeinrichtung mit zumindest einem Montagekodierelement der Werkzeugaufnahmeeinrichtung zusammenzuwirken. Vorzugsweise ist das Werkzeugmontagekodierelement der Werkzeugeinrichtung als mechanisches Werkzeugmontagekodierelement ausgebildet, wie beispielsweise als Ausnehmung, als Fortsatz, als Nut, als Steg, als Prägung o. dgl. Es ist jedoch auch denkbar, dass das Werkzeugmontagekodierelement der Werkzeugeinrichtung als elektronisches Werkzeugmontagekodierelement ausgebildet ist, wie beispielsweise als RFID-Chip, als NFC-Chip, als Funkwellenauswertegerät, als elektronisches Lesegerät (Strichcodelesegerät, Datamatrixcodelesegerät etc.) o.

dgl. oder dass das Werkzeugmontagekodierelement der Werkzeugeinrichtung als eine Kombination aus einem mechanischen und einem elektronischen Werkzeugmontagekodierelement ausgebildet ist. Bevorzugt ist das Werkzeugmontagekodierelement der Werkzeugeinrichtung dazu vorgesehen, gemäß einem Schlüssel-Schlüsselloch-Prinzip mit zumindest einem Montagekodierelement der Mitnahmeeinrichtung oder mit zumindest einem Montagekodierelement der Klemmeinrichtung zusammenzuwirken, insbesondere in einem an der Werkzeugaufnahmeeinrichtung angeordneten Zustand der Werkzeugeinrichtung. Vorzugsweise umfasst die Werkzeugeinrichtung eine Vielzahl an Werkzeugmontagekodierelement, insbesondere zumindest zwei, bevorzugt zumindest drei und ganz bevorzugt zumindest vier. Die Werkzeugeinrichtung umfasst vorzugsweise in Abhängigkeit von einer Anzahl an Montagekodierelementen der Werkzeugaufnahmeeinrichtung eine gleiche Anzahl. Es ist jedoch auch denkbar, dass die Werkzeugeinrichtung eine Anzahl an Werkzeugmontagekodierelementen aufweist, die von einer Anzahl an Montagekodierelementen der Werkzeugaufnahmeeinrichtung abweicht, insbesondere größer ist. Das zumindest eine Werkzeugmontagekodierelement der Werkzeugeinrichtung kann bevorzugt, insbesondere zusätzlich zu einer Montagekodierfunktion, als Spannungsentlastungskerbe ausgebildet sein oder wirken. Vorzugsweise ist zu einer Montage und/oder Befestigung der Werkzeugeinrichtung an der Werkzeugaufnahmeeinrichtung eine mechanische und/oder elektronische Auswertung des zumindest einen Werkzeugmontagekodierelements der Werkzeugaufnahmeeinrichtung vorzusehen, insbesondere mittels des zumindest einen Montagekodierelements der Werkzeugaufnahmeeinrichtung, um vorzugsweise eine Montage und/oder Befestigung der Werkzeugeinrichtung an der Werkzeugaufnahmeeinrichtung freizugeben. Es ist denkbar, dass eine Bewegung der Klemmeinrichtung bis zu einer Freigabe einer Montage und/oder Befestigung sperrbar ist, insbesondere mechanisch und/oder elektronisch. Es ist denkbar, dass das zumindest eine Werkzeugmontagekodierelement der Werkzeugeinrichtung zu einer Betätigung, insbesondere zu einer Bewegung, des zumindest einen Montagekodierelements der Werkzeugaufnahmeeinrichtung vorgesehen ist, insbesondere um eine Freigabe einer Montage und/oder einer Befestigung der Werkzeugeinrichtung an der Werkzeugaufnahmeeinrichtung zu ermöglichen. Alternativ oder zusätzlich ist es denkbar, dass die Werkzeugeinrichtung zumindest ein weiteres Werkzeugmontagekodierelement, insbesondere eine Prägung, aufweist, das dazu vorgesehen ist, zumindest ein weiteres Montagekodierelement der Werkzeugaufnahmeeinrichtung, das insbesondere beweglich gelagert ist, insbesondere an der Auflagefläche, zu betätigen, insbesondere zu bewegen, um eine Freigabe einer Montage und/oder einer Befestigung der Werkzeugeinrichtung an der Werkzeugaufnahmeeinrichtung zu ermöglichen. Mittels der erfindungsgemäßen Ausgestaltung kann vorteilhaft eine fehlerhafte Montage der Werkzeugeinrichtung an der Werkzeugaufnahmeeinrichtung weitestgehend vermieden werden. Es kann vorteilhaft eine Anordnung von für einen sicheren Betrieb der Werkzeugmaschine ungeeigneten Werkzeugeinrichtungen an der Werkzeugaufnahmeeinrichtung entgegengewirkt werden. Es kann vorteilhaft beispielsweise eine Anordnung einer Werkzeugeinrichtung, die für Werkzeugmaschinen mit geringer maximaler Drehzahl vorgesehen ist, an einer Werkzeugmaschine mit hoher maximaler Drehzahl entgegengewirkt werden. Es kann vorteilhaft eine hohe Bedienersicherheit realisiert werden.

Ferner wird vorgeschlagen, dass das zumindest eine Werkzeugmontagekodierelement an zumindest einem Klemmflügel der Anschlusseinrichtung angeordnet ist. Bei einer Ausgestaltung des am Klemmflügel angeordneten Werkzeugmontagekodierelements als Ausnehmung ist das Werkzeugmontagekodierelement vorzugsweise derart in den Klemmflügel eingebracht, dass eine Widerstandseigenschaft des Klemmflügels gegen eine plastische Verformung infolge einer betrieblichen Belastung maximal bis zu einer Belastungsgrenze des Klemmflügels verringert ist. Es ist denkbar, dass an dem Klemmflügel zumindest ein Versteifungselement, wie beispielsweise eine Versteifungsrippe o. dgl., angeordnet ist. Das zumindest eine an dem Klemmflügel angeordnete Werkzeugmontagekodierelement ist vorzugsweise dazu vorgesehen, in einem an der Werkzeugaufnahmeeinrichtung angeordneten Zustand der Werkzeugeinrichtung mit dem zumindest einen an der Hakenbacke angeordneten Montagekodierelement der Klemmeinrichtung zusammenzuwirken. Mittels der erfindungsgemäßen Ausgestaltung kann vorteilhaft eine sichere Montage- oder Befestigungskodierung gemäß einem Schlüssel-Schlüsselloch-Prinzip erreicht werden.

Zudem wird vorgeschlagen, dass das zumindest eine Werkzeugmontagekodierelement entlang einer Radialachse eine maximale Erstreckung aufweist, die maximal einem Maximalabstand zwischen einem ersten Begrenzungskreis und einem zweiten Begrenzungskreis der Anschlusseinrichtung entspricht. Bevorzugt weist das zumindest eine an dem Klemmflügel angeordnete Werkzeugmontagekodierelement eine maximale Erstreckung entlang einer quer, insbesondere zumindest im Wesentlichen senkrecht, zur Werkzeugdrehachse verlaufenden Richtung, insbesondere einer Radialachse der Werkzeugeinrichtung, auf, die gleich groß oder kleiner ist als ein Maximalabstand zwischen einem ersten Begrenzungskreis und einem zweiten Begrenzungskreis der Werkzeugeinrichtung. Mittels der erfindungsgemäßen Ausgestaltung kann vorteilhaft eine zuverlässige und sichere Kodierung erreicht werden.

Des Weiteren wird vorgeschlagen, dass das zumindest eine Werkzeugmontagekodierelement in einem Winkelbereich zwischen einer Antriebskante und einer Kodierungskante der Anschlusseinrichtung an einem Klemmflügel der Anschlusseinrichtung angeordnet ist. Insbesondere weist der Winkelbereich eine maximale Erstreckung von weniger als 90°, bevorzugt von weniger als 60° und besonders bevorzugt von weniger als 40° auf. Mittels der erfindungsgemäßen Ausgestaltung kann vorteilhaft eine sichere Befestigungskodierung erreicht werden. Es kann vorteilhaft eine Befestigung der Werkzeugeinrichtung an ungeeigneten Werkzeugmaschinen weitestgehend vermieden werden. Es kann vorteilhaft eine Prävention vor Verletzungen eines Bedieners infolge einer Befestigung der Werkzeugeinrichtung an ungeeigneten Werkzeugmaschinen erreicht werden.

Zudem wird die Verwendung einer Werkzeugeinrichtung mit einer als Winkelschleifer ausgeführten Werkzeugmaschine vorgeschlagen, sodass die Werkzeugeinrichtung mit einer Rotationsgeschwindigkeit von mehr als 4.000 oder mehr als 10.000 oder mehr als 20.000 Umdrehungen pro Minute um die Abtriebsachse betreibbar ist.

Unter "betreibbar" soll in diesem Zusammenhang zuverlässig betreibbar verstanden werden, sodass eine Verwendung einer Werkzeugeinrichtung mit einer Werkzeugmaschine, insbesondere einem Winkelschleifer, einer gleichen oder zumindest annähernd ähnlich langen Verwendungszeit bzw. Standzeit der Werkzeugeinrichtung, wie beispielsweise einer mit einem Winkelschleifer verwendete Fieberschleifscheibe, entspricht. Insbesondere soll unter der Verwendungszeit bzw. Standzeit eine auf dem Gebiet der Schleifwerkzeuge übliche Standzeit eines mit einem Winkelschleifer angetriebenen Schleifmittels verstanden werden.

Es wird weiter vorgeschlagen, dass die Werkzeugeinrichtung einen, insbesondere stoffschlüssig und/oder formschlüssig, mit einem Trägerflansch der Werkzeugeinrichtung verbundenen Arbeitsbereich zur Bearbeitung von einem Werkstück aufweist. Hierdurch kann eine besonders vorteilhafte Trennung der Funktionen erreicht werden.

Die erfindungsgemäße Werkzeugmaschine, das erfindungsgemäße Werkzeugmaschinensystem und/oder die erfindungsgemäße Werkzeugeinrichtung sollen/soll hierbei nicht auf die oben beschriebene Anwendung und Ausführungsform beschränkt sein. Insbesondere können/kann die erfindungsgemäße Werkzeugmaschine, das erfindungsgemäße Werkzeugmaschinensystem und/oder die erfindungsgemäße Werkzeugeinrichtung zu einer Erfüllung einer hierin beschriebenen Funktionsweise eine von einer hierin genannten Anzahl von einzelnen Elementen, Bauteilen und Einheiten sowie Verfahrensschritten abweichende Anzahl im Rahmen des durch die Ansprüche definierten Schutzumfangs aufweisen. Zudem sollen bei den in dieser Offenbarung angegebenen Wertebereichen auch innerhalb der genannten Grenzen liegende Werte als offenbart und als beliebig einsetzbar gelten.

Zeichnungen

Weitere Vorteile ergeben sich aus der folgenden Zeichnungsbeschreibung. In der Zeichnung sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Hierbei zeigt:

Fig. 1     einen Schnitt durch die erfindungsgemäße Werkzeugaufnahmeeinrichtung einer Handwerkzeugmaschine mit einer Werkzeugeinrichtung,

Fig. 2     einen weiteren Schnitt durch die Werkzeugaufnahmeeinrichtung mit einer Werkzeugeinrichtung in einem Befestigungszustand,

Fig. 3     einen weiteren Schnitt durch die Werkzeugaufnahmeeinrichtung in einem Lösezustand,

Fig. 4     eine Ansicht auf die Werkzeugaufnahmeeinrichtung aus Figur 1,

Fig. 5a     eine Ansicht auf einen Teil der Werkzeugaufnahmeeinrichtung aus Figur 4,

Fig. 5b     eine Ansicht eines Teils einer ersten alternativen Werkzeugaufnahmeeinrichtung,

Fig. 5c     eine Ansicht eines Teils einer zweiten alternativen Werkzeugaufnahmeeinrichtung,

Fig. 5d     eine Ansicht eines Teils einer dritten alternativen Werkzeugaufnahmeeinrichtung,

Fig. 5e     eine Ansicht eines Teils einer vierten alternativen Werkzeugaufnahmeeinrichtung,

Fig. 6     eine perspektivische Ansicht auf die Werkzeugaufnahmeeinrichtung aus Figur 3,

Fig. 7     eine perspektivische Ansicht auf die Werkzeugaufnahmeeinrichtung aus Figur 2

Fig. 8     eine weitere perspektivische Ansicht auf die Werkzeugaufnahmeeinrichtung,

Fig. 9     eine weitere perspektivische Ansicht auf die Werkzeugaufnahmeeinrichtung mit einer Werkzeugeinrichtung,

Fig. 10     eine weitere perspektivische Ansicht auf die Werkzeugaufnahmeeinrichtung mit einer weiteren Werkzeugeinrichtung,

Fig. 11     eine Ansicht auf einer exemplarischen Werkzeugeinrichtung und

Fig. 12     eine Ansicht auf die in der Werkzeugaufnahmeeinrichtung aus Figur 1 aufgenommene Werkzeugeinrichtung aus Figur 11,

Fig. 13     eine Schnittansicht der Werkzeugaufnahmeeinrichtung entlang einer ersten Orthogonalebene aus Figur 1,

Fig. 14     ein Trägerflansch einer Ausführungsform einer Werkzeugeinrichtung,

Fig. 15     eine vergrößerte Ansicht eines Klemmflügels des Trägerflanschs aus Figur 11,

Fig. 16a     eine Ausgestaltung einer Werkzeugeinrichtung und/oder einer Werkzeugaufnahmeeinrichtung mit zumindest einem federbelasteten Sicherungs- und/oder Positionierelement,

Fig. 16b    eine zur Figur 16a alternative Ausgestaltung der Werkzeugeinrichtung und/oder der Werkzeugaufnahmeeinrichtung mit zumindest einem federbelasteten Sicherungs- und/oder Positionierelement,

Fig. 17    eine Detailansicht einer Hakenbacke der Werkzeugaufnahmeeinrichtung mit einem daran angeordneten Montagekodierelement einer Klemmeinrichtung der Werkzeugaufnahmeeinrichtung und

Fig. 18    eine tabellarische Auflistung von möglichen Anordnungen und Ausgestaltungen von Werkzeugmontagekodierelementen der Werkzeugeinrichtung.

Beschreibung der Ausführungsbeispiele

In den folgenden Figuren sind gleiche Bauteile mit den gleichen Bezugszeichen versehen.

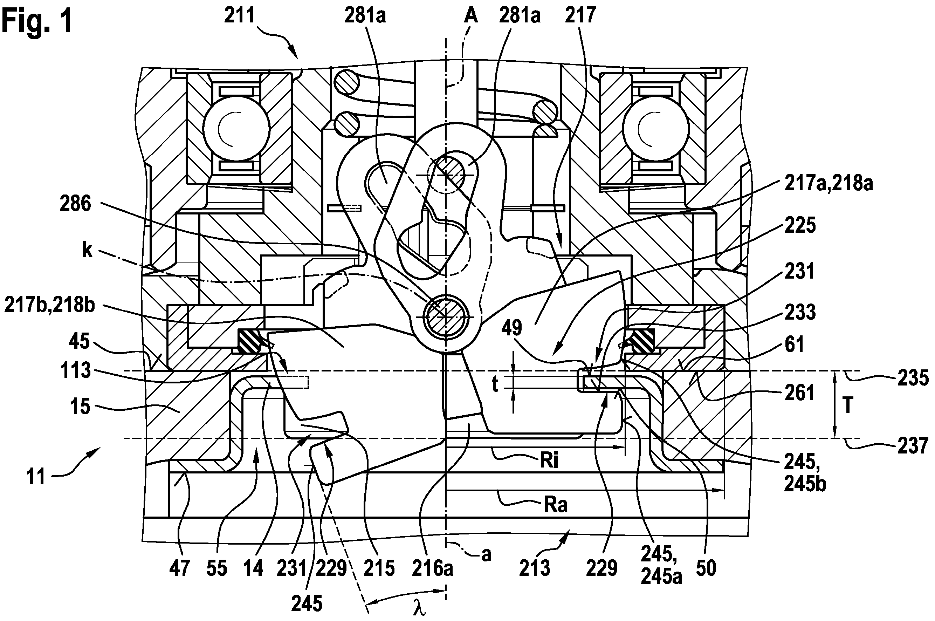

Figur 1 zeigt ein Werkzeugmaschinensystem bzw. ein Bearbeitungssystem mit einer um eine Abtriebsachse A rotierend bewegbare Werkzeugaufnahmeeinrichtung 213 und einer Werkzeugeinrichtung 11. Die Werkzeugaufnahmeeinrichtung 213 ist dazu eingerichtet, eine Werkzeugeinrichtung 11 derart an der Werkzeugmaschine 211 zu halten, dass die Abtriebsachse A und eine fiktive, geometrische Werkzeugdrehachse a im Wesentlichen zusammenfallen.

**Werkzeugeinrichtung:**

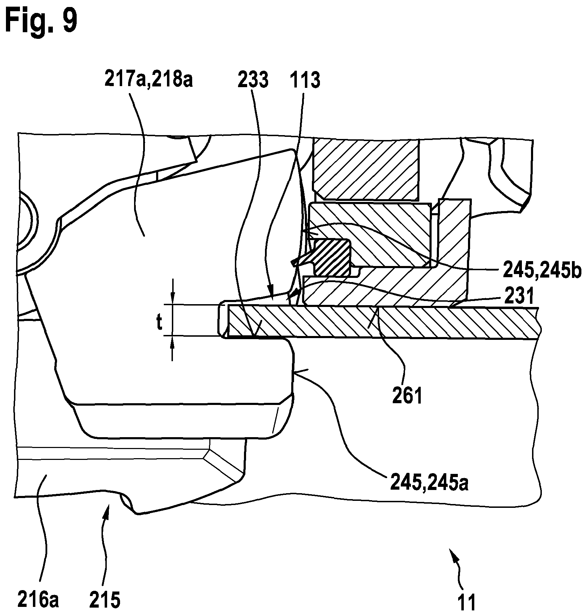

Wie Figur 1, Figur 2 und Figuren 9 bis 12 zeigen, kann die Werkzeugeinrichtung 11 flach und zumindest im Wesentlichen scheibenförmigen ausgeführt sein. Die Werkzeugeinrichtung 11 weist eine fiktive Werkzeugdrehachse a und eine Anschlusseinrichtung 113 zur Verbindung der Werkzeugeinrichtung 11 mit einer Werkzeugaufnahmeeirichtung 213 der Werkzeugmaschine 211 und einen Arbeitsbereich 15 auf. Die Anschlusseinrichtung 113 und der Arbeitsbereich 15 sind vorzugsweise einteilig miteinander ausgebildet, insbesondere stoffschlüssig miteinander verbunden.

Die Werkzeugdrehachse a definiert einen Mittelpunkt der Werkzeugeinrichtung 11, um den sich die Werkzeugeinrichtung 11 im Betrieb mit einer Werkzeugmaschine 211 dreht. Die Anschlusseinrichtung 113 ist in einem radial innenliegenden Bereich der Werkzeugeinrichtung 11 um die Werkzeugdrehachse a angeordnet.

Die Anschlusseinrichtung 113 weist eine einen Materialdurchbruch durch die Werkzeugeinrichtung 11 bildende Ausnehmung 17 auf, welche sich in axialer Richtung der Werkzeugdrehachse a durch eine gesamte Materialstärke t der Anschlusseinrichtung 113 erstreckt. Die Ausnehmung 17 kann dazu vorgesehen sein, eine Mitnahmeeinrichtung 215 und eine Klemmeinrichtung 217 der Werkzeugaufnahmeeinrichtung 213, vollständig zu umgreifen. Die Ausnehmung 17 umgibt die Werkzeugdrehachse a in zumindest einer Ebene, wie zum Beispiel einer sich orthogonal zu der Werkzeugdrehachse a erstreckenden Orthogonalebene, vollständig.

Die Anschlusseinrichtung 113 ist an der Werkzeugaufnahmeeinrichtung 213 derart befestigbar, dass eine Abtriebsachse A einer Antriebswelle und die Werkzeugdrehachse a der Werkzeugeinrichtung 11 im Wesentlichen zusammenfallen.

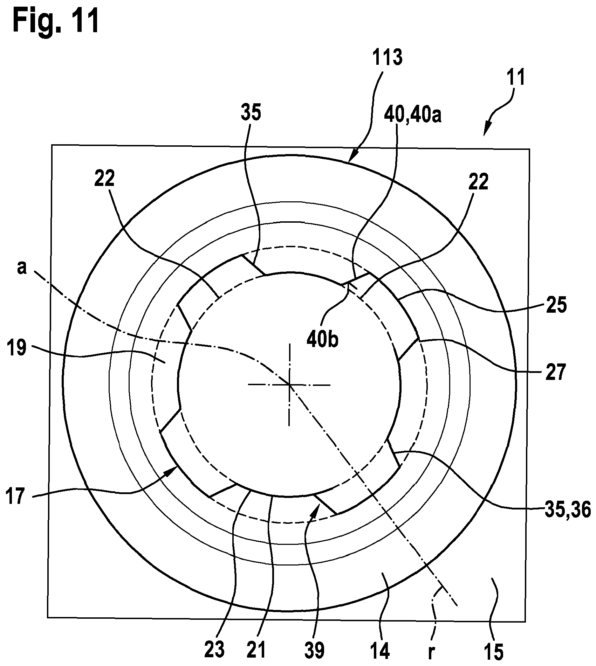

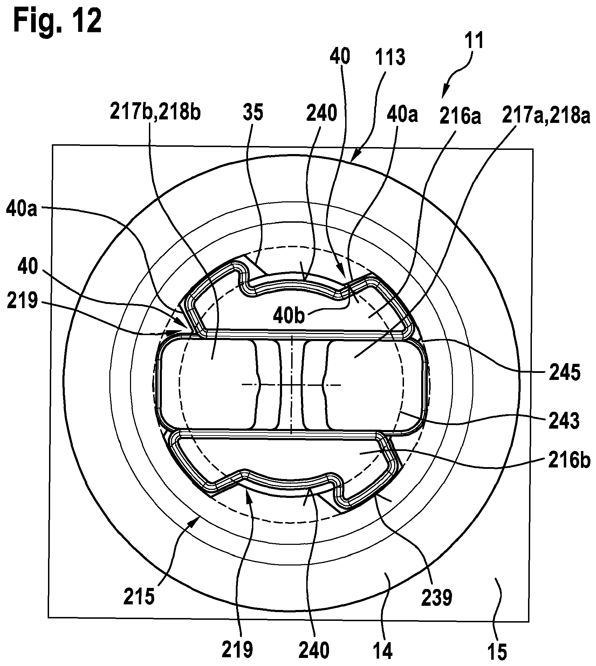

Die Anschlusseinrichtung 113 weist ferner vier Klemmflügel 19 auf, die sich in radialer Richtung zur Werkzeugdrehachse a hin erstrecken und die Ausnehmung 17 der Anschlusseinrichtung 113 in radialer Richtung zumindest abschnittsweise begrenzen, wie in Figuren 11 und 12 zu sehen ist. Die Klemmflügel 19 werden insbesondere im Wesentlichen in radialer Richtung zu der Werkzeugdrehachse a durch jeweils eine erste Begrenzungskante 21, welche auf einem ersten, insbesondere minimalen, Begrenzungskreis 23 um die Werkzeugdrehachse a liegt, begrenzt. Alternativ kann die Anschlusseinrichtung 113 jedoch auch weniger als vier Klemmflügel 19, wie beispielsweise zwei Klemmflügel 19 oder mehr als vier Klemmflügel 19, wie beispielsweise sechs Klemmflügel 19, aufweisen.

Die Klemmflügel 19 werden, insbesondere im Wesentlichen, in radialer Richtung und/oder in Umfangsrichtung der Werkzeugdrehachse a durch jeweils eine zweite Begrenzungskante 25, welche auf einem zweiten, insbesondere maximalen, Begrenzungskreis 27 um die Werkzeugdrehachse a liegt, begrenzt. Insbesondere ist ein Durchmesser des ersten Begrenzungskreises 23 kleiner als ein Durchmesser des zweiten Begrenzungskreises 27. Bevorzugt begrenzen die ersten Begrenzungskanten 25 und die zweiten Begrenzungskanten 25 zumindest abschnittsweise die Ausnehmung 17 in radialer Richtung der Werkzeugdrehachse a. Der erste Begrenzungskreis 23 ist konzentrisch zu dem zweiten Begrenzungskreis 27 um die Werkzeugdrehachse a angeordnet. Der erste Durchmesser der ersten Begrenzungskante 23 ist in etwa 22 mm groß, wodurch die Werkzeugeinrichtung 11 auch auf herkömmliche Werkzeugmaschinen, insbesondere Winkelschleifer, passt, sodass eine Rückwärtskompatibilität gewährleistet wird. Alternativ kann der erste Durchmesser der ersten Begrenzungskante 23 auch kleiner als 22 mm sein, sodass die Werkzeugeinrichtung auch auf herkömmliche Werkzeugmaschinen, insbesondere Winkelschleifer, von kleineren Abmessungen passt.

Die zweite Begrenzungskante 25 kann dazu eingerichtet sein die Werkzeugeinrichtung 11 in radialer Richtung zu zentrieren und zu stützen.

Die erste Begrenzungskante 21 kann entsprechend einem Kreisbogenverlaufs des Begrenzungskreises 23 um die Werkzeugdrehachse a gekrümmt sein. Die zweite Begrenzungskante 25 kann entsprechend einem Kreisbogenverlaufs des Begrenzungskreis 27 um die Werkzeugdrehachse a gekrümmt sein.

Die Anschlusseinrichtung 113 weist einen Drehmomentaufnahmebereich 40 auf. Der Drehmomentaufnahmebereich 40 weist eine, insbesondere geradlinige oder gekrümmte, Antriebskante 40a und/oder eine, insbesondere ebene oder gekrümmte, Antriebsfläche 40b auf. Dadurch kann der Drehmomentaufnahmebereich 40 der Werkzeugeinrichtung 11 einen Drehmomentübertragungsbereich 219 der Werkzeugaufnahmeeinrichtung 213, insbesondere in Form einer Punkt-, vorzugsweise in Form einer Linien-, bevorzugt in Form einer Flächenberührung, kontaktieren. Der Drehmomentübertragungsbereich 219 ist beabstandet zu der Werkzeugdrehachse a angeordnet.

Der Drehmomentaufnahmebereich 40 der Anschlusseinrichtung 113 ist dazu vorgesehen Antriebskräfte von der Werkzeugmaschine 211 auf die Werkzeugeinrichtung 11 zu übertragen. Der Drehmomentaufnahmebereich 40 ist in axialer Richtung der Werkzeugdrehachse a zwischen der sich durch die gesamte Materialstärke der Werkzeugeinrichtung 11 erstreckenden Ausnehmung 17 der Werkzeugeinrichtung 11 angeordnet ist. Die Ausnehmung 17 weist zumindest vier Drehmomentaufnahmebereiche 40 auf, welche zueinander rotationssymmetrisch um die Werkzeugdrehachse a angeordnet sind, insbesondere in einer n-zähligen Drehsymmetrie. Es ist jedoch auch denkbar, dass die Werkzeugeinrichtung eine von vier abweichende Anzahl an Drehmomentaufnahmebereichen 40 aufweist, wie beispielsweise zwei, drei oder mehr als vier Drehmomentaufnahmebereichen 40.

Die Antriebsfläche 40b, insbesondere ein Antriebsflächenbereich der Antriebsfläche 40b, ist, dazu vorgesehen, mit der Werkzeugaufnahmeeinrichtung 213 der Werkzeugmaschine 211 eine formschlüssige und/oder kraftschlüssige, insbesondere die Werkzeugeinrichtung 11 rotatorisch betreibbare, Verbindung bereitzustellen. Die Antriebsfläche 40b ist in axialer Richtung der Werkzeugdrehachse a durch zumindest die Antriebskante 40a begrenzt. Zumindest der Antriebsflächenbereich der Antriebsfläche 40b ist eben ausgeführt.

Die Antriebsfläche 40b ist zu einer eine Radialachse r bildenden radialen Richtung zu der Werkzeugdrehachse a, insbesondere unter einem Winkel von bis zu 30°, wie beispielsweise 25°, angewinkelt, wie in den Figuren 11 und 12 zu sehen ist.

Die Anschlusseinrichtung 113 weist eine erste Anschlussfläche 49 und eine gegenüber der ersten Anschlussfläche 49 abgewandte zweite Anschlussfläche 50 auf. Diese Anschlussflächen 49, 50 sind orthogonal zur Werkzeugdrehachse a angeordnet und begrenzen vorzugsweise eine Materialstärke t der Anschlusseinrichtung 113 bilden. Der zumindest eine Drehmomentaufnahmebereich 40 erstreckt sich zwischen den Anschlussflächen 49, 50.

Die erste Begrenzungskante 21 ist in Umfangsrichtung um die Werkzeugdrehachse a durch eine Kodierungskante 35, insbesondere einen Kodierungskantenbereich der Kodierungskante 35, und eine Antriebskante 40a, insbesondere einen Antriebskantenbereich der Antriebskante 40a, begrenzt, wie beispielsweise in Figur 11 oder Figur 12 zu sehen ist. Zumindest der Antriebskantenbereich der Antriebskante 40a ist geradlinig ausgebildet. Zumindest der Kodierungskantenbereich der Kodierungskante 35 ist geradlinig ausgebildet. Zumindest die Kodierungskante 35 ist im Wesentlichen gekrümmt ausgebildet.

Die Kodierungskante 35 verbindet die erste Begrenzungskante 21 mit der zweiten Begrenzungskante 25. Die Antriebskante 40a verbindet dabei den ersten Begrenzungskreis 21 mit einer benachbarten zweiten Begrenzungskante 25. Die Kodierungskante 35 und die Antriebskante 40a erstrecken sich in einer Orthogonalebene quer zur Werkzeugdrehachse a, insbesondere im Wesentlichen in radialer Richtung. Insbesondere erstreckt sich die Orthogonalebene im Wesentlichen orthogonal zu der Werkzeugdrehachse a

Der erste Begrenzungskreis 23 weist zumindest eine zwischen zwei in Umfangsrichtung benachbarten ersten Begrenzungskanten 21 liegende fiktive Projektionskante 22 auf, welche auf dem ersten Begrenzungskreis 23 liegt und in Umfangsrichtung um die Werkzeugdrehachse a konzentrisch zu dem ersten Begrenzungskreis 23 verläuft. Dabei ist eine Erstreckung in Umfangsrichtung der zumindest einen auf dem ersten Begrenzungskreis 23 liegenden ersten Begrenzungskante 21 um bis zu 10 % größer, als eine Erstreckung der auf dem ersten Begrenzungskreis 23 liegenden benachbarten fiktiven Projektionskante 22. Vorzugsweise ist eine, insbesondere jede, Projektionskante 22 kleiner als eine zu der Projektionskante 22 benachbarte erste Begrenzungskante 21. Hierdurch kann eine besonders vorteilhafte Zentrierung, insbesondere Vorzentrierung bzw. Grobzentrierung, der Werkzeugeinrichtung 11 erreicht werden.

Die Klemmflügel 19 können insbesondere im Wesentlichen in radialer Richtung zu der Werkzeugdrehachse a durch jeweils eine zweite Begrenzungskante 25, welche auf einem zweiten, insbesondere maximalen, Begrenzungskreis 27 um die Werkzeugdrehachse a liegt, begrenzt sein.

Die Begrenzungskanten 21, 25, die Kodierungskanten 35 und die Antriebskanten 40a bilden dabei eine Begrenzungskontur der Ausnehmung 17. Insbesondere bilden die erste Begrenzungskante 21, die Kodierungskante 35 und die Antriebskante 40a eine Kontur des Klemmflügels 19. Die Antriebskante 40a und die Kodierungskante 35 begrenzen die erste Begrenzungskante 21 in Umfangsrichtung um die Werkzeugdrehachse a und schließen an die erste Begrenzungskante 21 an.

Die Klemmflügel 19 sind in Umfangsrichtung um die Werkzeugdrehachse a symmetrisch angeordnet. Die Klemmflügel 19 sind in Umfangsrichtung um die Werkzeugdrehachse a um 90° versetzt zueinander angeordnet, sodass sich vier Drehstellungen bei einer vollständigen Umdrehung um 360° der Werkzeugeinrichtung 11 um die Werkzeugdrehachse a ergeben. Alternativ können die Klemmflügel 19 in Umfangsrichtung um die Werkzeugdrehachse a um 180° oder 60° versetzt zueinander angeordnet sein, sodass sich zwei oder sechs Drehstellungen bei einer vollständigen Umdrehung um 360° der Werkzeugeinrichtung 11 um die Werkzeugdrehachse a ergeben.

Die Klemmflügel 19 erstrecken sich zumindest im Wesentlichen entlang einer in radialer Richtung der Werkzeugdrehachse a erstreckenden Orthogonalebene. Insbesondere erstreckt sich die Orthogonalebene im Wesentlichen orthogonal zu der Werkzeugdrehachse a.

Insbesondere weist die Begrenzungskontur der Ausnehmung 17 zumindest abschnittsweise eine als die Kodierungskante 35a ausgeführte Kodierung auf, welche um die Werkzeugdrehachse a symmetrisch ausgeführt ist. Die Begrenzungskontur kann vorteilhafterweise um die Werkzeugdrehachse asymmetrisch, insbesondere nicht achssymmetrisch, ausgeführt sein. In einer vorteilhaften Ausführungsform entsprechend Figuren 11 und 12 kann die Begrenzungskontur um die Werkzeugdrehachse a symmetrisch ausgeführt sein, insbesondere gemäß einer n-zähligen Drehsymmetrie.

In einer in Figur 11 und Figur 12 dargestellten Ausführungsform erstreckt sich der Klemmflügel 19 zumindest im Wesentlichen entlang einer Orthogonalebene zu der Werkzeugdrehachse a und ist gegenüber einer eine Radialachse r bildenden radialen Richtung der Werkzeugdrehachse a einer durch eine radiale und eine axiale Richtung der Werkzeugdrehachse a aufgespannten Ebene symmetrisch, insbesondere achsensymmetrisch.

In einer alternativen Ausführungsform kann der Klemmflügel 19 gegenüber einer durch eine radiale und eine axiale Richtung der Werkzeugdrehachse a aufgespannten Symmetrieebene symmetrisch, insbesondere spiegelsymmetrisch, sein.

In einer nicht näher dargestellten Ausführungsform erstreckt sich der Klemmflügel 19 zumindest im Wesentlichen entlang einer Orthogonalebene zu der Werkzeugdrehachse a und ist gegenüber einer eine Radialachse r bildenden radialen Richtung der Werkzeugdrehachse a einer durch eine radiale und eine axiale Richtung der Werkzeugdrehachse a aufgespannten Symmetrieebene asymmetrisch, insbesondere nicht achsensymmetrisch.

Die Werkzeugeinrichtung 11 weist eine erste Seitenfläche 45 auf, die in einem befestigten Befestigungszustand der Werkzeugeinrichtung 11 an der Werkzeugaufnahmeeinrichtung 213 zu der Werkzeugmaschine 211 hin orientiert ist. Die Werkzeugeinrichtung 11 weist eine von der ersten Seitenfläche 45 abgewandte zweite Seitenfläche 47 auf, welche in einem mit der Werkzeugmaschine 211 befestigten Befestigungszustand der Werkzeugeinrichtung 11 an der Werkzeugaufnahmeeinrichtung 213 von der Werkzeugmaschine 211 weg orientiert ist. Die erste Seitenfläche 45 und die zweite Seitenfläche 47 begrenzen die Werkzeugeinrichtung 11 in axialer Richtung zu der Werkzeugdrehachse a.

Die erste Seitenfläche 45 der Werkzeugeinrichtung 11 weist insbesondere einen radial innenliegenden ersten Seitenflächenbereich 46 auf, welcher dazu vorgesehen ist, eine Anlagefläche 61 zur Auflage auf einer Werkzeugaufnahmeeinrichtung 213 der Werkzeugmaschine 211 zu bilden.

Der Arbeitsbereich 15 ist scheibenförmig und flach ausgeführt. Der Arbeitsbereich 15 ist radial außenliegend und begrenzt die radiale Erstreckung der Werkzeugeinrichtung 11. Der Arbeitsbereich 15 kann als Schleifwerkzeug mit zumindest einem als Schleifkorn oder als Schleifkante ausgebildeten Schleifelement oder als Trennwerkzeug mit einer Schneidkante oder zumindest einem Schneidzahn ausgeführt sein. Dies soll jedoch nicht einschränkend sein, da ein Fachmann auch andere einem Fachmann bekannte Arbeitsbereiche vorsehen kann.

Die Anschlusseinrichtung 113, welcher zur Aufnahme von Antriebskräften eingerichtet ist, ist mit dem Arbeitsbereich 15 mittels einem Verbindungsbereich 55, welcher dazu eingerichtet ist, Antriebskräfte der Werkzeugmaschine 211 von der Anschlusseinrichtung 113 auf den Arbeitsbereich 15 zu übertragen, verbunden, insbesondere stoffschlüssig verbunden.

## Werkzeugmaschine und Werkzeugmaschinensystem:

Die Werkzeugaufnahmeeinrichtung 213 weist wenigstens die Mitnahmeeinrichtung 215 und die relativ zu der Mitnahmeeinrichtung 215 bewegbare Klemmeinrichtung 217 auf.

Die Klemmeinrichtung 217 weist zwei als Hakenbacken 218a, 218b ausgebildete Hakeneinrichtungen 217a, 217b auf, welche relativ zueinander um eine Klemmeinrichtungsdrehachse k der Klemmeinrichtung 217 drehbar gelagert sind.

Die Hakenbacken 218a, 218b in Figur 1 sind zur besseren Illustration in einem fiktiven Zustand, nämlich in einem Befestigungszustand (rechte Hakenbacke 218a) und in einem Lösezustand (linke Hakenbacke 218b) angeordnet. Dieser fiktive Zustand der Hakenbacken 218a, 218b ist vorzugsweise bei der erfindungsgemäßen Werkzeugmaschine 211 nicht erreichbar, da beide Hakenbacken 218a, 218b entweder in dem Befestigungszustand oder im Lösezustand angeordnet sind.

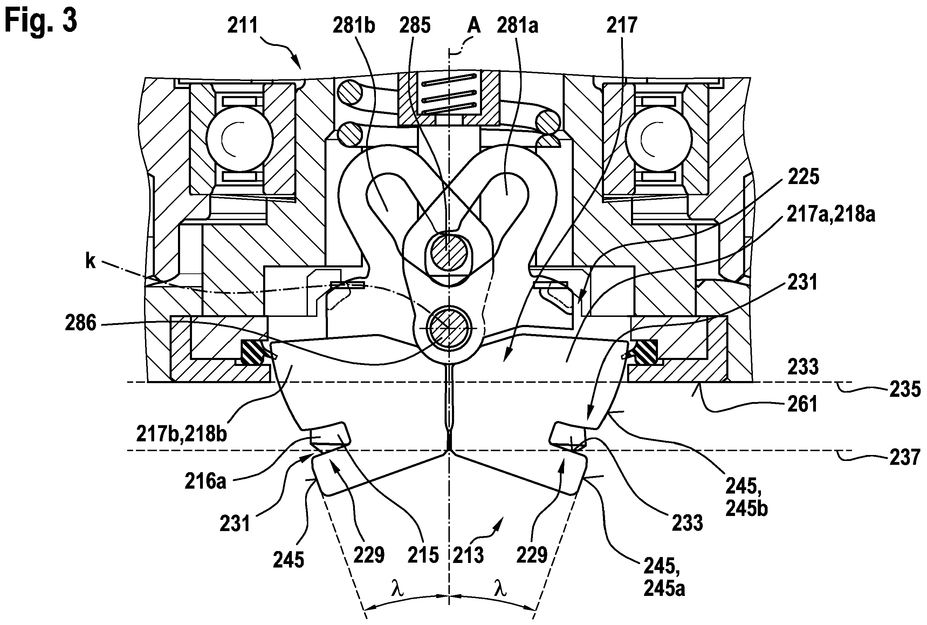

Die Hakenbacken 218a, 218b stehen gegenüber der Mitnahmeeinrichtung 215 in einem Lösezustand der Klemmeinrichtung 217 in axialer Richtung zur Abtriebsachse A ab, wie beispielsweise an der linken Hakenbacke 218a in Figur 3 zu sehen ist. Die Hakenbacken 218a, 218b stehen dabei gegenüber der Mitnahmeeinrichtung 215 in einem Lösezustand der Werkzeugaufnahmeeinrichtung 213 in axialer Richtung zur Abtriebsachse A weiter ab als in einem Befestigungszustand.

Der fiktive Zustand der Hakenbacken 218a, 218b ist bei der erfindungsgemäßen Werkzeugmaschine 211 vorzugswiese nicht erreichbar, da die Werkzeugmaschine 211 eine Führungseinrichtung aufweist, welche eine Bewegung der Hakenbacken 218a, 218b derart führt, dass eine Bewegung der beiden Hakenbacken 218a, 218b zueinander im Wesentlichen symmetrisch erfolgt.

Der Ausdruck "Führungseinrichtung" soll hier insbesondere eine Einrichtung definieren, die dazu vorgesehen ist, eine Zwangskraft zumindest entlang einer Klemmrichtung axial zur Abtriebsachse A und/oder radial zur Abtriebsachse A der Klemmeinrichtung auf die Klemmeinrichtung 217 auszuüben, um eine Bewegung der Klemmeinrichtung 217 entlang der Klemmrichtung vorzugeben. Dazu weist die Führungseinrichtung zumindest ein als Führungsbolzen 285 ausgebildetes Führungselement auf, an bzw. um dem/den die Klemmeinrichtung 217 geführt wird, und zumindest ein als Lagerungsbolzen 286 ausgebildetes Lagerungselement auf, welches dazu vorgesehen ist, die Hakenbacken 218a, 218b um eine Klemmeinrichtungsdrehachse k des Lagerungsbolzens 286 drehbar zu lagern.

Die Führungseinrichtung weist zwei als Führungsnuten 281a, 281b ausgebildete Führungsausnehmungen auf, welche jeweils eine Führungsbahn zur Führung der Hakenbacken 218a, 218b bilden.

Beide Hakenbacken 218a, 218b weisen jeweils die Führungsnut 281a, 281b auf, welche dazu vorgesehen ist, die Hakenbacken 218a, 218b mittels des Führungsbolzens 285 zu führen. Die beiden Hakenbacken 218a, 218b sind symmetrisch zueinander ausgeführt. Die Führungsnuten 281a, 281b der Hakenbacken 218a, 218b sind symmetrisch zueinander ausgeführt. Vorzugsweise ist die Bewegung der beiden Hakenbacken 218a, 218b im Wesentlichen symmetrisch, sodass beide Hakenbacken 218a, 218b entweder in einer Befestigungsposition oder in einer Löseposition angeordnet sind.

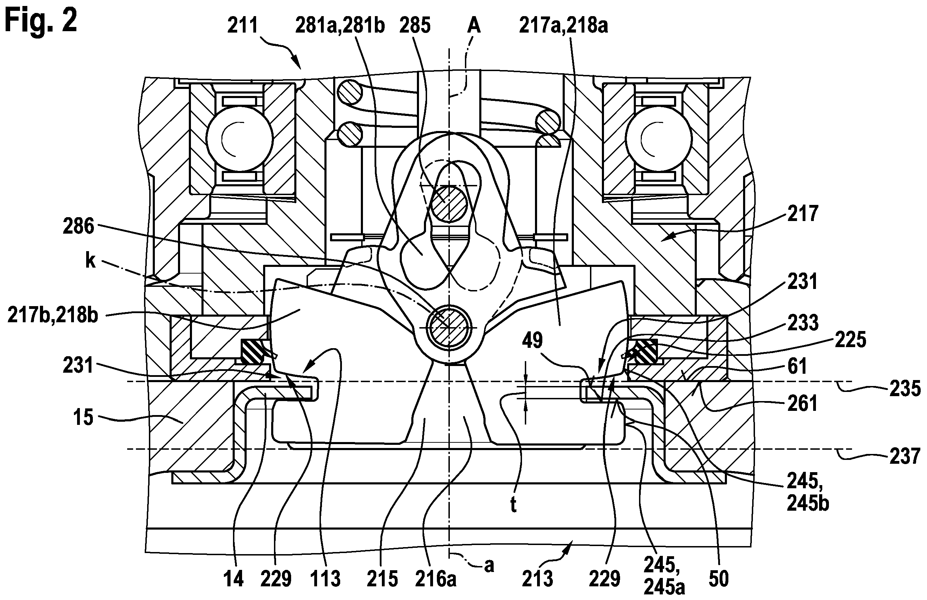

Die Hakenbacken 218a, 218b stehen in einem Lösezustand der Klemmeinrichtung 217, in dem die Hakenbacken 218a, 218b in der Löseposition angeordnet sind, gegenüber der Mitnahmeeinrichtung 215 in axialer Richtung der Abtriebsachse A ab, wie beispielsweise in Figur 2 oder an der linken Hakenbacke 218a in Figur 1 zu sehen ist. Die rechte Hakenbacke 218b aus Figur 1 ist in einem Befestigungszustand der Klemmeinrichtung 217 ausgeführt. Die Hakenbacken 218a, 218b stehen gegenüber der Mitnahmeeinrichtung 215 in einem Lösezustand der Werkzeugaufnahmeeinrichtung 213 in axialer Richtung der Abtriebsachse A weiter ab als in einem Befestigungszustand, in dem die Hakenbacken 218a, 218b in der Befestigungsposition angeordnet sind.

Der Führungsbolzen 285 erstreckt sich orthogonal zu der Abtriebsachse A. Der Führungsbolzen 285 weist die Klemmeinrichtungsdrehachse k auf, insbesondere bildet der Führungsbolzen 285 die Klemmeinrichtungsdrehachse k. Die Hakenbacken 218a, 218b sind um die Klemmeinrichtungsdrehachse k schwenkbar gelagert.

Mit den Hakenbacken 218a, 218b sind in Abhängigkeit eines gegenüber der Abtriebsachse A angewinkelten Schwenkwinkels einer Klemmfläche 233 der Klemmeinrichtung 217 Werkzeugeinrichtungen 11 unterschiedlicher Materialstärken t der Anschlusseinrichtungen 113 in der Werkzeugaufnahmeeinrichtung 213 einspannbar.

Die Hakenbacken 218a, 218b weisen jeweils zumindest eine radiale Klemmausnehmung 231 auf, welche dazu vorgesehen ist, die Werkzeugeinrichtung 11 in einem Befestigungszustand zumindest in axialer Richtung der Abtriebsachse A zu klemmen und in einem Lösezustand freizugeben. Die Klemmausnehmungen 231 weisen jeweils wenigstens eine Klemmfläche 233 zum Übertragen einer zumindest axialen Kraftwirkung auf die Werkzeugeinrichtung 11 auf. Die Klemmausnehmung 231 ist als eine sich in radialer Richtung der Abtriebsachse A erstreckende Klemmvertiefung ausgeführt. Die Klemmfläche 233 erstreckt sich im Befestigungszustand im Wesentlichen in radialer Richtung der Werkzeugdrehachse a. Die Klemmfläche 233 ist in axialer Richtung der Abtriebsachse A zu der Werkzeugmaschine 211 hin orientiert. Die Klemmfläche 233 ist eben ausgeführt. Die Klemmfläche 233 kann zumindest abschnittsweise gekrümmt ausgeführt sein. Vorzugsweise kontaktiert die Klemmfläche 233 die Anschlusseinrichtung 113 der Werkzeugeinrichtung 11 wenigstens abschnittsweise in Form einer Punkt-, bevorzugt in Form einer Linien- und besonders bevorzugt in Form einer Flächenberührung. Dabei kann sich die Form der Berührung in Abhängigkeit der Materialstärke t der mit der Werkzeugaufnahmeeinrichtung 213 zur verbindenden Anschlusseinrichtung 113 in der Werkzeugaufnahmeeinrichtung 213 ändern. Insbesondere kann sich die Form der Berührung in Abhängigkeit einer elastischen Auslenkung der Klemmflügel 19 der Werkzeugeinrichtung 11 in axialer Richtung der Abtriebsachse A ändern.

Die Hakenbacken 218a, 218b überdecken die Klemmflügel 19 in radialer Richtung der Abtriebsachse A in einem Befestigungszustand um bis zu 4 mm, insbesondere um bis zu 3 mm.

Die Hakenbacken 218a, 218b der Klemmeinrichtung 217 weisen jeweils zumindest eine Umfangsfläche 245 auf, welche eine maximale radiale Erstreckung der Hakenbacken 218a, 218b begrenzt. Die Umfangsflächen 245 der Hakenbacken 218a, 218b sind voneinander weg orientiert. Die Hakenbacken 218a, 218b weisen jeweils eine erste Umfangsfläche 245a und eine zweite Umfangfläche 245b auf, welche in axialer Richtung durch die Klemmausnehmungen 231 getrennt sind. Die erste und die zweite Umfangfläche 245a, 245b begrenzen jeweils eine radiale Erstreckung der den Umfangsflächen 245a, 245b zugeordnete Klemmausnehmung 231. Die erste Umfangsfläche 245a ist zumindest um die Abtriebsachse A gekrümmt.

Die Umfangsflächen 245 der Hakenbacken 218a, 218b steht in einem Lösezustand in axialer Richtung zur Abtriebsachse A gegenüber der Mitnahmebacken 216a, 216b ab. Die Umfangsfläche 245 der Hakenbacken 218a, 218b ist in einem Lösezustand gegenüber der Abtriebsachse A derart angewinkelt, dass ein Abstand der Umfangsfläche gegenüber der Abtriebsachse A in einer von der Werkzeugaufnahmeeinrichtung bzw. der Werkzeugmaschine weisenden axialen Richtung der Abtriebsachse A abnimmt. Die Umfangsfläche 245 der Klemmeinrichtung 231 kann gegenüber der Abtriebsachse A in einem Lösezustand einen Winkel λ (Fig. 1) bilden, welcher größer als 20° und kleiner als kleiner als 30° ist.

Die Klemmausnehmungen 231 sind dazu vorgesehen, die Werkzeugeinrichtung zumindest teilweise aufzunehmen. Die Klemmausnehmungen 231 sind dazu vorgesehen, die Werkzeugeinrichtung in einem Lösezustand zumindest teilweise aufzunehmen. Die Klemmausnehmungen 231 sind dazu vorgesehen, die Werkzeugeinrichtung in einem Befestigungszustand aufzunehmen und an der Werkzeugaufnahmeeinrichtung zu halten. Die Klemmausnehmungen 231 stehen in einem Lösezustand in axialer Richtung zumindest teilweise gegenüber den Mitnahmebacken 216a, 216b ab. Die Klemmausnehmungen 231 stehen in einem Lösezustand gegenüber den Mitnahmebacken 216a, 216b derart ab, dass die Anschlusseinrichtung 113 der Werkzeugeinrichtung von den Klemmausnehmungen 231 aufgenommen wird. Die Klemmausnehmungen 231 sind in einem Lösezustand gegenüber der Abtriebsachse A derart angewinkelt, dass die Anschlusseinrichtung 113 der Werkzeugeinrichtung 11 von den Klemmausnehmungen 231 aufgenommen wird. Die Klemmausnehmungen 231 sind als Umfangsausnehmungen ausgebildet. Die Klemmausnehmungen 231 können derart ausgebildet sein, dass sich die Klemmausnehmungen 231 in einem Lösezustand zumindest teilweise in axialer Richtung der Abtriebsachse A öffnet um die Werkzeugeinrichtung 11, insbesondere die Anschlusseinrichtung 113 der Werkzeugeinrichtung 11, aufzunehmen.

Die Werkzeugaufnahmeeinrichtung 213 weist eine im Wesentlichen rechteckige Öffnung 225 auf, welche dazu vorgesehen ist, die Hakenbacken 218a, 218b aufzunehmen und insbesondere in axialer Richtung der Abtriebsachse A beweglich zu lagern. Die Öffnung 225 umgibt die Hakenbacken 218a, 218b in einer Orthogonalebene um bis zu 360°.

Die Hakenbacken 218a, 218b stehen in axialer Richtung gegenüber der Öffnung ab. Die Öffnung 225 ist zumindest abschnittsweise von der zweiten Aufsatzfläche begrenzt. Die Öffnung 225 kann die Hakenbacken 218a, 218b drehfest um die Abtriebsachse A aufnehmen bzw. lagern. Die Öffnung 225 kann in einer Radialebene länglich ausgeführt sein.

Die Mitnahmeeinrichtung 215 und die Klemmeinrichtung 217 sind dazu eingerichtet, durch eine einzige sich durch die gesamte Materialstärke t der Werkzeugeinrichtung 11 erstreckende Ausnehmung 17 der Werkzeugeinrichtung 11 hindurchzugreifen und die Werkzeugeinrichtung 11 mittels der im Wesentlichen in radialer Richtung zur Abtriebsachse A beweglichen Hakenbacken 218a, 218b mit der Werkzeugaufnahmeeinrichtung 213 zu klemmen.

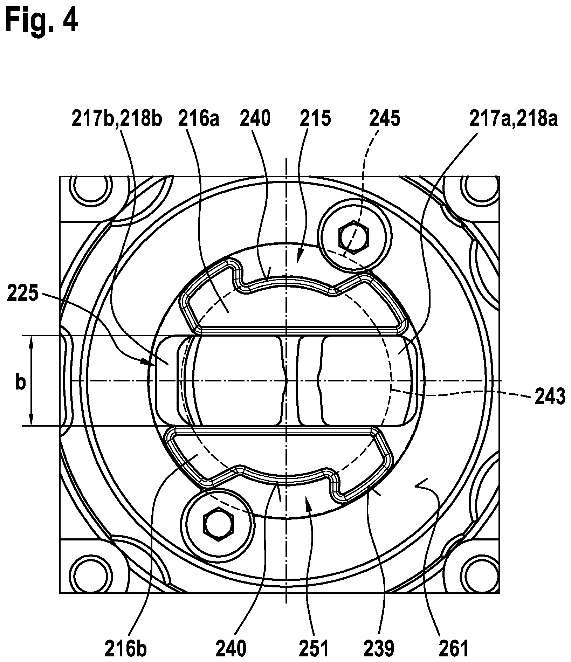

Wie in Figur 4 dargestellt, weist die Mitnahmeeinrichtung 215 zur Übertragung einer Antriebskraft auf die Werkzeugeinrichtung 11 vier im Abstand zu dieser Abtriebsachse A sternförmig angeordnete Drehmomentübertragungsbereiche 219 auf. Zumindest ein Drehmomentübertragungsbereich 219 kann dabei als eine geradlinige Abtriebskante 219a, insbesondere als ein Abtriebskantenbereich, oder als eine ebene Abtriebsfläche 219b, insbesondere als ein Abtriebsflächenbereich, ausgebildet sein. Die Abtriebskanten 219a und die Abtriebsflächen 219b erstrecken sich zumindest im Wesentlichen parallel zu einer radialen Richtung in Bezug zu der Abtriebsachse A.

Die Abtriebsflächen 219b der Drehmomentübertragungsbereiche 219, sind entgegen einer Drehrichtung der Werkzeugaufnahmeeinrichtung 213 im Betrieb der Werkzeugmaschine 211 angewinkelt.

Jeweils eine Abtriebsfläche 219b der beiden Mitnahmebacken 216a, 216b ist parallel zu einer weiteren Abtriebsfläche 219b der weiteren Mitnahmebacke 216a, 216b.

Die Hakenbacken 218a, 218b stehen in einem Lösezustand in axialer Richtung der Abtriebsachse A gegenüber den Mitnahmebacken 216a, 216b ab. Die Hakenbacken 218a, 218b begrenzen in einem Lösezustand eine axiale Erstreckung der Werkzeugaufnahmeeinrichtung. Die Mitnahmebacken 216a, 216b stehen in einem Befestigungszustand in axialer Richtung der Abtriebsachse A gegenüber der Hakenbacken 218a, 218b ab. Die Mitnahmebacken 216a, 216b begrenzen in einem Befestigungszustand eine axiale Erstreckung der Werkzeugaufnahmeeinrichtung.

Die Mitnahmebacken 216a, 216b weisen jeweils zwei radiale Erhebungen auf, welche als Drehmomentübertragungsbereich 213 ausgebildet sind.

Die Drehmomentübertragungsbereiche 219 der Werkzeugaufnahmeeinrichtung 213 liegen zwischen einer ersten Orthogonalebene 235 und einer zweiten Orthogonalebene 237 der Werkzeugaufnahmeeinrichtung 213, wenn die Werkzeugeinrichtung 11 an der Werkzeugmaschine 211 befestigt ist.

Die erste Orthogonalebene 235 begrenzt die Werkzeugaufnahmeeinrichtung 213 auf der der Werkzeugmaschine 211 zugewandten Seite in Richtung der Abtriebsachse A, die zweite Orthogonalebene 237 begrenzt die Werkzeugaufnahmeeinrichtung 213 auf der von der Werkzeugmaschine 211 abgewandten Seite.

Die Drehmomentaufnahmebereiche 219 erstrecken sich in radialer Richtung der Abtriebsachse A wenigstens abschnittsweise zwischen einem ersten und einem zweiten radialen Abstand zu der Werkzeugdrehachse a und wobei wenigstens einer dieser Abschnitte zur Drehmomentübertragung 219 von der Werkzeugmaschine 211 auf die Werkzeugeinrichtung 11 eingerichtet ist.

Vorzugsweise kontaktiert ein Drehmomentübertragungsbereich 219, bevorzugt mehrere, besonders bevorzugt alle Drehmomentübertragungsbereiche 219 der Werkzeugmaschine 211 die Drehmomentaufnahmebereiche 40 der Werkzeugeinrichtung 11 wenigstens abschnittsweise in Form einer Punktberührung, bevorzugt in Form einer Linienberührung und besonders bevorzugt in Form einer Flächenberührung.

Die Werkzeugaufnahmeeinrichtung 213 weist zwei Mitnahmebacken 216a, 216b mit jeweils zwei Drehmomentübertragungsbereichen 219 auf, welche zueinander rotationssymmetrisch um die Antriebsachse A angeordnet sind. Die Drehmomentübertragungsbereiche 213 sind in Umfangsrichtung um die Abtriebsachse A unter einem Winkel von 90° zueinander symmetrisch angeordnet, sodass die Werkzeugeinrichtung in vier Drehlagen mit der Werkzeugaufnahmeeinrichtung 213 verbunden werden kann.

Die Abtriebsflächen 219b und die Abtriebskanten 219a sind entgegen einer Drehrichtung der Werkzeugaufnahmeeinrichtung im Betrieb der Werkzeugmaschine 211 angewinkelt.

Die Abtriebsflächen 219b und die Abtriebskanten 219a sind gegenüber einer durch eine axiale Richtung und eine radiale Richtung der Abtriebsachse A aufgespannte Ebene in Umfangsrichtung um die Abtriebsachse A in einem Winkel β von bis zu 30°, insbesondere von bis zu 25° angewinkelt.

An die Antriebsflächen 219b schließen in Umfangsrichtung Außenumfangsflächen 239 an. Die Außenumfangsflächen 239 sind dazu vorgesehen, die Werkzeugeinrichtung 11 in einem Befestigungszustand an den zweiten Begrenzungskanten 25 zu zentrieren. Insbesondere sind die Außenumfangsflächen 239 gegenüber einer durch eine axiale Richtung und eine radiale Richtung der Abtriebsachse A aufgespannte Ebene in Umfangsrichtung um eine Radialachse der Abtriebsachse A in einem Winkel von etwa 1° angewinkelt, wodurch eine Toleranz in radialer Richtung beim axialen Aufstecken der Werkzeugeinrichtung 11 auf die Werkzeugaufnahmeeinrichtung 213 enger wird und die Werkzeugeinrichtung 11 präziser aufgesetzt werden kann.

Die Mitnahmebacken 216a, 216b weisen jeweils eine Innenumfangsfläche 240 auf, welche in zumindest der ersten Orthogonalebene 235 auf einem Innenumfangskreis 243 um die Abtriebsachse A liegt. Die Mitnahmebacken 216a, 216b weisen jeweils zwei Außenumfangsflächen 239 auf, welche in zumindest der ersten Orthogonalebene 235 auf einem Außenumfangskreis 245c, der insbesondere die Umfangsfläche 245 begrenzt, um die Abtriebsachse A liegen. Der Innenumfangskreis 243 ist konzentrisch zu dem Außenumfangskreis 245c. Der Innenumfangskreis 243 weist einen Durchmesser um die Abtriebsachse A von 22 mm auf, sodass ein minimaler Durchmesser der Ausnehmung 17 der Anschlusseinrichtung 113, insbesondere die erste Begrenzungskante 21 des Klemmflügels 19, welcher in etwa 22,2 mm aufweist, eine Rückwärtskompatibilität zu herkömmlichen Werkzeugmaschinen 211 ermöglicht.

Die Mitnahmebacken 216a, 216b weisen eine Breite b von 10 mm auf.

An zumindest eine Außenumfangsfläche 239 der Mitnahmebacken 216a, 216b schließt sich jeweils eine Kodierungsfläche 241 an, welche die Innenumfangsfläche 240 und die Außenumfangsfläche 239 verbindet.

Zumindest die Innenumfangsflächen 240, die Außenumfangsflächen 239, die Kodierungsflächen 241 und die Antriebsflächen 219b begrenzen zumindest abschnittsweise die Mitnahmebacken 216a, 216b in radialer Richtung der Abtriebsachse A.

Die Mitnahmeeinrichtung 215 ist durch die zwei, insbesondere als Führungsbacken dienende, Mitnahmebacken 216a, 216b ausgebildet, welche dazu vorgesehen sind, die Hakenbacken 218a, 218b in radialer Richtung zu führen, indem eine Bewegung der Hakenbacken 218a, 218b in radialer Richtung der Abtriebsachse A um die Klemmeinrichtungsdrehachse k ermöglicht wird und senkrecht zu dieser radialen Richtung eine radiale Bewegung begrenzt wird. Die Mitnahmebacken 216a, 216b begrenzen die Öffnung 225 in radialer Richtung der Werkzeugdrehachse a entlang einer Haupterstreckung der im Wesentlichen rechteckigen Öffnung 225.

Unter anderem zeigt Figur 4 die Werkzeugaufnahmeeinrichtung 213 mit einer ebenen kreisringförmigen Auflagefläche 261, welche dazu vorgesehen ist, die Werkzeugeinrichtung 11, insbesondere zumindest die Anlagefläche 61 der Werkzeugeinrichtung 11, in axialer Richtung zu stützen. Die Auflagefläche 261 ist in radialer Richtung beabstandet zu den Hakenbacken 218a, 218b angeordnet und umgibt die Hakenbacken 218a, 218b in zumindest einer Ebene um 360°. Auflagefläche 261 erstreckt sich orthogonal zur Abtriebsachse A.

Figur 2 zeigt abschnittsweise den Arbeitsbereich 15 der Werkzeugeinrichtung 11, welcher derart an der Anschlusseinrichtung 113 angeordnet ist, dass der Arbeitsbereich 15 in einem Befestigungszustand gegenüber der Anschlusseinrichtung 113 entlang der Werkzeugdrehachse a in einer zu der Werkzeugaufnahmeeinrichtung 213 der Werkzeugmaschine 211 hin orientierten Richtung absteht. Dabei kann die Anlagefläche 61 des Arbeitsbereichs 15 in einem Befestigungszustand der Werkzeugeinrichtung 11 mit der Auflagefläche 261 der Werkzeugmaschine 211 in Kontakt stehen und eine kraftschlüssige Verbindung in Umfangsrichtung der Werkzeugdrehachse a zur Werkzeugmaschine 11 bilden.

Die Anlagefläche 61 bildet in einem Befestigungszustand der Werkzeugeinrichtung 11 mit der Auflagefläche 261 der Werkzeugmaschine 211 eine in Umfangsrichtung kraftschlüssige Auflage zur Werkzeugmaschine 11. Dadurch kann bei einem elastischen Arbeitsbereich 61 zusätzlich auch noch eine dämpfende Wirkung in axialer Richtung erreicht werden. Auch ist dadurch eine Vorspannung der Klemmflügel 19 in axialer Richtung möglich.

Die Auflagefläche 261 erstreckt sich in radialer Richtung der Abtriebsachse A zwischen einem ersten radialen Innenabstand Ri und einem zweiten radialen Außenabstand Ra von der Abtriebsachse A, wobei der erste radiale Innenabstand Ri kleiner ist als der zweite radiale Außenabstand Ra. Der erste radiale Innenabstand Ri bildet einen die Auflagefläche 261 begrenzenden Innenradius der Auflagefläche 261. Der zweite radiale Außenabstand Ra bildet einen die Auflagefläche 261 begrenzenden Außenradius der Auflagefläche 261.

In einem Befestigungszustand steht die erste Begrenzungskante 21 des Klemmflügels 19 der Werkzeugeinrichtung 11 gegenüber dem ersten radialen Innenabstand Ri des Auflagefläche 261 in radialer Richtung zur Abtriebsachse A hin orientiert, insbesondere um bis zu 2 mm ab. Der Klemmflügel 19 steht dabei derart von der Auflagefläche 261 ab, dass in diesem Bereich, insbesondere zumindest im Bereich der ersten Begrenzungskante 21, keine Auflagefläche 261 bzw. kein Stützmaterial zur axialen Stützung des Klemmflügels 19 vorhanden ist

Der Klemmflügel 19 liegt in radialer Richtung nicht, insbesondere nicht vollflächig, auf der Auflagefläche 261 auf, sodass der Klemmflügel 19 zumindest abschnittsweise in axialer Richtung elastisch gebogen werden kann. Insbesondere ist in axialer Richtung unmittelbar unterhalb der ersten Begrenzungskante 22 des Klemmflügels 19 keine Auflagefläche 261 vorgesehen. Insbesondere ist in axialer Richtung unmittelbar unterhalb der zweiten Begrenzungskante 24 des Klemmflügels 19 keine Auflagefläche 261 vorgesehen. Somit weist die erste Begrenzungskante 22 und/oder die zweite Begrenzungskante 24 der Werkzeugeinrichtung 11 in einem Befestigungszustand eine maximale radiale Erstreckung auf, welche kleiner ist als eine minimale Erstreckung bzw. der erste radiale Innenabstand Ri der Auflagefläche 261.

Die Mitnahmeeinrichtung 215 kann als eine Schutzeinrichtung ausgebildet sein. Die Mitnahmeeinrichtung 215 weist eine maximale radiale Erstreckung auf, die größer ist als eine maximale radiale Erstreckung der Klemmeinrichtung 217 in einem Befestigungszustand, wodurch die bei einem rotatorischen Antrieb der Werkzeugaufnahmeeinrichtung 213 in radialer Richtung der Abtriebsachse A abstehenden Mitnahmebacken 216a, 216b einen Schutz der Hakenbacken 218a, 218b gewährleistet, indem die Hakenbacken 218a, 218b im Betrieb der Werkzeugmaschine 211 bei einem versehentlichen Kontakt mit einem Werkstück die Hakeneinrichtung 217a, 217b durch die Mitnahmebacken 216a, 216b geschützt sind.

Insbesondere können die Hakenbacken 218a, 218b gegenüber den Mitnahmebacken 216a, 216b in einem Lösezustand der Werkzeugaufnahmeeinrichtung 213 in axialer Richtung der Abtriebsachse A in einer von der Werkzeugaufnahmeeinrichtung 213 weg orientierten Richtung abstehen.

Insbesondere ist die Projektionskante 22 der Anschlusseinrichtung 113 der Werkzeugeinrichtung 11 in Umfangsrichtung, insbesondere um bis zu 70%, vorzugsweise um bis zu 50%, bevorzugt um bis zu 30%, besonders bevorzugt um bis zu 20%, weiter bevorzugt um bis zu 10%, kürzer als eine, insbesondere minimale, Erstreckung der Umfangsfläche 245 in Umfangsrichtung um die Abtriebsachse A, sodass die Werkzeugaufnahmeeinrichtung 213 in einem Lösezustand bei einem Aufsetzvorgang der Werkzeugeinrichtung 11 um die Hakenbacken 218a, 218b vorzentriert bzw. grobzentriert werden kann.

Die Werkzeugaufnahmeeinrichtung weist einen ersten Aufsatzbereich und einen zweiten Aufsatzbereich auf. Der erste Aufsatzbereich ist als eine erste ebene Aufsatzfläche ausgebildet. Der zweite Aufsatzbereich ist als eine zweite ebene Aufsatzfläche ausgebildet. Die erste Aufsatzfläche begrenzt eine axiale Erstreckung der Mitnahmeeinrichtung. Die erste Aufsatzfläche begrenzt eine axiale Erstreckung der Werkzeugaufnahmeeinrichtung in einem Befestigungszustand. Die zweite Aufsatzfläche umgibt den ersten Aufsatzbereich, insbesondere in einer Ebene von 360°. Die Aufsatzflächen erstrecken sich zumindest im Wesentlichen in radialer Richtung der Abtriebsachse und in Umfangsrichtung um die Abtriebsachse. Die erste Aufsatzfläche ist gegenüber der zweiten Aufsatzfläche in axialer Richtung der Abtriebsachse beabstandet und insbesondere parallel angeordnet. Die Aufsatzflächen begrenzen die Abtriebsflächen 219b und die Abtriebskanten 219a. Die Aufsatzflächen sind von der Werkzeugaufnahmeeinrichtung weg orientiert. Die Werkzeugeinrichtung liegt in einem Befestigungszustand auf der zweiten Aufsatzfläche auf. Die Werkzeugeinrichtung kann in einem Lösezustand auf der ersten Aufsatzfläche aufliegen. Die zweite Aufsatzfläche kann die Auflagefläche.

Die Mitnahmeeinrichtung 217 weist eine Umfangsbegrenzungskontur auf, welche eine radiale Erstreckung der Mitnahmeeinrichtung 217, insbesondere der Mitnahmebacken 216a, 216b, begrenzt.

Die Umfangsbegrenzungskontur der Mitnahmeeinrichtung 217 bildet eine Kodierungseinrichtung 251, welche im Bereich der Abtriebsachse A als erhabener Abschnitt der Werkzeugaufnahmeeinrichtung 213 ausgeführt ist.

Diese Kodierungseinrichtung 251 ist dazu eingerichtet, in die Ausnehmung 17 der Werkzeugeinrichtung 11 einzugreifen, wie in Figur 12 dargestellt ist. Die Kodierungseinrichtung 251 entspricht im Wesentlichen einer Negativform der Begrenzungskontur der Ausnehmung 17 der Anschlusseinrichtung 113 und ermöglicht damit eine formschlüssige Verbindung zwischen der Werkzeugeinrichtung 11 und der Werkzeugaufnahmeeinrichtung 213.

Aber auch von der Negativform abweichende Formen der Ausnehmung 17 sind möglich, welche zumindest abschnittsweise eine radiale Erstreckung aufweisen, die größer als ein Innenumfangskreis 243, insbesondere größer als der Außenumfangskreis 245c, der Mitnahmebacken 216a, 216b ist.

Die Kodierungseinrichtung 251 wird durch die Umfangsflächen (Innenumfangsfläche 240, Außenumfangsflächen 239, Kodierungsfläche 241 und Abtriebsflächen 219b) der Mitnahmebacken 216a, 216b gebildet.

Die Kodierungseinrichtung 251 ist rotationssymmetrisch zur Abtriebsachse A, insbesondere gemäß einer n-zähligen Drehsymmetrie. Es ist jedoch auch denkbar, dass die Kodierungseinrichtung 251 eine von einer rotationssymmetrischen Ausgestaltung abweichende Ausgestaltung aufweist, wie beispielsweise eine asymmetrische Ausgestaltung o. dgl.

Ferner kann die Werkzeugeinrichtung 11 auch mit herkömmlichen zur Aufnahme einer Werkzeugeinrichtung 11 vorgesehenen Werkzeugaufnahmeeinrichtungen 213 einer Werkzeugmaschine 211, insbesondere eines Winkelschleifers, verwendet werden, wie beispielsweise mittels einer nicht weiter dargestellten Schraubeinrichtung umfassend zumindest eine Befestigungsschraube, eine Unterlegscheibe und ein Mutternteil. Die Werkzeugeinrichtung 11 wird dabei mittels der Befestigungsschraube, diese übt ihre Kraftwirkung mittels der Unterlegscheibe auf die Werkzeugeinrichtung 11 aus, an der Werkzeugmaschine 211 gehalten. Die Übertragung der Antriebskräfte von der Werkzeugmaschine 211 auf die Werkzeugeinrichtung 11 wird im Wesentlichen durch das formschlüssige Ineinandergreifen des Drehmomentübertragungsbereichs 219 und des Drehmomentaufnahmebereichs 40 erreicht. Dabei wird die Werkzeugeinrichtung 11 so an der Werkzeugmaschine 211 gehalten, dass die Werkzeugdrehachse a und die Abtriebsachse A im Wesentlichen zusammenfallen. Die Werkzeugeinrichtung 11 wird rotatorisch um die Abtriebsachse A angetrieben.

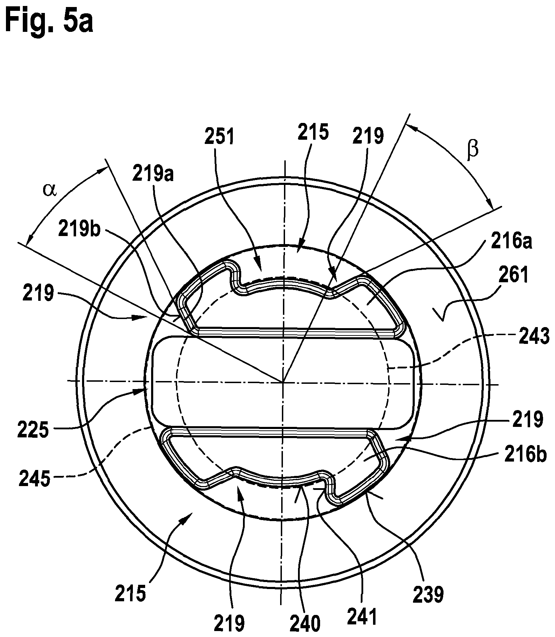

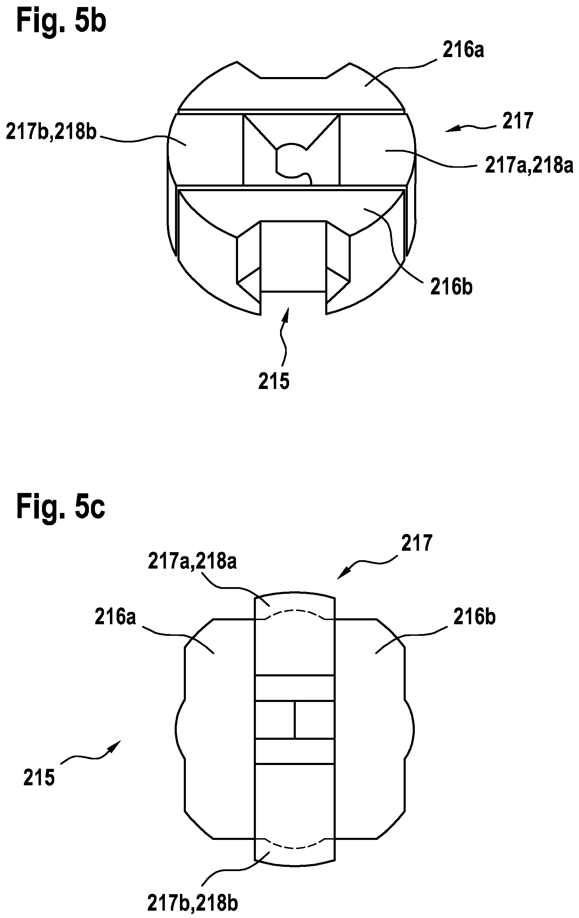

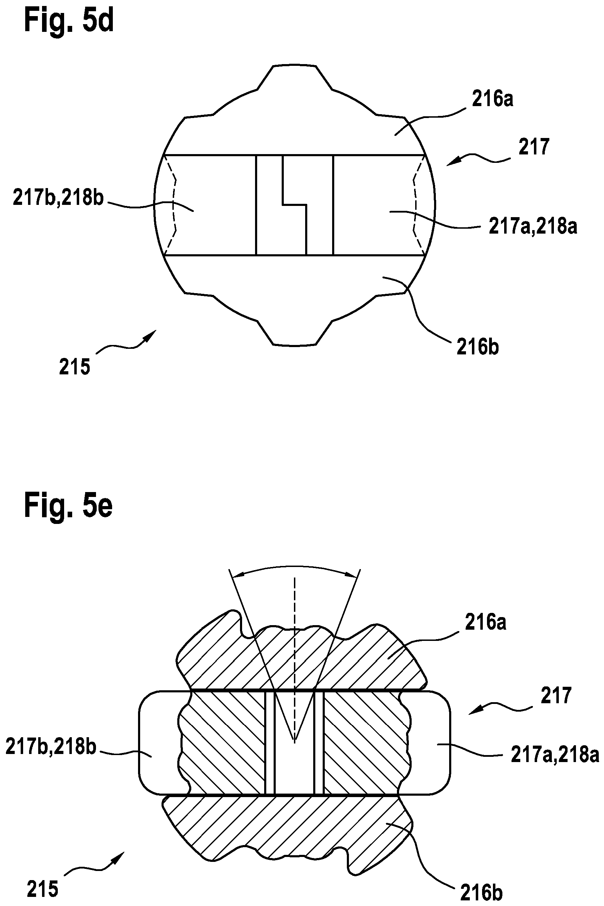

Figuren 5b, 5c, 5d und 5e zeigen alternative Ausgestaltungen der Werkzeugaufnahmeeinrichtung 213 der Handwerkzeugmaschine 211 zu einer Aufnahme von Werkzeugeinrichtungen 11, die eine symmetrische Ausgestaltung einer Anschlusseinrichtung 113 aufweisen. Die in den Figuren 5b, 5c, 5d und 5e dargestellten Werkzeugaufnahmeeinrichtungen 213 weisen eine zumindest im Wesentlichen analoge Ausgestaltung zu der in den vorhergehenden Figuren, insbesondere in der Figur 5a, dargestellten Werkzeugaufnahmeeinrichtung 213 auf. Im Unterschied zu der in den vorhergehenden Figuren dargestellten Werkzeugaufnahmeeinrichtung 213 weisen die in den Figuren 5b, 5c, 5d und 5e dargestellten Werkzeugaufnahmeeinrichtungen 213 eine zu einer sich zumindest im Wesentlichen parallel zur Abtriebsachse A verlaufenden Symmetrieebene symmetrisch ausgebildete Mitnahmeeinrichtung 215 auf. Vorzugsweise verläuft die Abtriebsachse A in der Symmetrieebene, zu der die Mitnahmeeinrichtung 215 symmetrisch ausgebildet ist.

Die in Figur 5b dargestellte Mitnahmeeinrichtung 215 weist vorzugsweise zueinander symmetrisch ausgebildete Mitnahmebacken 216a, 216b auf. Insbesondere sind die Mitnahmebacken 216a, 216b spiegelsymmetrisch zueinander ausgebildet, insbesondere in Bezug auf eine die Abtriebsachse A umfassende Symmetrieebene. Bevorzugt sind die Mitnahmebacken 216a, 216b jeweils zu einer sich zumindest im Wesentlichen senkrecht zur Symmetrieebene erstreckenden Ebene spiegelsymmetrisch ausgebildet. Vorzugsweise ist an jeder der Mitnahmebacken 216a, 216b zumindest eine Einführausnehmung der Mitnahmeeinrichtung 215 angeordnet, in die ein, insbesondere einen rechteckigen, bevorzugt trapezförmigen Querschnitt aufweisender, Klemmflügel 19 einer in der Figur 5b nicht näher dargestellten und korrespondierend zur Werkzeugaufnahmeeinrichtung 213 aus Figur 5b ausgebildete Werkzeugeinrichtung 11 einführbar und/oder anordenbar ist. Insbesondere weisen die Mitnahmebacken 216a, 216b jeweils zumindest eine Einführschräge auf. Die Einführschräge ist an der jeweiligen Mitnahmebacke 216a, 216b an einer die Einführausnehmung zumindest teilweise begrenzenden Außenfläche der jeweiligen Mitnahmebacke 216a, 216b angeordnet.

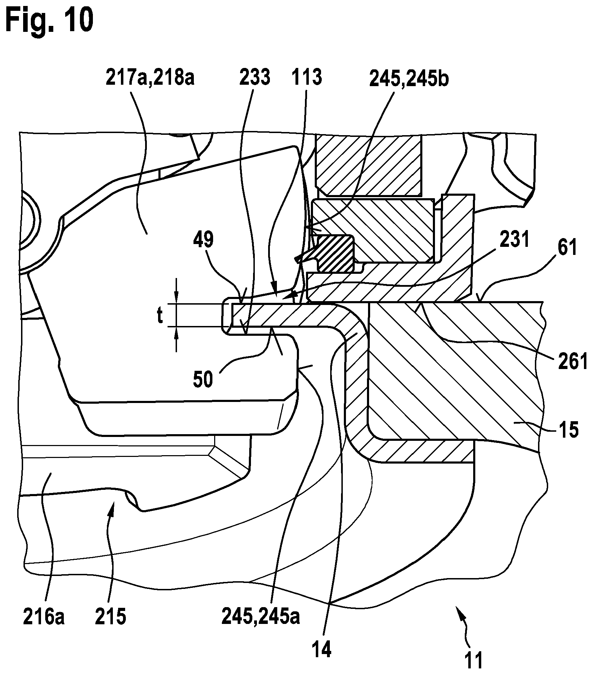

Die in Figur 5c dargestellte Mitnahmeeinrichtung 215 weist vorzugsweise zueinander symmetrisch ausgebildete Mitnahmebacken 216a, 216b auf. Insbesondere sind die Mitnahmebacken 216a, 216b spiegelsymmetrisch zueinander ausgebildet, insbesondere in Bezug auf eine die Abtriebsachse A umfassende Symmetrieebene. Bevorzugt sind die Mitnahmebacken 216a, 216b jeweils zu einer sich zumindest im Wesentlichen senkrecht zur Symmetrieebene erstreckenden Ebene spiegelsymmetrisch ausgebildet. Die Mitnahmebacken 216a, 216b weisen jeweils eine rechteckige Grundform mit zumindest zwei abgeschrägten Kanten auf. An einer die zwei abgeschrägten Kanten miteinander verbindenden Außenseite der jeweiligen Mitnahmebacke 216a, 216b umfassen die Mitnahmebacken 216a, 216b jeweils einen Fortsatz. Der Fortsatz der jeweiligen Mitnahmebacke 216a, 216b ist vorzugsweise kreissegmentförmig ausgebildet. Der Fortsatz der jeweiligen Mitnahmebacke 216a, 216b kann beispielsweise ein Montagekodierelement der in Figur 5c dargestellten Werkzeugaufnahmeeinrichtung 213 bilden. Vorzugsweise weist eine zumindest im Wesentlichen senkrecht zu einer Klemmfläche 233 einer Klemmeinrichtung 217 der in Figur 10c dargestellten Werkzeugaufnahmeeinrichtung 213 verlaufende Innenfläche der Klemmeinrichtung 217 einen kreissegmentförmigen Fortsatz auf. Der Fortsatz der Klemmeinrichtung 217 kann beispielsweise ein Befestigungskodierelement der in Figur 5c dargestellten Werkzeugaufnahmeeinrichtung 213 bilden. Vorzugsweise ist eine Befestigung einer Werkzeugeinrichtung (in Figur 5c nicht näher dargestellt), die eine zu dem Fortsatz der Klemmeinrichtung 217 unkorrespondierende Ausnehmung aufweist, vorteilhaft mittels der Klemmeinrichtung 217 der in Figur 5c dargestellten Werkzeugaufnahmeeinrichtung 213 weitestgehend vermeidbar. Vorzugsweise bilden Fortsätze der Mitnahmebacken 216a, 216b und Fortsätze der Klemmeinrichtung 217 in einer zumindest im Wesentlichen senkrecht zur Abtriebsachse A verlaufenden Ebene eine vierzählige Umfangskontur der Werkzeugaufnahmeeinrichtung 213.

Die in Figur 5d dargestellte Mitnahmeeinrichtung 215 weist vorzugsweise zueinander symmetrisch ausgebildete Mitnahmebacken 216a, 216b auf.

Insbesondere sind die Mitnahmebacken 216a, 216b spiegelsymmetrisch zueinander ausgebildet, insbesondere in Bezug auf eine die Abtriebsachse A umfassende Symmetrieebene. Bevorzugt sind die Mitnahmebacken 216a, 216b jeweils zu einer sich zumindest im Wesentlichen senkrecht zur Symmetrieebene erstreckenden Ebene spiegelsymmetrisch ausgebildet. Bevorzugt weist jede Mitnahmebacke 216a, 216b zumindest zwei korrespondierend zu Klemmflügeln 19 einer in Figur 5d nicht näher dargestellten Werkzeugeinrichtung 11 ausgebildete Mitnahme- und/oder Kodierungskonturen auf. Vorzugsweise sind die Mitnahme- und/oder Kodierungskonturen als Vertiefungen in einer Außenkontur der Mitnahmeeinrichtung 215 ausgebildet, insbesondere betrachtet in einer zumindest im Wesentlichen senkrecht zur Abtriebsachse A verlaufenden Ebene. Eine Klemmeinrichtung 217 der in Figur 5d dargestellten Werkzeugaufnahmeeinrichtung 213 umfasst eine zumindest im Wesentlichen senkrecht zu einer Klemmfläche 233 der Klemmeinrichtung 217 verlaufende Innenfläche der Klemmeinrichtung 217. Die Innenfläche weist betrachtet in der zumindest im Wesentlichen senkrecht zur Abtriebsachse A verlaufenden Ebene einen zu einer der Mitnahme- und/oder Kodierungskonturen analogen Verlauf auf. Vorzugsweise bilden die Mitnahme- und/oder Kodierungskonturen der Mitnahmebacken 216a, 216b und Innenflächen der Klemmeinrichtung 217 in der zumindest im Wesentlichen senkrecht zur Abtriebsachse A verlaufenden Ebene eine sechszählige Umfangskontur der Werkzeugaufnahmeeinrichtung 213.

Die in Figur 5e dargestellte Mitnahmeeinrichtung 215 weist vorzugsweise zueinander symmetrisch ausgebildete Mitnahmebacken 216a, 216b auf, insbesondere zueinander punktsymmetrisch ausgebildete Mitnahmebacken 216a, 216b. An der Mitnahmeeinrichtung 215 sind vorzugsweise zumindest zwei Montagekodierelemente 300, 302, 308, 310 der Werkzeugaufnahmeeinrichtung 213 pro Mitnahmebacke 216a, 216b angeordnet. Es ist denkbar, dass alternativ oder zusätzlich jeweils zwei Montagekodierelemente 300, 302, 308, 310 der Werkzeugaufnahmeeinrichtung 213 zumindest im Wesentlichen anlag an der Hakeneinrichtung 217a, 217b angeordnet sind. Die zumindest zwei an der jeweiligen Mitnahmebacke 216a, 216b angeordneten Montagekodierelemente 300, 302, 308, 310 der Werkzeugaufnahmeeinrichtung 213 weisen vorzugsweise jeweils eine maximale Umfangserstreckung auf, die kleiner oder gleich groß als 17 mm ist. Vorzugsweise sind die zumindest zwei an der jeweiligen Mitnahmebacke 216a, 216b angeordneten Montagekodierelemente 300, 302, 308, 310 der Werkzeugaufnahmeeinrichtung 213, insbesondere zusammen, innerhalb eines Winkelbereichs mit einem Wert aus einem Wertebereich von 10° bis 40° an der jeweiligen Mitnahmebacke 216a, 216b angeordnet.

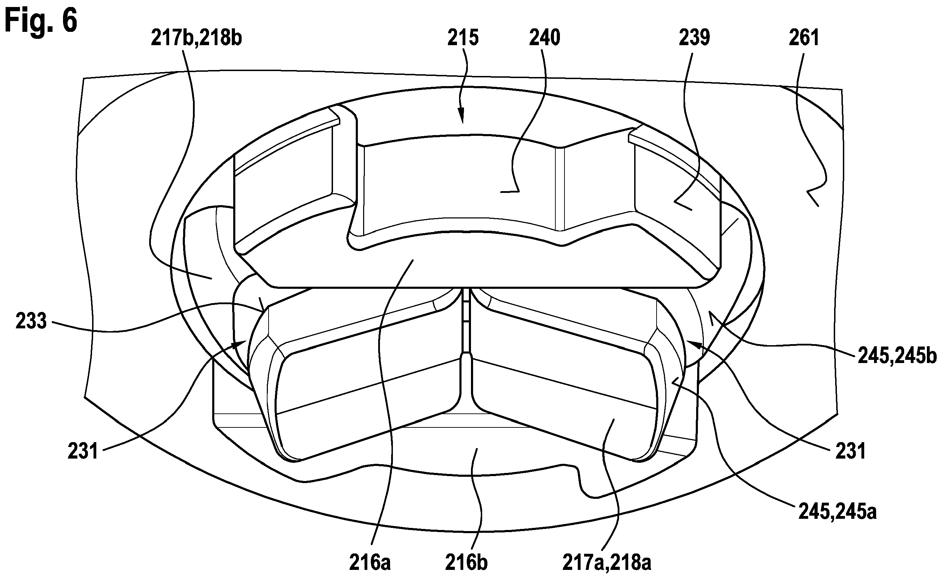

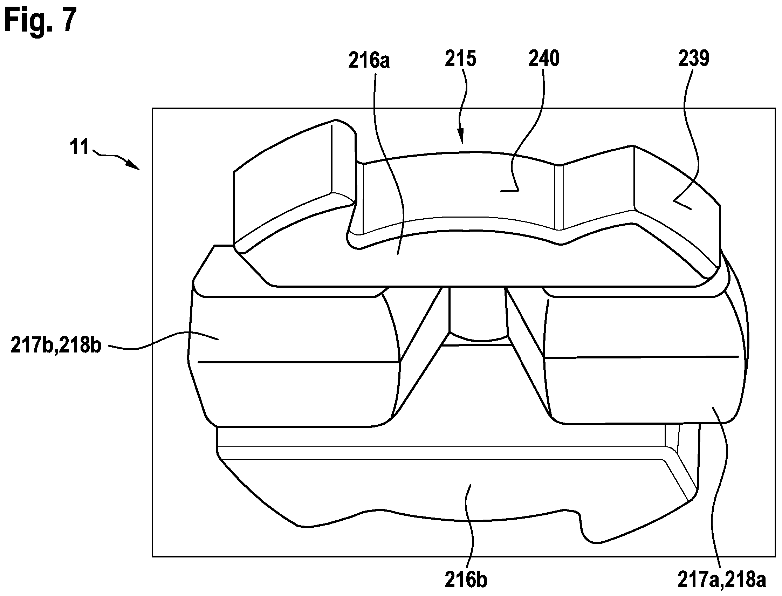

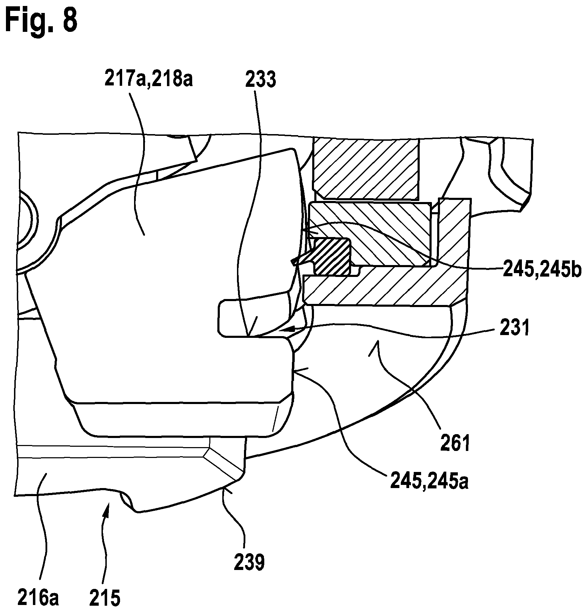

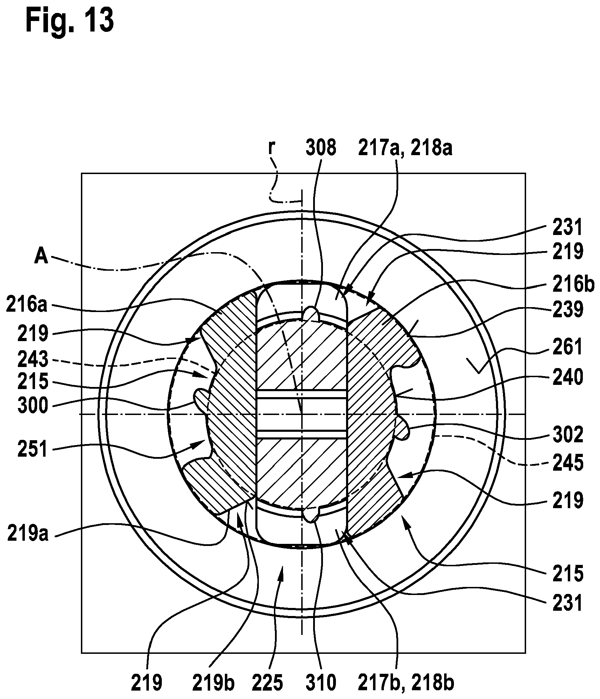

Figuren 13 bis 18 zeigen Ansichten von zusätzlichen Details des Werkzeugmaschinensystems, die in den vorhergehenden Figuren 1 bis 12 der Übersichtlichkeit halber nicht dargestellt wurden, um eine einfache Lesbarkeit der Figuren 1 bis 12 zu ermöglichen. Die zu den Figuren 13 bis 18 offenbarten Merkmale sind analog auf die Figuren 1 bis 12 übertragbar.

Die Werkzeugeinrichtung 11 umfasst zumindest ein Werkzeugmontagekodierelement 304, 306, 312, 314, das dazu vorgesehen ist, in einem an der Werkzeugaufnahmeeinrichtung 213 angeordneten Zustand der Werkzeugeinrichtung 11 mit zumindest einem Montagekodierelement 300, 302, 308, 310 der Werkzeugaufnahmeeinrichtung 213 zusammenzuwirken. Das zumindest eine Werkzeugmontagekodierelement 304, 306, 312, 314 der Werkzeugeinrichtung 11 und das zumindest eine Montagekodierelement 300, 302, 308, 310 der Werkzeugaufnahmeeinrichtung 213 sind insbesondere korrespondierend ausgebildet. Vorzugsweise ist das zumindest ein Montagekodierelement 300, 302, 308, 310 der Werkzeugaufnahmeeinrichtung 213 dazu vorgesehen, eine Anordnung, eine Fixierung oder ein Aufsetzen der Werkzeugeinrichtung 11 an oder auf der Werkzeugaufnahmeeinrichtung 213, insbesondere der Auflagefläche 261, zu kodieren. Bevorzugt ist das zumindest eine Montagekodierelement 300, 302, 308, 310 der Werkzeugaufnahmeeinrichtung 213 dazu vorgesehen, eine Anordnung, eine Fixierung oder ein Aufsetzen der Werkzeugeinrichtung 11 an oder auf der Werkzeugaufnahmeeinrichtung 213, insbesondere der Auflagefläche 261, gemäß einem Schlüssel-Schlüsselloch-Prinzip zu kodieren.

Die Mitnahmeeinrichtung 215 umfasst zumindest ein Montagekodierelement 300, 302, das dazu vorgesehen ist, mit zumindest einem Werkzeugmontagekodierelement 304, 306 der Werkzeugeinrichtung 11 in einem an der Werkzeugaufnahmeeinrichtung 213 angeordneten Zustand der Werkzeugeinrichtung 11 zusammenzuwirken. Das zumindest eine Montagekodierelement 300, 302 der Mitnahmeeinrichtung 215 ist an zumindest einer Mitnahmebacke 216a, 216b der Mitnahmeeinrichtung 215 angeordnet (vgl. Figur 13).

Das zumindest eine Montagekodierelement 300, 302 der Mitnahmeeinrichtung 215 ist als mechanisches Montagekodierelement ausgebildet. Das zumindest eine Montagekodierelement 300, 302 der Mitnahmeeinrichtung 215 ist einteilig mit der Mitnahmebacke 216a, 216b ausgebildet. Das zumindest eine Montagekodierelement 300, 302 der Mitnahmeeinrichtung 215 ist als Fortsatz ausgebildet. Es ist jedoch auch denkbar, dass das zumindest eine Montagekodierelement 300, 302 der Mitnahmeeinrichtung 215 eine andere, einem Fachmann als sinnvoll erscheinende Ausgestaltung aufweist, wie beispielsweise eine Ausgestaltung als Ausnehmung, als Steg o. dgl. Das zumindest eine Montagekodierelement 300, 302 der Mitnahmeeinrichtung 215 erstreckt sich vorzugsweise zumindest entlang einer quer, zumindest im Wesentlichen senkrecht, zur Werkzeugdrehachse a der Werkzeugeinrichtung 11 verlaufenden Richtung. Das zumindest eine Montagekodierelement 300, 302 der Mitnahmeeinrichtung 215 ist angrenzend an die Innenumfangsfläche 240 der zumindest einen Mitnahmebacke 216a, 216b angeordnet. Das zumindest eine Montagekodierelement 300, 302 der Mitnahmeeinrichtung 215 erstreckt sich ausgehend von der Innenumfangsfläche 240 der zumindest einen Mitnahmebacke 216a, 216b insbesondere in eine von der Werkzeugdrehachse a weg gerichtete Richtung, insbesondere bis maximal zur Umfangsfläche 245, die von dem Außenumfangskreis 245c begrenzt wird (vgl. Figuren 12 und 13).

Das zumindest eine Montagekodierelement 300, 302 der Mitnahmeeinrichtung 215 ist vorzugsweise, betrachtet entlang einer Umfangsrichtung, zwischen der Antriebskante 219a und/oder der Antriebsfläche 219b und einer der Antriebskante 219a und/oder der Antriebsfläche 219b abgewandten Seite der Mitnahmebacke 216a, 216b angeordnet. Vorzugsweise weist das zumindest eine Montagekodierelement 300, 302 der Mitnahmeeinrichtung 215 entlang der Umfangsrichtung eine maximale Erstreckung auf, die kleiner ist als ein Maximalabstand zwischen der Antriebskante 219a und/oder der Antriebsfläche 219b und der Antriebskante 219a und/oder der Antriebsfläche 219b abgewandten Seite der Mitnahmebacke 216a, 216b entlang der Umfangsrichtung. Vorzugsweise ist das zumindest eine Montagekodierelement 300, 302 der Mitnahmeeinrichtung 215 in einem Winkelbereich von weniger als 60° zwischen der Antriebskante 219a und/oder der Antriebsfläche 219b und der der Antriebskante 219a und/oder der Antriebsfläche 219b abgewandten Seite der Mitnahmebacke 216a, 216b angeordnet.

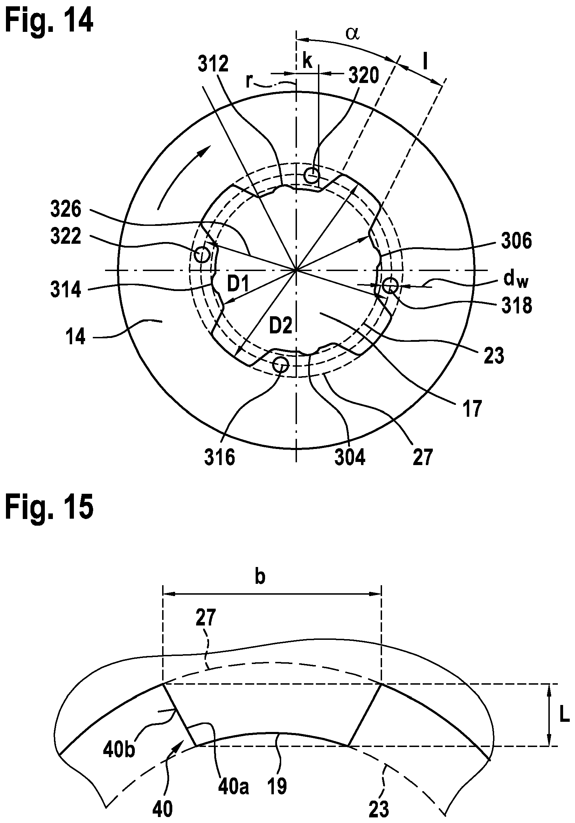

Das zumindest eine Montagekodierelement 300, 302 der Mitnahmeeinrichtung 215 kann jegliche, einem Fachmann als sinnvoll erscheinende Ausgestaltungen aufweisen. Beispielsweise ist es denkbar, dass das zumindest eine Montagekodierelement 300, 302 der Mitnahmeeinrichtung 215, insbesondere betrachtet in der ersten Orthogonalebene 235, einen polygonalen (quadratischen, quaderförmigen, dreieckigen, n-eckigen o. dgl.) oder einen kreisförmigen (halbkreisförmigen, halbkreisförmigen mit einer gewellten Außenumfangslinie o. dgl.) Querschnitt aufweist, wie dies beispielhaft auch aus der Figur 15 ableitbar ist, da das zumindest eine Werkzeugmontagekodierelement 304, 306, 312, 314 der Werkzeugeinrichtung 11 vorzugsweise korrespondierend zu dem zumindest einen Montagekodierelement 300, 302, 308, 310 der Werkzeugaufnahmeeinrichtung 213 ausgebildet ist. Es ist jedoch auch denkbar, dass das zumindest eine Werkzeugmontagekodierelement 304, 306, 312, 314 der Werkzeugeinrichtung 11 und das zumindest eine Montagekodierelement 300, 302, 308, 310 der Werkzeugaufnahmeeinrichtung 213 insbesondere im Hinblick auf eine Größenabmessung unterschiedlich ausgebildet sind. Beispielsweise ist es denkbar, dass das zumindest eine Werkzeugmontagekodierelement 304, 306, 312, 314 der Werkzeugeinrichtung 11 entlang einer Umfangsrichtung oder entlang einer radialen Richtung eine maximale Erstreckung aufweist, die einem Vielfachen einer maximalen Erstreckung des zumindest einen Montagekodierelements 300, 302, 308, 310 der Werkzeugaufnahmeeinrichtung 213 entspricht o. dgl.

Vorzugsweise ist zumindest an jeder Mitnahmebacke 216a, 216b der Mitnahmeeinrichtung 215 zumindest ein Montagekodierelement 300, 302 angeordnet (vgl. Figur. 13). Es ist jedoch auch denkbar, dass mehr als ein Montagekodierelement 300, 302 pro Mitnahmebacke 216a, 216b vorgesehen ist, wie beispielsweise zumindest zwei, zumindest drei, zumindest vier oder mehrere Montagekodierelemente 300, 302 pro Mitnahmebacke 216a, 216b. Die an den Mitnahmebacken 216a, 216b angeordneten Montagekodierelemente 300, 302 weisen insbesondere eine zueinander analoge Ausgestaltung auf. Es ist auch eine differierende Ausgestaltung der Montagekodierelemente 300, 302 denkbar.

Vorzugsweise sind die an den Mitnahmebacken 216a, 216b angeordneten Montagekodierelemente 300, 302 der Mitnahmeeinrichtung 215 bezogen auf eine die Abtriebsachse A umfassende Ebene asymmetrisch an den Mitnahmebacken 216a, 216b angeordnet. Es ist jedoch auch denkbar, dass die den Mitnahmebacken 216a, 216b angeordneten Montagekodierelemente 300, 302 der Mitnahmeeinrichtung 215 bezogen auf eine die Abtriebsachse A umfassende Ebene symmetrisch an den Mitnahmebacken 216a, 216b angeordnet sind, wie dies insbesondere beispielhaft durch die möglichen korrespondierenden Anordnungen der Werkzeugmontagekodierelemente 304, 306, 312, 314 aus der Figur 1 ableitbar ist.

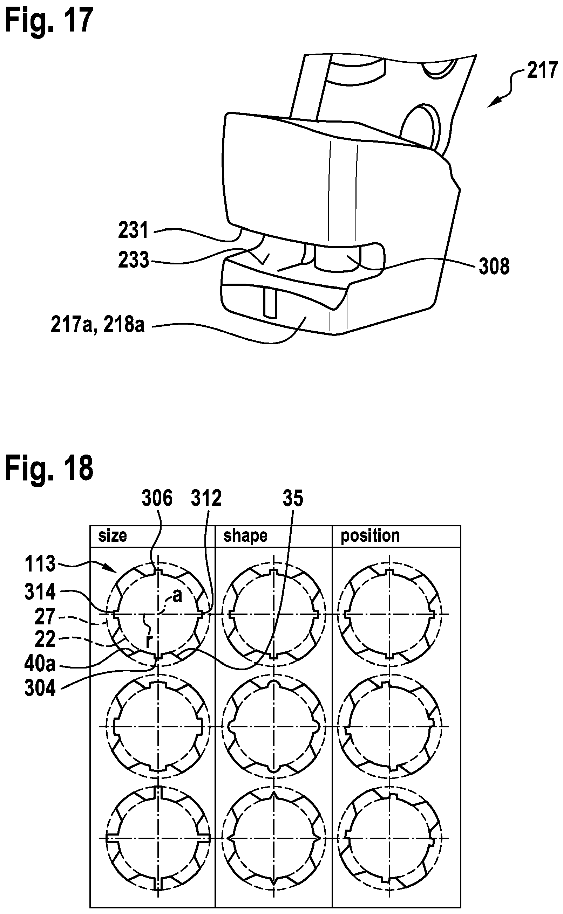

Die Klemmeinrichtung 217, insbesondere zumindest die Hakeneinrichtung 217a, 217b der Klemmeinrichtung 217, umfasst zumindest ein Montagekodierelement 308, 310 (vgl. Figuren 13 und 17). Das Montagekodierelement 308, 310 der Klemmeinrichtung 217 ist vorzugsweise an der Hakenbacke 218a, 218b, insbesondere in der Klemmausnehmung 231 der Hakenbacke 218a, 218b, angeordnet. Bevorzugt umfasst die Klemmeinrichtung 217 eine Vielzahl an Montagekodierelementen 308, 310, insbesondere zumindest zwei. Es ist jedoch auch denkbar, dass die Klemmeinrichtung 217 eine von eins und zwei abweichende Anzahl an Montagekodierelementen 308, 310 aufweist, die an der Hakeneinrichtung 217a, 217b angeordnet sind. Vorzugsweise bildet das zumindest eine Montagekodierelement 308, 310 der Klemmeinrichtung 217 ein Fixierungskodierelement, das dazu vorgesehen ist, eine Befestigung der Werkzeugeinrichtung 11 an der Werkzeugaufnahmeeinrichtung 213 zu kodieren. Bevorzugt ist das zumindest eine Montagekodierelement 308, 310 der Klemmeinrichtung 217 dazu vorgesehen, eine Befestigung der Werkzeugeinrichtung 11 an der Werkzeugaufnahmeeinrichtung 217 gemäß einem Schlüssel-Schlüsselloch-Prinzip zu kodieren.

Vorzugsweise ist das zumindest eine Montagekodierelement 308, 310 der Klemmeinrichtung 217 einteilig mit der Hakenbacke 218a, 218b ausgebildet. Es ist jedoch auch denkbar, dass das zumindest eine Montagekodierelement 308, 310 der Klemmeinrichtung 217 separat zur Hakenbacke 218a, 218b ausgebildet ist und mittels einer, einem Fachmann als sinnvoll erscheinenden Verbindung an der Hakenbacke 218a, 218b fixiert ist. Bevorzugt ist das zumindest eine Montagekodierelement 308, 310 der Klemmeinrichtung 217 an der Klemmfläche 233 der Klemmeinrichtung 217 angeordnet, insbesondere direkt angrenzend an die Klemmfläche 233, die die Klemmausnehmung 231 zumindest teilweise begrenzt. Das zumindest eine Montagekodierelement 308, 310 der Klemmeinrichtung 217 weist insbesondere eine maximale Erstreckung innerhalb der Klemmausnehmung 231 auf, die kleiner ist als eine maximale Erstreckung der Klemmfläche 233 der Klemmeinrichtung 217. Bevorzugt ist das zumindest eine Montagekodierelement 308, 310 der Klemmeinrichtung 217 als Fortsatz ausgebildet. Es ist jedoch auch denkbar, dass das zumindest eine Montagekodierelement 308, 310 der Klemmeinrichtung 217 eine andere, einem Fachmann als sinnvoll erscheinende Ausgestaltung aufweist, wie beispielsweise eine Ausgestaltung als Ausnehmung, als Nut, als Steg, als gezackte Kontur o. dgl. Das zumindest eine Montagekodierelement 308, 310 der Klemmeinrichtung 217 kann symmetrisch oder asymmetrisch zu einer Mittelebene, insbesondere einer Symmetrieebene, der Hakenbacke 218a, 218b an der Hakenbacke 218a, 218b angeordnet sein, wie dies insbesondere beispielhaft durch die möglichen korrespondierenden Anordnungen der Werkzeugmontagekodierelemente 304, 306, 312, 314 aus der Figur 18 ableitbar ist.

Vorzugsweise verläuft die Mittelebene der Hakenbacke 218a, 218b, insbesondere die Symmetrieebene, zu der die Hakenbacken 218a, 218b zumindest bis auf die Anordnung des Montagekodierelements 308, 310 zumindest im Wesentlichen symmetrisch ausgebildet ist, zumindest im Wesentlichen parallel zur Abtriebsachse A und/oder umfasst diese. Denkbar ist auch eine relativ zur Mittelebene, insbesondere zur Symmetrieebene, der Hakenbacke 218a, 218b beabstandete Anordnung des zumindest einen Montagekodierelements 308, 310 der Klemmeinrichtung 217 an der Hakenbacke 218a, 218b.

Die Anschlusseinrichtung 113 der Werkzeugeinrichtung 11 weist das zumindest eine Werkzeugmontagekodierelement 304, 306, 312, 314 auf, das dazu vorgesehen ist, in einem an der Werkzeugaufnahmeeinrichtung 213 angeordneten Zustand der Werkzeugeinrichtung 11 mit dem zumindest einen Montagekodierelement 300, 302, 308, 310 der Werkzeugaufnahmeeinrichtung 213 zusammenzuwirken. Das zumindest eine Werkzeugmontagekodierelement 304, 306, 312, 314 ist an dem zumindest einen Klemmflügel 19 der Anschlusseinrichtung 113 angeordnet (vgl. Figur 18). Das zumindest eine Werkzeugmontagekodierelement 304, 306, 312, 314 weist entlang einer Radialachse r eine maximale Erstreckung auf, die maximal einem Maximalabstand zwischen dem ersten Begrenzungskreis 23 und dem zweiten Begrenzungskreis 27 der Anschlusseinrichtung 113 entspricht, wie dies beispielhaft den unterschiedlichen Ausführungsmöglichkeiten der Anschlusseinrichtung 113 in Figur 18 zu entnehmen ist. Das zumindest eine Werkzeugmontagekodierelement 304, 306, 312, 314 ist vorzugsweise in einem Winkelbereich zwischen der Antriebskante 40a und der Kodierungskante 35 der Anschlusseinrichtung 113 an dem Klemmflügel 19 der Anschlusseinrichtung 113 angeordnet. Insbesondere weist der Winkelbereich eine maximale Erstreckung von weniger als 90°, bevorzugt von weniger als 60° und besonders bevorzugt von weniger als 40° auf. Das zumindest eine Werkzeugmontagekodierelement 304, 306, 312, 314 weist entlang einer Umfangsrichtung eine maximale Erstreckung auf, die vorzugsweise kleiner ist als ein Maximalabstand zwischen der Antriebskante 40a und der Kodierungskante 35 der Anschlusseinrichtung 113. Insbesondere erstreckt sich das zumindest eine Werkzeugmontagekodierelement 304, 306, 312, 314 entlang einer Umfangsrichtung in einem Bereich zwischen der Antriebskante 40a und der Kodierungskante 35. Der Bereich zwischen der Antriebskante 40a und der Kodierungskante 35 ist bevorzugt innerhalb des ersten Begrenzungskreis 23 und des zweiten Begrenzungskreis 27 der Anschlusseinrichtung 113 angeordnet. Vorzugsweise wird der Bereich von einem Teilbereich eines durch den ersten Begrenzungskreis 23 und des zweiten Begrenzungskreis 27 der Anschlusseinrichtung 113 begrenzenden Kreisrings gebildet, wie dies beispielhaft den verschiedenen Ausführungsmöglichkeiten der tabellarischen Auflistung in Figur 18 zu entnehmen ist, wobei auch durchaus eine Kombination von dargestellten Ausführungsmöglichkeiten denkbar ist. Die Anschlusseinrichtung 113 umfasst vorzugsweise eine Vielzahl an Werkzeugmontagekodierelementen 304, 306, 312, 314, die symmetrisch, insbesondere gemäß einer n-zähligen Drehsymmetrie, oder unsymmetrisch an der Anschlusseinrichtung 113, insbesondere an den Klemmflügeln 19, angeordnet sein können.

Figur 14 zeigt eine Ausführungsform der erfindungsgemäßen Werkzeugeinrichtung 11 mit zumindest einem Werkzeugmontagekodierelement 304, 306, 312, 314, das dazu vorgesehen ist, in einem an der Werkzeugaufnahmeeinrichtung 213 angeordneten Zustand der Werkzeugeinrichtung 11 mit zumindest einem Montagekodierelement 300, 302, 308, 310 der Werkzeugaufnahmeeinrichtung 213 zusammenzuwirken. Das zumindest eine Werkzeugmontagekodierelement 304, 306, 312, 314 ist an dem zumindest einen Klemmflügel 19 der Anschlusseinrichtung 113 angeordnet. Das zumindest eine Werkzeugmontagekodierelement 304, 306, 312, 314 weist entlang einer Radialachse r eine maximale Erstreckung auf, die maximal einem Maximalabstand zwischen dem ersten Begrenzungskreis 23 und dem zweiten Begrenzungskreis 27 der Anschlusseinrichtung 113 entspricht, wie dies beispielhaft den unterschiedlichen Ausführungsmöglichkeiten der Anschlusseinrichtung 113 in Figur 18 zu entnehmen ist. Das zumindest eine Werkzeugmontagekodierelement 304, 306, 312, 314 ist vorzugsweise in einem Winkelbereich zwischen der Antriebskante 40a und der Kodierungskante 35 der Anschlusseinrichtung 113 an dem Klemmflügel 19 der Anschlusseinrichtung 13 angeordnet.

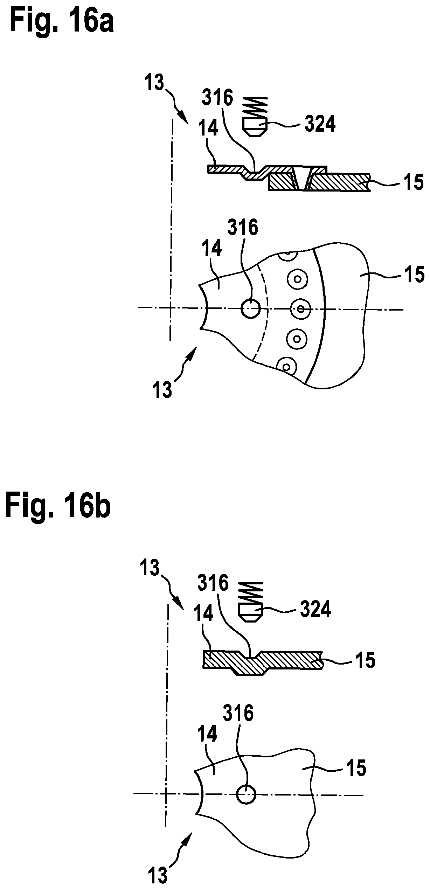

Die in Figur 14 gezeigte Werkzeugeinrichtung 11 umfasst alternativ oder zusätzlich zu dem zumindest einen Werkzeugmontagekodierelement 304, 306, 312, 314 zumindest ein zusätzliches Werkzeugmontagekodierelement 316, 318, 320, 322, das dazu vorgesehen ist, ein an der Werkzeugaufnahmeeinrichtung 213 beweglich gelagertes Sicherungs- und/oder Positionierelement 324 (beispielhaft in Figuren16a und 16b dargestellt) aufzunehmen. Das beweglich gelagerte Sicherungs- und/oder Positionierelement 324 der Werkzeugaufnahmeeinrichtung 213 kann beispielsweise als federbelasteter Rastbolzen o. dgl. ausgebildet sein. Das zumindest eine zusätzliche Werkzeugmontagekodierelement 316, 318, 320, 322 ist vorzugsweise am Klemmflügel 19 angeordnet. Bevorzugt ist das zumindest eine zusätzliche Werkzeugmontagekodierelement 316, 318, 320, 322 als materialfreier Durchbruch im Klemmflügel 19 ausgebildet, insbesondere als sich durch eine maximale Materialstärke h des Klemmflügels 19 vollständig hindurch erstreckende Ausnehmung. Es ist jedoch auch denkbar, dass das zusätzliche Werkzeugmontagekodierelement 316, 318, 320, 322 als eine Vertiefung, wie beispielsweise als eine durch ein Prägeverfahren hergestellte Vertiefung, am Klemmflügel 19 und/oder am Trägerflansch 14 ausgebildet ist, wie dies beispielhaft in Figuren 16a und 16b dargestellt ist. Der Trägerflansch 14 kann einteilig mit dem Arbeitsbereich 15 ausgebildet sein oder mittels eines, insbesondere durch ein Prägeverfahren hergestelltes, Befestigungselements des Trägerflanschs 14 form- und/oder kraftschlüssig mit dem Arbeitsbereich 15 verbunden sein (vgl. Figuren 16a und 16b).

Ein maximaler Durchmesser $d_w$ des zumindest einen zusätzlichen Werkzeugmontagekodierelements 316, 318, 320, 322 entspricht bevorzugt einem Wert aus einem Wertebereich von 0,8 mm bis 1,6 mm. Vorzugsweise ist das zumindest eine zusätzliche Werkzeugmontagekodierelement 316, 318, 320, 322 in einem radialen Bereich zwischen dem ersten Begrenzungskreis 23 und dem zweiten Begrenzungskreis 27 am Klemmflügel 19 angeordnet. Es ist jedoch auch denkbar, dass das zumindest eine zusätzliche Werkzeugmontagekodierelement 316, 318, 320, 322 in einem anderen Bereich der Werkzeugeinrichtung 11 angeordnet ist. Vorteilhafterweise umfasst die Werkzeugeinrichtung 11 eine Vielzahl an zusätzlichen Werkzeugmontagekodierelementen 316, 318, 320, 322, die bevorzugt gleichmäßig verteilt an der Werkzeugeinrichtung 11, insbesondere am Trägerflansch 14 der Werkzeugeinrichtung 11, angeordnet sind. Insbesondere sind die zusätzlichen Werkzeugmontagekodierelemente 316, 318, 320, 322 auf einem gemeinsamen Kreisring 326 angeordnet, der einen maximalen Durchmesser mit einem Wert aus einem Wertebereich von 23 mm bis 28 mm aufweist. Der gemeinsame Kreisring weist vorzugsweise einen auf der Werkzeugdrehachse a angeordneten Mittelpunkt auf.

Figur 15 zeigt eine Detailansicht eines der Klemmflügel 19. Bevorzugt weist der Klemmflügel 19 eine maximale einer Federrate entsprechende Richtgröße D mit einem Wert aus einem Wertebereich von 10.000 N/mm bis 350.000 N/mm auf. Die maximale einer Federrate entsprechende Richtgröße D des Klemmflügels ergibt sich vorzugsweise aus folgendem Zusammenhang:

$$D = \frac{3EI}{L^3}, \quad z = \frac{FL^3}{3EI}, \quad I = \frac{bh^3}{12}$$

F = Dz, wobei mit L als, insbesondere gemittelte, maximale Erstreckung des Klemmflügels19 zwischen dem ersten Begrenzungskreis 23 und dem zweiten Begrenzungskreis 27, insbesondere entlang einer zumindest im Wesentlichen parallel zur Radialachse r verlaufenden Richtung, mit b als maximaler tangentialer Erstreckung des Klemmflügels 19 tangential zum zweiten Begrenzungskreise 27 und mit h als maximaler Materialstärke des Klemmflügels 19 entlang der axialen Richtung der Werkzeugdrehachse a. Die maximale Materialstärke h kann vorzugsweise einem Wert aus einem Wertebereich von 0,5 mm bis 1,6 mm entsprechen.

Die in Figur 18 dargestellte tabellarische Auflistung von beispielhaften Ausführungsmöglichkeiten der Anschlusseinrichtung 113, insbesondere im Hinblick auf Ausführungsmöglichkeiten der Werkzeugmontagekodierelemente 304, 306, 312, 314, zeigt in einer ersten Spalte der tabellarischen Auflistung mögliche Ausführungen der Werkzeugmontagekodierelemente 304, 306, 312, 314 in Bezug auf eine Größe, insbesondere eine Länge, eine Breite o. dgl. Eine zweite Spalte der tabellarischen Auflistung zeigt mögliche Ausführungen der Werkzeugmontagekodierelemente 304, 306, 312, 314 in Bezug auf eine Form, wie beispielsweise eine polygonale Form, eine kreisförmige Form o. dgl. Eine dritte Spalte der tabellarischen Auflistung zeigt mögliche Ausführungen der Werkzeugmontagekodierelemente 304, 306, 312, 314 in Bezug auf eine Anordnung relativ zur Radialachse r oder zu einer die Werkzeugdrehachse a umfassende Ebene, wie beispielsweise eine symmetrische Anordnung zur Radialachse r, eine einseitige Anordnung zur Radialachse r, eine n-zählige Drehsymmetrie o. dgl. In Figur 18 sind die Bezugszeichen lediglich an einer Ausführungsmöglichkeit vergeben, um eine bessere Lesbarkeit der tabellarischen Auflistung zu ermöglichen. Die in Figur 18 dargestellten Ausführungsmöglichkeiten der Anschlusseinrichtung 113, insbesondere im Hinblick auf Ausführungsmöglichkeiten der Werkzeugmontagekodierelemente 304, 306, 312, 314, soll hier jedoch nicht als beschränkend angesehen werden, da die Werkzeugmontagekodierelemente 304, 306, 312, 314 weitere, einem Fachmann sinnvoll erscheinende Ausführungsmöglichkeiten aufweisen können.

**Patentansprüche**

1. Werkzeugmaschine, insbesondere handgeführte Werkzeugmaschine, vorzugsweise Winkelschleifer, die eine um eine Abtriebsachse (A) rotierend bewegbare Werkzeugaufnahmeeinrichtung (213) aufweist, wobei diese Werkzeugaufnahmeeinrichtung (213) dazu eingerichtet ist, eine Werkzeugeinrichtung (11), insbesondere ein Einsatzwerkzeug, derart an der Werkzeugmaschine (211) zu halten, dass die Abtriebsachse (A) und eine Werkzeugdrehachse (a) zusammenfallen, wobei die Werkzeugaufnahmeeinrichtung (213) wenigstens eine Mitnahmeeinrichtung (215) und eine relativ zu der Mitnahmeeinrichtung (215) bewegbare Klemmeinrichtung (217) aufweist, wobei diese Mitnahmeeinrichtung (215) zur Übertragung einer Antriebskraft auf die Werkzeugeinrichtung (11) wenigstens einen im Abstand zu dieser Abtriebsachse (A) angeordneten Drehmomentübertragungsbereich (219) aufweist, **dadurch gekennzeichnet, dass** die Mitnahmeeinrichtung (215) und die Klemmeinrichtung (217) dazu vorgesehen sind, durch eine, insbesondere sich durch die gesamte Materialstärke der Werkzeugeinrichtung (11) erstreckende, Ausnehmung (17) der Werkzeugeinrichtung (11) hindurchzugreifen und die Werkzeugeinrichtung (11) mittels der in radialer Richtung zur Abtriebsachse (A) beweglichen Klemmeinrichtung (217) zu klemmen, wobei die Mitnahmeeinrichtung dazu vorgesehen ist, die Klemmeinrichtung der Werkzeugaufnahmeeinrichtung bei einer Bewegung ausgehend von einem Lösezustand in einen Befestigungszustand oder umgekehrt zu führen.

2. Werkzeugmaschine nach Anspruch 1, **dadurch gekennzeichnet, dass** die Werkzeugaufnahmeeinrichtung (213) eine axiale Öffnung (225) aufweist, welche dazu vorgesehen ist, die Klemmeinrichtung (217) aufzunehmen.

3. Werkzeugmaschine nach einem der vorhergehenden Ansprüche, **dadurch gekennzeichnet, dass** die Mitnahmeeinrichtung (215) durch zumindest eine als Führungsbacke dienende Mitnahmebacke (216a, 216b) ausgebildet ist, welche die Öffnung (225) zumindest abschnittweise in radialer Richtung der Abtriebsachse (A) begrenzt und welche dazu vorgesehen ist, die Klemmeinrichtung (217) der Werkzeugaufnahmeeinrichtung (213) in radialer Richtung zu führen.

4. Werkzeugmaschine nach einem der vorhergehenden Ansprüche, **dadurch gekennzeichnet, dass** die Mitnahmeeinrichtung (215) eine maximale radiale Erstreckung der Abtriebsachse (A) aufweist, die größer ist als eine maximale radiale Erstreckung der Klemmeinrichtung (217) in einem Befestigungszustand.

5. Werkzeugmaschine nach einem der vorhergehenden Ansprüche, **dadurch gekennzeichnet, dass** die Klemmeinrichtung (217) gegenüber der Mitnahmeeinrichtung (215) in einem Lösezustand der Werkzeugaufnahmeeinrichtung (213) in axialer Richtung der Abtriebsachse (A) in einer von der Werkzeugmaschine (211) weg orientierten Richtung absteht.

6. Werkzeugmaschine nach einem der vorhergehenden Ansprüche, **dadurch gekennzeichnet, dass** der zumindest eine Drehmomentübertragungsbereich (219) entgegen einer Drehrichtung der Werkzeugaufnahmeeinrichtung (213) im Betrieb der Werkzeugmaschine (211) angewinkelt ist.

7. Werkzeugmaschine nach einem der vorhergehenden Ansprüche, **dadurch gekennzeichnet, dass** die Werkzeugaufnahmeeinrichtung (213), insbesondere die Klemmeinrichtung (217), eine Betätigungseinrichtung (229) aufweist, welche bei einer axialen Betätigung der Betätigungseinrichtung (229) mittels einer Betätigungskraft dazu vorgesehen ist, die Klemmeinrichtung (217) von einem Lösezustand in einen Befestigungszustand zu überführen.

8. Werkzeugmaschine nach einem der vorhergehenden Ansprüche, **dadurch gekennzeichnet, dass** die Klemmeinrichtung (217) zumindest eine radiale Klemmausnehmung (231) aufweist, welche dazu vorgesehen ist, die Werkzeugeinrichtung (11) in einem Befestigungszustand zumindest in axialer Richtung der Antriebsachse (A) zu klemmen und in einem Lösezustand freizugeben.

9. Werkzeugmaschine nach einem der vorhergehenden Ansprüche, **dadurch gekennzeichnet, dass** die Mitnahmeeinrichtung (215) zumindest ein Montagekodierelement (300, 302) umfasst, das dazu vorgesehen ist, mit einem Werkzeugmontagekodierelement (304, 306) der Werkzeugeinrichtung (11) in einem an der Werkzeugaufnahmeeinrichtung (213) angeordneten Zustand der Werkzeugeinrichtung (11) zusammenzuwirken, und/oder dass das Montagekodierelement (300, 302) der Mitnahmeeinrichtung (215) an zumindest einer Mitnahmebacke (216a, 216b) der Mitnahmeeinrichtung (215) angeordnet ist, und/oder dass das Montagekodierelement (300, 302) der Mitnahmeeinrichtung (215) angrenzend an eine Innenumfangsfläche (240) der zumindest einen Mitnahmebacke (216a, 216b) angeordnet ist.

10. Werkzeugmaschine nach einem der vorhergehenden Ansprüche, **dadurch gekennzeichnet, dass** die Klemmeinrichtung (217) zumindest ein Montagekodierelement (308, 310) umfasst, und/oder dass die Klemmeinrichtung (217) eine Klemmausnehmung (231) aufweist, wobei das Montagekodierelement (308, 310) in einer Klemmausnehmung (231) angeordnet ist.

11. Werkzeugmaschinensystem umfassend zumindest eine Werkzeugmaschine (211) nach einem der vorhergehenden Ansprüche und eine mit der Werkzeugmaschine (211) aufnehmbare Werkzeugeinrichtung (11), **dadurch gekennzeichnet, dass** die Klemmeinrichtung (217) zumindest ein Montagekodierelement umfasst, das dazu vorgesehen ist, eine Befestigung der Werkzeugeinrichtung an der Werkzeugaufnahmeeinrichtung (213) zu kodieren, wobei die Werkzeugeinrichtung (11) zumindest ein Werkzeugmontagekodierelement (304, 306, 312, 314) aufweist, das dazu vorgesehen ist, in einem an der Werkzeugaufnahmeeinrichtung (213) angeordneten Zustand der Werkzeugeinrichtung (11) mit zumindest dem Montagekodierelement (300, 302, 308, 310) der Werkzeugaufnahmeeinrichtung (213) zusammenzuwirken, wobei das zumindest eine Werkzeugmontagekodierelement (304, 306, 312, 314) an zumindest einem Klemmflügel (19) einer Anschlusseinrichtung (113) der Werkzeugeinrichtung (11) angeordnet ist.

12. Werkzeugmaschinensystem nach Anspruch 11, **dadurch gekennzeichnet, dass** die Werkzeugeinrichtung (11) eine Werkzeugdrehachse (a) und eine Anschlusseinrichtung (113) mit einer Ausnehmung (17) aufweist, welche dazu vorgesehen ist, die Werkzeugaufnahmeeinrichtung (213) der Handwerkzeugmaschine (11) in Umfangsrichtung der Abtriebsachse (A) zumindest teilweise, insbesondere vollständig, zu umgreifen und, dass die Werkzeugeinrichtung (11) zumindest einen Drehmomentaufnahmebereich (40) aufweist, welcher die Ausnehmung (17) in radialer Richtung der Werkzeugdrehachse (a) zumindest abschnittsweise begrenzt, und dass sich die Anschlusseinrichtung (113) in axialer Richtung zwischen einer ersten Anschlussfläche (49) und einer gegenüber der ersten Anschlussfläche (49) abgewandten zweiten Anschlussfläche (50) erstreckt, dass diese Anschlussflächen (49, 50) orthogonal zur Werkzeugdrehachse (a) angeordnet sind und, dass diese Anschlussflächen (49, 50) eine Materialstärke t der Anschlusseinrichtung (113) bilden und, dass der zumindest eine Drehmomentaufnahmebereich (40) zwischen diesen Anschlussflächen (49, 50) angeordnet ist.

13. Werkzeugmaschinensystem nach einem der Ansprüche 11 bis 12, **dadurch gekennzeichnet, dass** die Werkzeugaufnahmeeinrichtung (213) eine ebene, insbesondere ringförmige, Auflagefläche (261) aufweist, die dazu vorgesehen ist, zumindest eine Anlagefläche (61) der Werkzeugeinrichtung (11) in axialer Richtung zu stützen und, dass sich die Auflagefläche (261) in radialer Richtung der Werkzeugdrehachse (a) zwischen einem radialen Innenabstand (Ri) und einem radialen Außenabstand (Ra) von der Abtriebsachse (A) erstreckt und, dass die Anschlusseinrichtung (113) der Werkzeugeinrichtung (11) zumindest einen die Ausnehmung (17) in radialer Richtung zumindest teilweise begrenzenden Klemmflügel (19) aufweist, welcher im Wesentlichen in radialer Richtung zu der Werkzeugdrehachse (a) durch eine erste Begrenzungskante (21) begrenzt ist, und dass der Klemmflügel (19), insbesondere die erste Begrenzungskante (21), in einem Befestigungszustand der Werkzeugeinrichtung (11) mit der Werkzeugmaschine (211) gegenüber dem radialen Innenabstand (Ri) der Auflagefläche (261) in radialer Richtung zur Abtriebsachse (A) absteht, sodass in diesem Bereich kein Stützmaterial zur Stützung des Klemmflügels (19) vorhanden ist.

14. Werkzeugmaschinensystem nach Anspruch 11, **dadurch gekennzeichnet, dass** die Anschlusseinrichtung (113) zumindest zwei Klemmflügel (19) aufweist, welche im Wesentlichen in radialer Richtung zu der Werkzeugdrehachse (a) jeweils durch eine eine Erstreckung des Klemmflügels in Umfangsrichtung der Werkzeugdrehachse (a) bildende erste Begrenzungskante (21), welche auf einem, insbesondere minimalen, ersten Begrenzungskreis (23) um die Werkzeugdrehachse (a) liegt, begrenzt sind und, dass die Klemmeinrichtung (217) eine Umfangsfläche (245) aufweist, welche eine radiale Erstreckung der Klemmeinrichtung (117) begrenzt und, dass ein Abstand von zumindest zwei zueinander benachbarter erster Begrenzungskanten (21) in Umfangsrichtung der Werkzeugdrehachse (a) kleiner ist als ein Abstand einer, insbesondere minimalen, Erstreckung der Umfangsfläche (245) der Klemmeinrichtung (217) in Umfangsrichtung.

15. Werkzeugmaschinensystem nach einem der Ansprüche 11 bis 14, **dadurch gekennzeichnet, dass** das zumindest eine Werkzeugmontagekodierelement (304, 306, 312, 314) in einem Winkelbereich zwischen einer Antriebskante (40a) und einer Kodierungskante (35) der Anschlusseinrichtung (113) an einem Klemmflügel (19) der Anschlusseinrichtung (113) angeordnet ist, und/oder dass sich der Klemmflügel (19) zumindest im Wesentlichen entlang einer Orthogonalebene zu der Werkzeugdrehachse (a) erstreckt und gegenüber einer eine Radialachse (r) bildenden radialen Richtung der Werkzeugdrehachse (a) einer durch eine radiale und eine axiale Richtung der Werkzeugdrehachse (a) aufgespannten Symmetrieebene asymmetrisch, insbesondere nicht achsensymmetrisch, ist, und/oder dass das zumindest eine Werkzeugmontagekodierelement (304, 306, 312, 314) an zumindest einem Klemmflügel (19) der Anschlusseinrichtung (113) angeordnet ist und/oder entlang einer Radialachse (r) eine maximale Erstreckung aufweist, die maximal einem Maximalabstand zwischen einem ersten Begrenzungskreis (23) und einem zweiten Begrenzungskreis (27) der Anschlusseinrichtung (113) entspricht.

## Claims

1. Machine tool, in particular hand-held machine tool, preferably angle grinder, which has a tool receptacle device (213) which is rotatable about a drive output axis (A), wherein this tool receptacle device (213) is specified to hold a tool device (11), in particular an insert tool, on the machine tool (211) in such a manner that the drive output axis (A) and a tool rotation axis (a) coincide, wherein the tool receptacle device (213) has at least one entrainment device (215) and a clamping device (217) which is movable relative to the entrainment device (215), wherein this entrainment device (215) for transmitting a driving force to the tool device (11) has at least one torque transmission region (219) disposed at a spacing from this drive output axis (A), **characterized in that** the entrainment device (215) and the clamping device (217) are provided to penetrate a clearance (17) of the tool device (11), which extends in particular through the entire material thickness of the tool device (11), and to clamp the tool device (11) by means of the clamping device (217) which is movable in the radial direction to the drive output axis (A), wherein the entrainment device is provided to guide the clamping device of the tool receptacle device in a movement proceeding from a releasing state to a fastening state, or vice versa.

2. Machine tool according to Claim 1, **characterized in that** the tool receptacle device (213) has an axial opening (225) which is provided to receive the clamping device (217).

3. Machine tool according to one of the preceding claims, **characterized in that** the entrainment device (215) is formed by at least one entrainment jaw (216a, 216b) which serves as a guide jaw and delimits the opening (225) at least in portions in the radial direction of the drive output axis (A), and which is provided to guide the clamping device (217) of the tool receptacle device (213) in the radial direction.

4. Machine tool according to one of the preceding claims, **characterized in that** the entrainment device (215) has a maximum radial extent of the drive output axis (A) which is larger than a maximum radial extent of the clamping device (217) in a fastening state.

5. Machine tool according to one of the preceding claims, **characterized in that** the clamping device (217) in a releasing state of the tool receptacle device (213) projects from the entrainment device (215) in the axial direction of the drive output axis (A), in a direction oriented away from the machine tool (211).

6. Machine tool according to one of the preceding claims, **characterized in that** the at least one torque transmission region (219) is angled counter to a rotating direction of the tool receptacle device (213) during operation of the machine tool (211).

7. Machine tool according to one of the preceding claims, **characterized in that** the tool receptacle device (213), in particular the clamping device (217), has an activation device (229) which during an axial activation of the activation device (229) by means of an activation force is provided to transfer the clamping device (217) from a releasing state to a fastening state.

8. Machine tool according to one of the preceding claims, **characterized in that** the clamping device (217) has at least one radial clamping clearance (231) which is provided to clamp the tool device (11) in a fastening state at least in the axial direction of the drive output axis (A), and to release said tool device in a releasing state.

9. Machine tool according to one of the preceding claims **characterized in that** the entrainment device (215) comprises an assembly coding element (300, 302) which in a state in which the tool device (11) is disposed on the tool receptacle device (213) is provided to interact with a tool assembly coding element (304, 306) of the tool device (11), and/or **in that** the assembly coding element (300, 302) of the entrainment device (215) is disposed on at least one entrainment jaw (216a, 216b) of the entrainment device (215), and/or **in that** the assembly coding element (300, 302) of the entrainment device (215) is disposed so as to be contiguous to an internal circumferential face (240) of the at least one entrainment jaw (216a, 216b).

10. Machine tool according to one of the preceding claims, **characterized in that** the clamping device (217) comprises at least one assembly coding element (308, 310), and/or **in that** the clamping device (217) has a clamping clearance (231), wherein the assembly coding element (308, 310) is disposed in a clamping clearance (231).

11. Machine tool system comprising at least one machine tool (211) according to one of the preceding claims and a tool device (11) which is able to be received by the machine tool (211), **characterized in**

**that** the clamping device (217) comprises at least one assembly coding element which is provided to code fastening of the tool device to the tool receptacle device (213), wherein the tool device (11) has at least one tool assembly coding element (304, 306, 312, 314) which in a state in which the tool device (11) is disposed on the tool receptacle device (213) is provided to interact with at least the assembly coding element (300, 302, 308, 310) of the tool receptacle device (213), wherein the at least one tool assembly coding element (304, 306, 312, 314) is disposed on at least one clamping wing (19) of a connector device (113) of the tool device (11).

**12.** Machine tool system according to Claim 11, **characterized in that** the tool device (11) has a tool rotation axis (a) and a connector device (113) having a clearance (17), which is provided to at least partially, in particular completely, encompass the tool receptacle device (213) of the hand-held machine tool (11) in the circumferential direction of the drive output axis (A), and **in that** the tool device (11) has at least one torque absorption region (40) which delimits the clearance (17) at least in portions in the radial direction of the tool rotation axis (a), and **in that** the connector device (113) extends in the axial direction between a first connector face (49) and a second connector face (50) facing away from the first connector face (49), **in that** these connector faces (49, 50) are disposed orthogonally to the tool rotation axis (a), and **in that** these connector faces (49, 50) form a material thickness t of the connector device (113), and **in that** the at least one torque absorption region (40) is disposed between these connector faces (49, 50).

**13.** Machine tool system according to one of Claims 11 to 12, **characterized in that** the tool receptacle region (213) has a flat, in particular annular, support face (261) which is provided to support at least one contact face (61) of the tool device (11) in the axial direction, and **in that** the support face (261) extends in the radial direction of the tool rotation axis (a) between a radial internal spacing (Ri) and a radial external spacing (Ra) from the drive output axis (A), and **in that** the connector device (113) of the tool device (11) has at least one clamping wing (19) which at least partially delimits the clearance (17) in the radial direction and which substantially in the radial direction to the tool rotation axis (a) is delimited by a first delimitation edge (21), and **in that** the clamping wing (19), in particular the first delimitation edge (21), in a state of the tool device (11) in which the latter is fastened to the machine tool (211), projects from the radial internal spacing (Ri) of the support face (261) in the radial direction to the drive output axis (A) in such a way that no support material for supporting the clamping wing (19) is present in this region.

**14.** Machine tool system according to Claim 11, **characterized in that** the connector device (113) has at least two clamping wings (19) which substantially in the radial direction to the tool rotation axis (a) are in each case delimited by a first delimitation edge (21) which forms an extent of the clamping wing in the circumferential direction of the tool rotation axis (a) and which lies on an in particular minimum first delimitation circle (23) about the tool rotation axis (a), and **in that** the clamping device (217) has a circumferential face (245) which delimits a radial extent of the clamping device (117), and **in that** a spacing of at least two mutually adjacent first delimitation edges (21) in the circumferential direction of the tool rotation axis (a) is smaller than a spacing of an in particular minimum extent of the circumferential face (245) of the clamping device (217) in the circumferential direction.

**15.** Machine tool system according to one of Claims 11 to 14, **characterized in that** the at least one tool assembly coding element (304, 306, 312, 314) is disposed in an angular range between a driving edge (40a) and a coding edge (35) of the connector device (113) on a clamping wing (19) of the connector device (113), and/or **in that** the clamping wing (19) extends at least substantially along a plane orthogonal to the tool rotation axis (a) and is asymmetrical, in particular not axially symmetrical, in relation to a radial direction of the tool rotation axis (a), which forms a radial axis (r), of a symmetry plane defined by a radial and an axial direction of the tool rotation axis (a), and/or **in that** the at least one tool assembly coding element (304, 306, 312, 314) is disposed on at least one clamping wing (19) of the connector device (113), and/or along a radial axis (r) has a maximum extent which corresponds to at most a maximum spacing between a first delimitation circle (23) and a second delimitation circle (27) of the connector device (113).

## Revendications

**1.** Outil-machine, en particulier outil-machine à guidage manuel, de préférence meuleuse d'angle, qui comprend un dispositif (213) de réception d'outil mobile en rotation autour d'un axe de sortie (A), ce dispositif (213) de réception d'outil étant conçu pour retenir un dispositif outil (11), en particulier un outil d'insertion, sur l'outil-machine (211) de telle sorte que l'axe de sortie (A) et un axe de rotation d'outil (a) coïncident, le dispositif (213) de réception d'outil comprenant au moins un dispositif d'entraînement (215) et un dispositif de serrage (217) mobile par rapport au dispositif d'entraînement (215), ce dispositif d'entraînement (215) comprenant, pour la transmission d'une force d'entraînement au dispositif outil (11), au moins une zone (219) de transmission de couple aménagée à distance de cet axe de sortie (A), **caractérisé en ce que** le dispositif d'entraînement (215) et le dispositif de serrage (217) sont prévus pour venir en prise à travers un évidement (17) du dispositif outil (11), lequel évidement s'étend en particulier à travers toute l'épaisseur de matériau du dispositif outil (11), et pour serrer le dispositif outil (11) au moyen du dispositif de serrage (217) mobile sensiblement dans la direction radiale par rapport à l'axe de sortie (A), le dispositif d'entraînement étant prévu pour guider le dispositif de serrage du dispositif de réception d'outil lors d'un mouvement allant d'un état de relâchement à un état de fixation ou inversement.

2. Outil-machine selon la revendication 1, **caractérisé en ce que** le dispositif (213) de réception d'outil comprend une ouverture axiale (225), laquelle est prévue pour recevoir le dispositif de serrage (217).

3. Outil-machine selon l'une des revendications précédentes, **caractérisé en ce que** le dispositif d'entraînement (215) est formé par au moins une mâchoire d'entraînement (216a, 216b) servant de mâchoire de guidage, laquelle délimite l'ouverture (225) au moins dans certaines parties dans la direction radiale de l'axe de sortie (A) et laquelle est prévue pour guider le dispositif de serrage (217) du dispositif (213) de réception d'outil dans la direction radiale.

4. Outil-machine selon l'une des revendications précédentes, **caractérisé en ce que** le dispositif d'entraînement (215) présente une extension radiale maximale de l'axe de sortie (A) qui est supérieure à une extension radiale maximale du dispositif de serrage (217) dans un état de fixation.

5. Outil-machine selon l'une des revendications précédentes, **caractérisé en ce que**, dans un état de relâchement du dispositif (213) de réception d'outil, le dispositif de serrage (217) fait saillie par rapport au dispositif d'entraînement (215) dans la direction axiale de l'axe de sortie (A) dans une direction orientée à l'opposé de l'outil-machine (211).

6. Outil-machine selon l'une des revendications précédentes, **caractérisé en ce que** ladite au moins une zone (219) de transmission de couple est inclinée en sens inverse d'un sens de rotation du dispositif (213) de réception d'outil pendant le fonctionnement de l'outil-machine (211).

7. Outil-machine selon l'une des revendications précédentes, **caractérisé en ce que** le dispositif (213) de réception d'outil, en particulier le dispositif de serrage (217), comprend un dispositif d'actionnement (229) qui, lors d'un actionnement axial du dispositif d'actionnement (229) au moyen d'une force d'actionnement, est prévu pour faire passer le dispositif de serrage (217) d'un état de relâchement à un état de fixation.

8. Outil-machine selon l'une des revendications précédentes, **caractérisé en ce que** le dispositif de serrage (217) présente au moins un évidement (231) de serrage radial, lequel est prévu pour serrer le dispositif outil (11) au moins dans la direction axiale de l'axe d'entraînement (A) dans un état de fixation et pour le libérer dans un état de relâchement.

9. Outil-machine selon l'une des revendications précédentes, **caractérisé en ce que** le dispositif d'entraînement (215) comprend au moins un élément (300, 302) de codage de montage qui est prévu pour coopérer avec un élément (304, 306) de codage de montage d'outil du dispositif outil (11) dans un état du dispositif outil (11) agencé sur le dispositif (213) de réception d'outil, et/ou **en ce que** l'élément (300, 302) de codage de montage du dispositif d'entraînement (215) est agencé sur au moins une mâchoire d'entraînement (216a, 216b) du dispositif d'entraînement (215), et/ou **en ce que** l'élément (300, 302) de codage de montage du dispositif d'entraînement (215) est agencé de manière adjacente à une surface périphérique intérieure (240) de ladite au moins une mâchoire d'entraînement (216a, 216b).

10. Outil-machine selon l'une des revendications précédentes, **caractérisé en ce que** le dispositif de serrage (217) comprend au moins un élément de codage de montage (308, 310), et/ou **en ce que** le dispositif de serrage (217) présente un évidement de serrage (231), l'élément de codage de montage (308, 310) étant agencé dans un évidement de serrage (231).

11. Système d'outil(s)-machine(s) comprenant au moins un outil-machine (211) selon l'une des revendications précédentes et un dispositif outil (11) apte à être monté sur l'outil-machine (211), **caractérisé en ce que** le dispositif de serrage (217) comprend au moins un élément de codage de montage qui est prévu pour coder une fixation du dispositif outil sur le dispositif (213) de réception d'outil, le dispositif outil (11) présentant au moins un élément (304, 306, 312, 314) de codage de montage d'outil qui est prévu pour coopérer avec au moins l'élément de codage de montage (300, 302, 308, 310) du dispositif (213) de réception d'outil lorsque le dispositif outil (11) est agencé sur le dispositif (213) de réception d'outil, ledit au moins un élément (304, 306, 312, 314) de codage de montage d'outil étant agencé sur au moins une ailette de serrage (19) d'un dispositif de raccordement (113) du dispositif outil (11).

**12.** Système d'outil(s)-machine(s) selon la revendication 11, **caractérisé en ce que** le dispositif outil (11) présente un axe de rotation d'outil (a) et un dispositif de raccordement (113) présentant un évidement (17), lequel est prévu pour venir en prise au moins partiellement, en particulier complètement, avec le dispositif (213) de réception d'outil de l'outil-machine à main (11) dans la direction périphérique de l'axe de sortie (A), et **en ce que** le dispositif outil (11) présente au moins une zone (40) de réception de couple qui délimite l'évidement (17) dans la direction radiale de l'axe (a) de rotation de l'outil au moins dans certaines parties, et **en ce que** le dispositif de raccordement (113) s'étend dans la direction axiale entre une première surface de raccordement (49) et une deuxième surface de raccordement (50) opposée à la première surface de raccordement (49), **en ce que** ces surfaces de raccordement (49, 50) sont agencées orthogonalement à l'axe (a) de rotation de l'outil, **en ce que** ces surfaces de raccordement (49, 50) forment une épaisseur de matériau t du dispositif de raccordement (113), et **en ce que** ladite au moins une zone (40) de réception de couple est agencée entre ces surfaces de raccordement (49, 50).

**13.** Système d'outil(s)-machine(s) selon l'une des revendications 11 à 12, **caractérisé en ce que** le dispositif (213) de réception d'outil présente une surface d'appui plane (261), en particulier annulaire, qui est prévue pour supporter au moins une surface d'appui (61) du dispositif outil (11) dans la direction axiale et que la surface d'appui (261) s'étend dans la direction radiale de l'axe (a) de rotation de l'outil entre une distance intérieure radiale (Ri) et une distance extérieure radiale (Ra) par rapport à l'axe de sortie (A), **en ce que** le dispositif de raccordement (113) du dispositif outil (11) présente au moins une ailette de serrage (19) qui délimite au moins partiellement l'évidement (17) dans la direction radiale et qui est délimitée essentiellement dans la direction radiale par rapport à l'axe (a) de rotation de l'outil par une première arête de délimitation (21), et **en ce que** l'ailette de serrage (19), en particulier la première arête de délimitation (21), dans un état de fixation du dispositif outil (11) à l'outil-machine (211), fait saillie par rapport à la distance intérieure radiale (Ri) de la surface d'appui (261) dans la direction radiale par rapport à l'axe de sortie (A), de sorte qu'il n'y a pas de matériau de support dans cette zone pour supporter l'ailette de serrage (19).

**14.** Système d'outil(s)-machine(s) selon la revendication 11, **caractérisé en ce que** le dispositif de raccordement (113) comprend au moins deux ailettes de serrage (19) qui sont délimitées chacune essentiellement dans la direction radiale par rapport à l'axe (a) de rotation de l'outil par une première arête de délimitation (21) formant une extension de l'ailette de serrage dans la direction périphérique de l'axe (a) de rotation de l'outil, laquelle première arête se situe sur un premier cercle de délimitation (23), en particulier minimal, autour de l'axe (a) de rotation de l'outil, et **en ce que** le dispositif de serrage (217) présente une surface périphérique (245) qui délimite une extension radiale du dispositif de serrage (117), et **en ce qu'**une distance d'au moins deux premiers bords de délimitation (21) adjacents l'un à l'autre dans la direction périphérique de l'axe (a) de rotation de l'outil est inférieure à une distance d'une extension, en particulier minimale, de la surface périphérique (245) du dispositif de serrage (217) dans la direction périphérique.

**15.** Système d'outil(s)-machine(s) selon l'une des revendications 11 à 14, **caractérisé en ce que** ledit au moins un élément (304, 306, 312, 314) de codage de montage d'outil est agencé dans une zone angulaire entre un bord d'entraînement (40a) et un bord de codage (35) du dispositif de raccordement (113) sur une ailette de serrage (19) du dispositif de raccordement (113), et/ou **en ce que** l'ailette de serrage (19) s'étend au moins sensiblement le long d'un plan orthogonal à l'axe de rotation (a) de l'outil et est asymétrique, en particulier non-axisymétrique, par rapport à une direction radiale de l'axe (a) de rotation d'outil formant un axe radial (r) d'un plan de symétrie formé par une direction radiale et une direction axiale de l'axe (a) de rotation de l'outil, et/ou **en ce que** le ou les éléments (304, 306, 312, 314) de codage de montage d'outil sont agencés sur au moins une ailette de serrage (19) du dispositif de raccordement (113) et/ou présentent une extension maximale le long d'un axe radial (r), qui correspond au maximum à une distance maximale entre un premier cercle de délimitation (23) et un deuxième cercle de délimitation (27) du dispositif de raccordement (113).

Fig. 1

**Fig. 2**

EP 4 079 452 B1

**Fig. 3**

211  281b  285  A  281a  217

225

217a,218a

231

k

286

233

235

261

217b,218b

237

216a

231

245, 245b

245  229  215  213  229  233

245, 245a

λ  λ

EP 4 079 452 B1

# Fig. 4

217b,218b  216a  240  215  245  217a,218a

225

b

243

216b  240  251  239  261

# Fig. 5a

## Fig. 5b

216a

217b,218b

217

217a,218a

216b

215

## Fig. 5c

217a,218a

217

216a

216b

215

217b,218b

## Fig. 5d

216a

217

217b,218b

217a,218a

216b

215

## Fig. 5e

216a

217

217b,218b

217a,218a

215

216b

**Fig. 6**

217b,218b    215    240    239    261

233

231

216a    216b    217a,218a

245,245b

231

245,245a

EP 4 079 452 B1

**Fig. 7**

EP 4 079 452 B1

**Fig. 8**

**Fig. 9**

# Fig. 10

# Fig. 11

**Fig. 12**

# Fig. 13

# Fig. 14

# Fig. 15

**Fig. 16a**

**Fig. 16b**

# Fig. 17

231
233
217a, 218a
308
217

# Fig. 18

| size | shape | position |
|---|---|---|

306  312  35

113
314
27
22
40a
304

a
r

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012007926 A1
- DE 102010042016
- US 2062969 A
- DE 3740200 A1
- DE 102014210915 A1
- DE 19616764 A1